# EUROPÄISCHE PATENTSCHRIFT

(11) **EP 4 384 444 B1**
(45) Veröffentlichungstag und Bekanntmachung des Hinweises auf die Patenterteilung: **19.11.2025**
(21) Anmeldenummer: 22760947.6
(22) Anmeldetag: 03.08.2022
(51) Int. Cl.: B63H 1/10, B64C 27/72, B64C 37/00, B64C 39/00, B64C 27/32, B64D 27/34, F03B 17/06, F03D 3/06

(54) **DREHFLÜGELFAHRZEUG**
ROTARY-WING VEHICLE
VÉHICULE À VOILURE TOURNANTE

(30) Priorität: 09.08.2021 DE 102021004136
(43) Veröffentlichungstag der Anmeldung: 19.06.2024
(73) Patentinhaber: Grimm, Friedrich, 70376 Stuttgart (DE)
(72) Erfinder: Grimm, Friedrich, 70376 Stuttgart (DE)
(74) Vertreter: RDL Patentanwälte PartG mbB
(86) Internationale Anmeldenummer: PCT/EP2022/071884
(87) Internationale Veröffentlichungsnummer: WO 2023/016901

(56) Entgegenhaltungen:
- WO-A1-2012/060806
- DE-A1- 102007 020 079
- DE-A1- 102019 131 673
- DE-A1- 3 606 549
- US-A- 1 880 302
- US-A1- 2005 274 843
- US-A1- 2011 266 391
- US-A1- 2016 329 777

## Beschreibung

Die Erfindung betrifft eine Vorrichtung, welche als Drehflügelfahrzeug ausgebildet ist.

### Stand der Technik

Verstellbare "kinematische" Rotorblätter für Strömungskonverter, Wasserfahrzeuge und auch für Luftfahrzeuge sind an sich bekannt. Bekannte Lösungen für die Blattverstellung von Rotorblättern mit einem symmetrischen oder asymmetrischen Flügelprofil nutzen ein Gestänge, sodass die Rotorblätter in einem Umlauf einer bestimmten Kinematik unterworfen sind. Das wohl prominenteste Beispiel eines Drehflügelflugzeugs ist ein Hubschrauber. Gegenüber einem Starrflügelflugzeug hat der Hubschrauber den Vorteil, dass er ohne Lande- und Startbahn auskommt und senkrecht starten und landen kann. Die Fähigkeit des Schwebeflugs, d.h. im Stand in der Luft stehen zu bleiben, und die Möglichkeit, seitwärts zu fliegen oder eine langsame Drehung um die Hochachse auszuführen, sind weitere spezifische Vorteile dieses Drehflügelfahrzeugs. Diesen Vorteilen stehen jedoch einige Nachteile entgegen, die im Folgenden kurz erwähnt werden. Der Hubschrauber ist nicht eigenstabil, sein Schwerpunkt liegt oberhalb des Rumpfs, sodass der Pilot durch kontinuierliches Steuern die jeweilige Fluglage nachjustieren muss. Durch Verschiebung der Taumelscheibe nach oben oder unten wird der Anstellwinkel der Rotorblätter global geändert, wodurch sich der Auftrieb des Hauptrotors erhöht oder vermindert, sodass der Hubschrauber steigt oder sinkt. Allein dieses Flugmanöver ist mit einer Änderung der Motor- bzw. Turbinenleistung verbunden und erfordert ein Gegensteuern mittels des Heckrotors. Beim Geradeausflug wird die Taumelscheibe und die Rotorebene in Flugrichtung geneigt. Die Höchstgeschwindigkeit eines Hubschraubers ist durch die Aerodynamik der Rotorblätter begrenzt, da das jeweils nach vorne laufende Blatt durch die anströmende Luft eine höhere Geschwindigkeit hat als das nach hinten laufende Rotorblatt. Dadurch entsteht ein Ungleichgewicht zwischen dem vorlaufenden Blatt und dem nachlaufenden Blatt. Bei dem vorlaufenden Blatt überlagern sich die Fahrtgeschwindigkeit und die Umlaufgeschwindigkeit, sodass bei einem Rotordurchmesser von z.B. zehn Metern an den Blattspitzen sehr schnell die Schallgeschwindigkeit überschritten wird. Wird dieser Punkt erreicht, sind damit nicht nur aerodynamische Nachteile, sondern auch eine unangenehme Lärmentwicklung verbunden. Deshalb liegt die Spitzengeschwindigkeit eines Hubschraubers bei etwa 200-300 km/h, wobei ein Kampfhubschrauber eine Geschwindigkeit von mehr als 400 km/h erreichen kann. Dabei ist der Hubschrauber sehr starken Vibrationen ausgesetzt, die durch die Taumelscheibe verursacht werden. Zu der im Vergleich zu einem Starrflügelflugzeug geringeren Fahrtgeschwindigkeit dieses Luftfahrzeugs kommt eine begrenzte Gipfelhöhe, die typischerweise bei 5.000 Metern liegt und bei einem Kampfhubschrauber bis zu 12.000 Meter betragen kann. Die Flugleistung geht mit einem erhöhten Treibstoffverbrauch einher. Als eine Sonderform des Hubschraubers hat sich der Gyrokopter als Kleinflugzeug etabliert. Die Fähigkeit der Autorotation bei Triebwerksausfall und die Möglichkeit die Rotorblätter an der Rotationsachse platzsparend zusammenzulegen, eröffnet die Möglichkeit eines individuellen Mobilitätsangebots, das die Vorteile eines Kraftfahrzeugs mit den Vorteilen eines Kleinflugzeugs auf sich vereinigt. Die systembedingten Nachteile der Drehflügelkinematik eines Hubschraubers bleiben jedoch erhalten. Aktuelle Entwicklungen für Drehflügelfahrzeuge greifen das Prinzip des Voith-Schneider-Propellers als Flugzeugantrieb auf. Der Voith-Schneider-Propeller ist kein reiner Auftriebsläufer, sondern er stößt sich mit seiner speziellen Drehflügelkinematik an bestimmten Umlaufpositionen des Rotors von dem jeweiligen Fluid ab, woraus große Belastungen des Getriebes und eine nach oben begrenzte Umlaufgeschwindigkeit resultieren. Der Voith-Schneider-Propeller hat zwar einen guten Wirkungsgrad bei geringer Fahrtgeschwindigkeit, die Antriebsleistung nimmt jedoch mit zunehmender Fahrtgeschwindigkeit eines Wasserfahrzeugs rapide ab, sodass bei etwa sieben Knoten eine Obergrenze erreicht wird und deshalb die Anwendung dieses Schiffspropellers auf langsam fahrende Wasserfahrzeuge wie Schlepp- und Bugsierfahrzeuge sowie auf pendelnde Fähren und andere auf kurze Fahrstrecken spezialisierte Wasserfahrzeuge beschränkt ist. Windkraftanlagen mit einer vertikalen Rotationsachse sind als sog. Darrieus-Rotoren nach ihrem Erfinder benannt und haben im Vergleich zu Windkraftanlagen mit einer horizontalen Rotationsachse den großen Vorteil, dass sie nicht zu der jeweiligen Strömungsrichtung ausgerichtet werden müssen. Der Darrieus-Rotor läuft leise, da er sein Leistungsoptimum bereits bei einer Schnelllaufzahl erreicht, die dem drei- bis vierfachen der Windgeschwindigkeit entspricht. Die Rotorblätter sind mit einem radialen Abstand zu der Rotationsachse angeordnet und haben ein symmetrisches Flügelprofil. Ausgehend von dem Betz'schen Gesetz, das für die Nutzung der in einer Strömung gespeicherten kinetischen Energie eine theoretische Obergrenze von knapp 60% feststellt, erreichen bekannte Vertikalachsrotoren nur einen Wirkungsgrad von etwa 30% bis maximal 45%, während der maximale Wirkungsgrad bei Horizontalachsrotoren mit einem asymmetrischen Flügelprofil bei mehr als 50% liegt. Als Möglichkeit einer extensiven Nutzung der Wasserkraft kommen Küstenabschnitte in Betracht, an denen bestimmte Reliefausbildungen hohe, durch Ebbe und Flut hervorgerufene Strömungsgeschwindigkeiten bewirken. Deshalb werden Gezeitenkraftwerke und Meeresströmungskraftwerke in Zukunft eine entscheidende Rolle bei der Gewinnung regenerativer Energie spielen. Der weitere Ausbau der Wasserkraft im Inland leidet unter dem Zielkonflikt zwischen der Stromgewinnung an Querbauwerken der Flussläufe und der damit verbundenen Konsequenz einer Unterbrechung der natürlichen Wanderwege für Fische und kann deshalb mit den bisherigen Techniken so nicht einfach fortgesetzt werden.

Auf dem Gebiet der Steuerungstechnik sind hier aktuelle Entwicklungen zu Aktuatoren für eine elektromagnetische Ventilsteuerung bei Verbrennungsmotoren zu nennen. Bei Verbrennungsmotoren sind Drehzahlen von 7000 U/min üblich, sodass die dort benötigte hohe Frequenz und Standfestigkeit eines elektromagnetischen Aktuators für die Steuerung der Drehflügelkinematik besonders geeignet erscheint.

Aus der DE 10 2007 009 951 B3 geht ein Fluggerät hervor, bei dem antreibbare und mit einem Gebläse anströmbare Zylinder quer zu einem in Flugrichtung ausgerichteten Rumpf eines Fluggeräts angeordnet sind, um unter Nutzung des Magnuseffekts Auftrieb zu erzeugen, wobei einteilig ausgebildete, um die Querachse der Zylinder rotierende Rotorblätter mit einem symmetrischen Flügelprofil dazu ausgebildet sind, Auftrieb und Vortrieb zu erzeugen.

Aus der DE 2017 002 797 B3 geht ein Strömungskonverter mit mindestens einem in sich starr ausgebildeten Wendeflügel hervor, bei dem eine Hälfte des Rotorblatts zur Innenseite und eine zweite Hälfte des Rotorblatts zur Außenseite einer Umlaufbahn orientiert ist.

Aus der DE 10 2010 011 708 A1 geht eine Turbine mit Rotorblättern hervor, die eine passive, biegeelastisch vermittelte Wölbungsänderung aufweisen.

Aus der DE 10 2017 011 890 A1 geht eine Drehflügelanordnung für ein Fluggerät hervor, bei dem eine Drehflügelkinematik für einteilig ausgebildete Rotorblattprofile mit einem außerhalb des Rotorblatts liegenden Gestänge realisiert wird.

Aus der US 9 346 535 B1 geht ein Drehflügelflugzeug hervor, bei dem starre Tragflächen durch eine steuer- und backbordseitige Drehflügelanordnung ersetzt sind und ein Gestänge mit einem Getriebe bewirkt, dass Drehflügel auf der Evolvente einer Kreiskurve rotieren.

Aus der US 2008/0011 900 A1 geht ein Luftschiff mit einer Drehflügelanordnung hervor, bei der die Rotorblätter an ein Gestänge mit einem Getriebe verstellbar angelenkt sind.

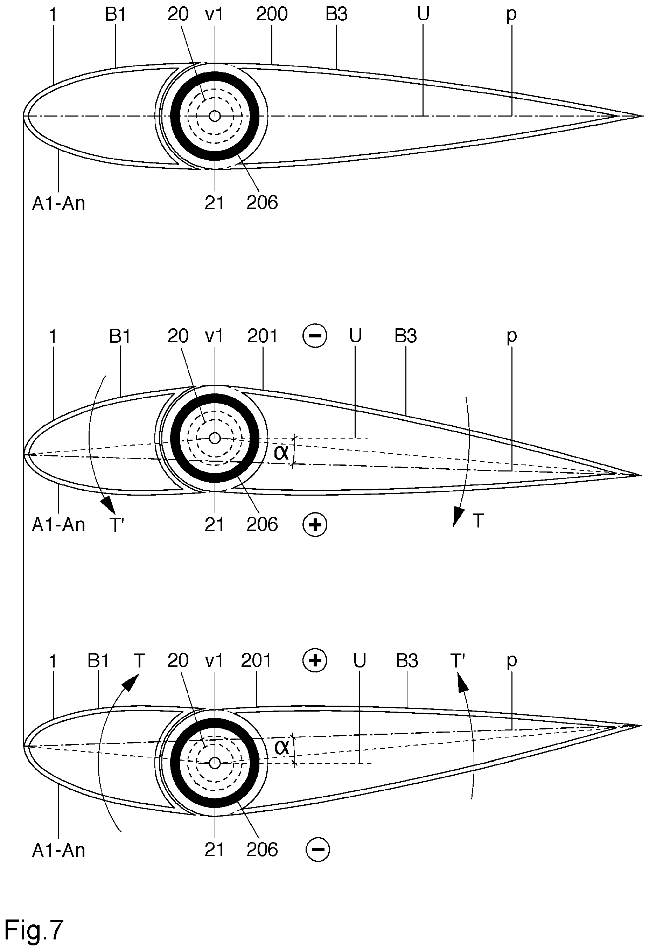

Aus der US 4 383 801 A geht eine Windturbine mit einer Mehrzahl vertikal angeordneter Rotorblätter hervor, die drehbar an einem Querträger gelagert sind und in einem Rotorumlauf eine für die Anströmung günstige Stellung einnehmen. Aus den Fig. 7-10 gehen zwei- und dreiteilig ausgebildete Rotorblätter hervor, deren Blattsegmente mittels eines außerhalb der Blätter angeordneten Gestänges verstellbar sind.

Aus der US 5 265 827 A geht ein Luftfahrzeug mit einer links und rechts des Rumpfs angeordneten Drehflügelanordnung hervor. In einem Umlauf der Drehflügelrotors werden die einteilig ausgebildeten Rotorblätter mittels von an ein zentrales Getriebe angelenkten Schubstangen verstellt.

Aus der WO 2017/ 089 047 A1 geht eine Windkraftanlage mit einteiligen Rotorblättern hervor, die jeweils mittels von außerhalb der Rotorblätter angeordneten Stellelementen um die Blattlängsachse drehbar sind.

Aus der WO 2017 112 973 A1 geht ein Hubschrauber mit einem Hauptrotor und seitlich des Rumpfs angeordneten Nebenrotoren hervor. Die Nebenrotoren weisen eine Drehflügelkinematik für Rotorblätter auf, die mittels eines Getriebes und eines Gestänges verstellbar sind.

Aus der DE 10 2007 030 095 A1 geht ein Rotorblatt für ein Drehflügelfahrzeug hervor, bei dem ein Profilgrundkörper mit einem Profilkern ein Widerlager für einen beweglichen Profilhinterkantenbereich bildet, wobei Aktuatoren für ein verbiegbares Trägerelement eine Längenänderung an dem Profilhinterkantenbereich bewirken.

Aus der US 5 263 846 A geht ein in Längsabschnitte untergliedertes Rotorblatt für Drehflügelluftfahrzeuge hervor, wobei einteilig ausgebildete Blattsegmente eines Hauptrotors mittels von Kupplungen untereinander verbunden und jeweils einzeln verstellbar sind.

Aus der DE 10 2011 016 141 A1 geht eine Windturbine mit einem Düsenkörper hervor, der als Konfusor oder als Diffusor ausbildbar ist.

Aus der DE 10 2008 057 212 A1 geht eine Windturbine mit horizontaler Rotationsachse und schlaufenförmig ausgebildeten Rotorblättern hervor.

Aus der US 5 269 647 A geht eine Windturbine mit vertikaler Rotationsachse hervor, bei der die Rotorblätter schlaufenförmig ausgebildet sind.

Aus der US 4 134 708 A geht eine Windkraftanlage mit verstellbaren Rotorblättern hervor deren Oberflächen von einer Membran gebildet wird.

Aus der WO 2019/ 155 656 A1 geht ein schlaufenförmiges Rotorblatt hervor.

Aus der WO 2014/ 048 468 A1 geht eine Turbine mit einem Düsenkörper hervor.

Die DE 10 2007 020 079 A1 zeigt eine Steuerungseinrichtung eines Hubschrauber-Hauptrotors mit Rotorblattklappen, welche nach oben und unten verstellbar sind, um im Normalbetrieb eine zyklische Blattwinkelverstellung oder eine Funktion der höherharmonischen und individuellen Blattwinkelverstellung zu bewirken und in einem Notbetrieb jeweils für eine alleinige Übernahme der Funktionen der zyklischen Blattwinkelverstellung ausgebildet sind.

Die US 2016 / 0 329 777 A1 zeigt eine reversierbare elektrische Maschine für ein Luftfahrzeug.

Die DE 36 06 549 A1 zeigt eine Vorrichtung zur Erzeugung einer Bewegung.

Die US 2011 / 0 266 391 A1 zeigt ein Aktuatorsystem mit einem künstlichen Muskel für eine Klappe.

Die WO 2012 / 060 806 A1 zeigt eine Vorrichtung zur aktiven Beeinflussung einer aerodynamischen Oberfläche.

Die US 1 880 302 A zeigt einen Propeller für einen Helikopter.

Die DE 10 2019 131 673 A1 zeigt ein Beförderungsmittel für einen Flugbetrieb.

Die US 2005 / 0 274 843 A1 zeigt ein Luftfahrzeug.

### Aufgabenstellung

Ausgehend von dem dargestellten Stand der Technik liegt der Erfindung die Aufgabe zugrunde, eine neuartige Vorrichtung mit einem kinematischen Rotorblatt bereitzustellen.

Bei dem Drehflügelfahrzeug besteht die Aufgabe der Erfindung insbesondere darin, eine Arbeitsmaschine zu finden, die den aus dem Auftrieb des variablen asymmetrischen Flügelprofils der Rotorblätter fluiddynamisch erzeugten Schub für den Antrieb des Drehflügelfahrzeugs nutzt und den Schub mittels der Drehflügelkinematik in unterschiedliche Fahrtrichtungen lenken kann.

Diese Aufgabe wird durch den Gegenstand des Anspruchs 1 gelöst.

Bei der Drehflügelturbine besteht die Aufgabe insbesondere darin, eine Drehflügelkinematik für eine Kraftmaschine zu finden, die eine fluiddynamisch erzeugte tangentiale Antriebskraft für die Konversion der in einer Strömung enthaltenen kinetischen Energie in eine Drehbewegung nutzten kann. Eine Drehflügelturbine fällt jedoch nicht in den Schutzbereich. Ausführungsbeispiele, die reine Drehflügelturbinen betreffen, werden aber als das Verständnis der Erfindung erleichternd angesehen.

Eine Vorrichtung ist als Drehflügelfahrzeug oder als Drehflügelturbine ausgebildet, welche Vorrichtung ein Rotormodul mit einem Motorgenerator, mit Rotorblättern und mit einer Drehflügelkinematik für die mit dem Motorgenerator verbundenen Rotorblätter aufweist, welches Rotormodul dazu ausgebildet ist, eine gleichsinnige oder gegensinnige Rotation der Rotorblätter auf einer Umlaufbahn um eine Rotationsachse zu ermöglichen, welche Rotorblätter jeweils in eine Mehrzahl von Längsabschnitten für die Aufnahme von jeweils mindestens einem in einen Längsträger oder Querträger des Rotorblatts integrierten Aktuator untergliedert sind und ein variables, asymmetrisches Flügelprofil aufweisen, das in einem Umlauf des Rotorblatts an einem innerhalb eines Verstellbereichs frei orientierbaren Durchmesser der Umlaufbahn mit Wendepunkten in mindestens einem Längsabschnitt des Rotorblatts mit einer Länge derart verstellbar ist, dass die Saugseite und die Druckseite des asymmetrischen Flügelprofils mittels der Drehflügelkinematik an den Wendepunkten von der Außenseite zu der Innenseite der Umlaufbahn wechselt, oder umgekehrt, und das variable, asymmetrische Flügelprofil des Rotorblatts in einer Übergangsstellung temporär ein mit seiner Profilsehne tangential zu der Umlaufbahn ausgerichtetes symmetrisches Flügelprofil aufweist,
wobei die Vorrichtung im Falle der Ausbildung als Drehflügelfahrzeug derart ausgebildet ist, dass der Durchmesser mit den Wendepunkten in dem mindestens einen Längsabschnitt der Rotorblätter mit der Länge quer zu der Fahrtrichtung ausrichtbar ist, sodass die Saugseite des asymmetrischen Flügelprofils in beiden Hälften der Umlaufbahn in Fahrtrichtung orientiert ist und aus der an dem asymmetrischen Flügelprofil erzeugten Auftriebskraft eine in Fahrtrichtung wirkende Schubkraft resultiert,
und wobei die Vorrichtung im Falle der Ausbildung als Drehflügelturbine derart ausgebildet ist, dass der Durchmesser mit den Wendepunkten in allen Längsabschnitten des Rotorblatts orthogonal zu der Strömung ausrichtbar ist, sodass die Saugseite des asymmetrischen Flügelprofils in beiden Hälften der Umlaufbahn zu der Leeseite orientierbar ist und aus der von dem asymmetrischen Flügelprofil erzeugten Auftriebskraft eine tangentiale Antriebskraft für die Drehflügelturbine resultiert.

Die gleichsinnige oder gegensinnige Rotation der Rotorblätter verläuft bevorzugt in entsprechende Drehrichtungen.

Im Rahmen der Erfindung betrifft der Oberbegriff Drehflügelfahrzeug sowohl Luft- als auch Wasserfahrzeuge, die jeweils exemplarisch dargestellt und erläutert sind. Als Ausführungsbeispiele für Luftfahrzeuge werden ein Hubschrauber, ein Lufttaxi, ein flug- und straßenverkehrstaugliches Fahrzeug, ein Flugzeug mit einer Tragfläche und als Ausführungsbeispiele für Wasserfahrzeuge ein Schlepp- und Bugsierschiff, ein Schiffsrumpf für Binnengewässer, ein Containerschiff und ein U-Boot näher erläutert.

Weitere Aufgaben und vorteilhafte Eigenschaften der Erfindung ergeben sich aus den Unteransprüchen. Im Einzelnen können die folgenden Aufgaben zumindest teilweise gelöst werden:
- Angabe einer Drehflügelkinematik für reine Auftriebsläufer,
- Angabe eines kinematischen Rotorblatts, das mindestens an einem Ende mit einem Motorgenerator verbunden ist,
- Unterteilung des Rotorblatts in eine Mehrzahl von Längsabschnitten, die jeweils mindestens einen Aktuator für jede Drehachse aufweisen,
- Angabe einer mechanischen, elektromagnetischen, elektropneumatischen, elektrohydraulischen Verstellvorrichtung für jeden einzelnen Längsabschnitt eines Rotorblatts,
- Angabe eines gerade, bügelförmig, bogenförmig, oder schlaufenförmig ausgebildeten Rotorblatts,
- Angabe eines bezüglich seiner Umlaufbahn in sich starren Längsträgers für die Aufnahme der Aktuatoren,
- Angabe eines in einen Längsträger des Rotorblatts integrierten Aktuators für die Blattverstellung,
- Angabe eines ring- oder scheibenförmigen Querträgers für die Aufnahme eines elektromagnetischen Aktuators,
- Angabe eines Rotorblatts, dessen Längsabschnitte jeweils einen unterschiedlichen Neigungswinkel gegenüber der Rotationsachse aufweisen,
- Angabe eines Drehflügelflugzeugs, das als Hubschrauber oder als Lufttaxi oder als ein Flugzeug ausgebildet ist,
- Angabe eines Hubschraubers mit bügelförmigen Rotorblättern, deren Längsabschnitte arbeitsteilig Auftrieb und Schub erzeugen,
- Angabe eines Flugzeugs mit mindestens einer Tragfläche, die das Gehäuse für mindestens ein Rotormodul aufnimmt,
- Angabe eines flug- und straßenverkehrstauglichen Fahrzeugs, das von der Straße aus in den Flugmodus wechseln kann,
- Angabe eines Drehflügelfahrzeugs, dessen Abmessungen die Vorgaben der StVZO § 32 erfüllt,
- Angabe eines Drehflügelfahrzeugs, das die Zulassungsbedingungen des Luftfahrtbundesamts erfüllt,
- Angabe eines Drehflügelfahrzeugs, mit bügelförmigen Rotorblättern, dessen Rotormodule um parallel zu der Querachse angeordnete Rotationsachsen rotieren,
- Angabe eines Drehflügelfahrzeugs mit bügelförmigen Rotorblättern, deren mittlerer Längsabschnitt Auftrieb und Schub erzeugt und deren seitliche Längsabschnitte ein Seitenleitwerk bilden,
- Angabe eines Strömungsleitwerks für ein Wasserfahrzeug, das von einem flachen Schiffsboden sowie von mit dem Schiffsboden verbundenen horizontalen und vertikalen Strömungsleitflächen gebildet wird,
- Angabe eines Wasserfahrzeugs für die Flussschifffahrt mit einem geringen Tiefgang und mit einem bug- und heckseitigen Spantausfall für die von den Rotormodulen gebildeten Antriebsmaschinen,
- Angabe eines Strömungsleitwerks, das von einem innerhalb der Umlaufbahn des Rotormoduls angeordneten Strömungsleitkörper gebildet wird,
- Angabe einer Antriebsmaschine mit zwei gegensinnig rotierenden Rotorblättern,
- Angabe einer Antriebsmaschine mit einem Gehäuse für das Rotormodul, das eine entgegen der Drehrichtung des Rotormoduls rotierende zirkulare Gegenströmung erzeugt,
- Angabe einer Antriebsmaschine mit einem Gehäuses für ein Rotormodul, das einen druckseitigen Eingang und einen saugseitigen Ausgang für die Strömung hat,
- Angabe eines Antriebskanals für ein Wasserfahrzeug, der eine Mehrzahl von Rotormodulen mit Gehäusen aufnimmt,
- Angabe einer Drehflügelkinematik für die Schubumkehr eines Rotormoduls,
- Angabe einer Drehflügelkinematik für das Rotormodul einer Windkraftanlage, die nach der Beaufort-Skala bei Windstärken von 3-12 betrieben werden kann,
- Angabe eines Motorgenerators, dessen Stator mit einem Tragwerk und dessen Läufer mit dem Rotormodul verbunden ist.

### Das kinematische Rotorblatt

Bei einer ersten vorteilhaften Ausführungsvariante ist das kinematische Rotorblatt zweiteilig ausgebildet und hat ein vorderes, als Längsträger des Rotorblatts ausgebildetes Blattsegment. An das vordere Blattsegment ist ein hinteres Blattsegment an einer hinteren Drehachse angelenkt. Bei einer zweiten vorteilhaften Ausführungsvariante ist das Rotorblatt des Rotormoduls dreiteilig ausgebildet, wobei an ein mittleres, als Längsträger des variablen Rotorblatts ausgebildetes Blattsegment ein vorderes, um eine vordere Drehachse drehbares Blattsegment mit der Nase und ein hinteres, um eine hintere Drehachse drehbares Blattsegment mit der Hinterkante angelenkt sind. Zweiteilig und dreiteilig bedeutet somit nicht, dass nicht noch weitere Teile vorgesehen sein können, beispielsweise zur Ausbildung eines Scharniers. Bei beiden Ausführungsbeispielen weist das asymmetrische Flügelprofil in einem Umlauf des Rotorblatts jeweils an dem Durchmesser mit den Wendepunkten temporär ein symmetrisches Flügelprofil mit einer tangential zu der Umlaufbahn des Rotormoduls ausgerichteten Profilsehne auf, wobei das zweiteilig ausgebildete Rotorblatt durch Ein- oder Ausdrehen des hinteren Blattsegments jeweils mit gegensinniger Drehrichtung um bis zu 6 Grad im luv- und leeseitigen Umlauf ein asymmetrisches Flügelprofil aufweist, bei dem die Profilsehne in beiden Hälften der durch den Durchmesser mit den Wendepunkten geteilten Umlaufbahn einen positiven Anstellwinkel von 3,5 Grad gegenüber einer Tangente an den Umlaufbahn aufweist und das dreiteilig ausgebildete Rotorblatt im luv- und leeseitigen Umlauf ein asymmetrisches Flügelprofil hat, das einem Clark-YM-15-Profil entspricht, dessen Profilsehne mit einem positiven Anstellwinkel von 2 Grad gegenüber einer Tangente an den Umlaufbahn geneigt ist. Bei vorausgehend beschriebenen Ausführungsvarianten ist das kinematische Rotorblatt des Rotormoduls entweder gerade oder bügelförmig oder bogenförmig oder schlaufenförmig ausgebildet und in einzelne Längsabschnitte untergliedert, die eine Flügelkette bilden. Bei dem geraden Rotorblatt ist die Flügelkette gerade und bei einem bügel-, bogen- oder schlaufenförmigen Rotorblatt polygonzugförmig ausgebildet und hat jeweils unterschiedlich geneigte Drehachsen für die drehbaren vorderen und hinteren Blattsegmente der Rotorblätter.

### Die Aktuatoren für die Drehflügelkinematik des Rotormoduls

Die Aktuatoren für die Blattverstellung sind bevorzugt entweder in die Längsträger oder in die Querträger der Rotorblätter jeweils zwischen den geraden Längsabschnitten der von den einzelnen Längsabschnitten gebildeten Flügelkette integriert. Im Fall eines ring- oder scheibenförmig ausgebildeten Querträgers ist der Aktuator als ein elektromagnetisch betätigter Stellhebel ausgebildet, der an beiden Enden eines Längsabschnitts des Rotorblatts senkrecht zu der vorderen und der hinteren Drehachse angeordnet ist. Im Fall eines Längsträgers, der von dem vorderen oder dem mittleren Blattsegment gebildet wird, weist der Aktuator für einen Längsabschnitt des Rotorblatts bevorzugt entweder einen pneumatischen Muskel oder einen Hydraulikzylinder oder einen schaltbaren Elektromagnet mit einer Erregerwicklung auf. Mittels einer Rechner gesteuerten Drehflügelkinematik kann bevorzugt jeder einzelne Längsabschnitt der Flügelkette individuell angesteuert werden. Haarfugen zwischen den Blattsegmenten und elastische Scheiben zwischen den einzelnen gerade ausgebildeten Längsabschnitten oder eine elastische Hülle der Flügelkette ermöglichen die laminare Umströmung des Rotorblatts. Bei einer vorteilhaften Ausführungsvariante für die Drehflügelkinematik sind die Aktuatoren einschließlich der Leitungen, Energiespeicher und Stellmotoren vollständig in interne Hohlräume des Längsträgers der zwei- oder dreiteilig ausgebildeten Rotorblätter integriert, wobei die Hohlräume durch mindestens ein koaxial und konzentrisch zu einer Drehachse des Rotorblatts angeordneten hohlen Scharnierbolzen untereinander verbunden sind. Die Aktuatoren des dreiteilig ausgebildeten Rotorblatts sind jeweils paarweise angeordnet und betätigen zylinderförmige Schlitten, die an ihren Innenseiten an den koaxial und konzentrisch zu den Drehachsen angeordneten Scharnierbolzen linear geführt werden und an ihren Außenseiten in Gewindeabschnitte des vorderen und des hinteren Blattsegments eingreifen. Die Aktuatoren werden elektromagnetisch, hydraulisch, pneumatisch oder mechanisch angetriebenen. Durch die linearen Translationsbewegung des Schlittens wird das Ein- und Ausdrehen der beweglichen Blattsegmente gegenüber dem in sich starren Längsträger bewirkt, der bei dem zweiteilig ausgebildeten Rotorblatt von dem vorderen Blattsegment und bei dem dreiteilig ausgebildeten Rotorblatt von dem mittleren Blattsegment gebildet wird. Die geringe Steigung der Gewindeabschnitte ermöglicht bevorzugt eine Übersetzung von 1 zu 10 für die Kraft der Aktuatoren. Die Aktuatoren können z.B. als pneumatische Muskeln oder als synchrone Linearmotoren ausgebildet werden. Ein Linearmotor wird bevorzugt dadurch gebildet, dass das Scharnierbolzen in dem betreffenden Längsabschnitt des Rotorblatts eine Mehrzahl bezüglich der Drehachsen radial angeordneter Erregerwicklungen trägt, die zusammen mit ringförmigen Permanentmagneten des Schlittens einen synchronen dreiphasigen Linearmotor bilden. Damit ist sowohl die exakte Verstellung der vorderen und hinteren Blattsegmente als auch die Einhaltung des Verstellwinkels ohne zusätzlichen Kraftaufwand möglich. In einer vereinfachten Ausführungsvariante ist der Aktuator als ein schaltbarer Elektromagnet ausgebildet, wobei der Scharnierbolzen eine koaxial und konzentrisch zu den Drehachsen angeordnete Erregerwicklung für die Induktion einer Eisenhülse des Schlittens aufweist. Der von dem Scharnierbolzen gebildete Medienkanal erstreckt sich zwischen beiden Enden des Rotorblatts. Bei dem zweiteilig ausgebildeten Rotorblatt sind die Schlitten der Aktuatoren in Taschen des vorderen Blattsegments angeordnet, sodass nur das hintere Blattsegment um die hintere Drehachse gedreht wird.

### Die Drehflügelkinematik für Antriebs- und für Kraftmaschinen

Drehflügelfahrzeuge und Drehflügelturbinen haben jeweils einen Motorgenerator mit Stator und Läufer und sind bevorzugt als Induktionsmaschinen oder als permanent erregte Synchronmaschinen entweder mit einer Welle für ein Rotorblatt oder mit zwei Wellen und zwei Getrieben für zwei koaxial und konzentrisch zueinander angeordnete und gegensinnig rotierende Rotorblätter ausgebildet. Der Motorgenerator eines Drehflügelfahrzeugs wechselt dann von dem Motorbetrieb in den Generatorbetrieb, wenn die Saugseiten des variablen Flügelprofils in beiden Hälften der Umlaufbahn der Rotorblätter entgegen der Fahrtrichtung ausgerichtet sind und das Drehflügelfahrzeug im Sinkflug oder im freien Fall durch Autorotation der Rotorblätter mit einer entgegen der Sink- oder Fallrichtung wirkenden Schubkraft abgebremst wird. Der Motorgenerator einer Drehflügelturbine beschleunigt im Motorbetrieb als eine Arbeitsmaschine das Rotormodul auf eine Anlaufdrehzahl und wechselt dann als eine Kraftmaschine in den Generatorbetrieb, wenn die tangentiale Antriebskraft größer ist als der Rotationswiderstand des Rotormoduls. Die Drehflügelkinematik des Rotormoduls einer Wind- oder Wasserturbine wird mittels von Sensoren und Aktuatoren dadurch gesteuert, dass zunächst die Richtung der Strömung detektiert und dann die Position der Wendepunkte auf der Umlaufbahn mittels der Aktuatoren senkrecht zu der jeweiligen Richtung der Strömung eingestellt wird. Für die Begrenzung der Drehzahl der Drehflügelturbine ist vorgesehen, die Saugseite des asymmetrischen Flügelprofils im luvseitigen Umlauf zu der Außenseite und im leeseitigen Umlauf des Rotormoduls zu der Innenseite der Umlaufbahn zu orientieren. In dieser als Orkanstellung bezeichneten Stellung der asymmetrischen Flügelprofile erzeugt die Drehflügel-Windturbine ein reduziertes, an die extreme Strömungsgeschwindigkeit angepasstes Drehmoment und muss nicht abgeschaltet werden. Das Rotormodul ist mit einem Tragwerk verbunden, das im Falle einer Windturbine von einem in einem Baugrund verankerten Mast und im Falle einer Wasserturbine mit horizontaler oder vertikaler Rotationsachse von einer Brücke oder von einem Mast gebildet wird. Die einzelnen Längsabschnitte des Rotorblatts sind individuell steuerbar, wobei ein Pilot oder eine Fernsteuerung den elektromechanischen, elektromagnetischen, elektropneumatischen oder elektrohydraulischen Antrieb der Aktuatoren steuert. An dem für die Schubkrafterzeugung vorgesehenen, parallel oder geneigt zu der Rotationachse ausgerichteten Längsabschnitt der Rotorblätter ist die Saugseite des variablen Flügelprofils in die jeweilige Fahrtrichtung des Fahrzeugs ausrichtbar. Das Drehflügelfahrzeug hat eine Längs-, eine Quer- und eine Hochachse und kann als ein Luftfahrzeug oder als ein Wasserfahrzeug ausgebildet werden, wobei das Luftfahrzeug einen Hubschrauber, ein senkrecht startendes Lufttaxi oder ein flug- und straßenverkehrstaugliches Fahrzeug und das Wasserfahrzeug ein Schlepp- und Bugsierschiff oder ein Fracht- oder Passagierschiff aufweist. Bei den genannten, anhand von Ausführungsbeispielen beschriebenen Drehflügelfahrzeugen rotieren die Rotormodule als Arbeitsmaschinen bzw. als Antriebsmaschinen um koaxial und konzentrisch oder parallel zu der Längs-, Quer- oder Hochachse angeordnete Rotationsachsen. Im Regelbetrieb der Drehflügelfahrzeuge sind die Saugseiten der asymmetrischen Flügelprofile in Fahrtrichtung orientiert, wobei die Fahrtrichtung dadurch geändert wird, dass der Durchmesser mit den Wendepunkten senkrecht zu der jeweils neuen Fahrtrichtung orientiert wird. Dabei werden Aktuatoren betätigt, die als elektromechanische, elektromagnetische, elektropneumatische oder elektrohydraulische Steuerungselemente für die Verstellung der Rotorblätter ausgebildet sind. Bei Ausfall der Antriebsmaschinen konvertieren die Rotorblätter der Rotormodule bis zum Stillstand des Fahrzeugs die kinetische Energie des Drehflügelfahrzeugs in elektrische Energie, wobei der Motorgenerator in den Generatorbetrieb wechselt.

### Luftfahrzeuge

Bei einem ersten vorteilhaften Ausführungsbeispiel ist das Drehflügelfahrzeug als ein Hubschrauber mit einer konzentrisch und koaxial zu der Hochachse angeordneten Rotationsachse für ein Rotormodul ausgebildet, dessen Rotorblätter bügelförmig ausgebildet und der Höhe nach in einen oberen, einen mittleren und ein unteren Längsabschnitt unterteilt sind und eine polygonzugförmige Flügelkette bilden. In den oberen und unteren Längsabschnitten wird der Durchmesser mit den Wendepunkten weitgehend parallel zur der Flugrichtung ausgerichtet. Im Steigflug des Hubschraubers sind die Auftriebskräfte in der linken und in der rechten Hälfte des Rotormoduls gleich groß, sodass die Drehflügelkinematik im Standby-Betrieb verharren kann. In dem mittleren Längsabschnitt der Rotorblätter beträgt der Verstellbereich für die Wendepunkte 360 Grad, sodass die Saugseiten der asymmetrischen Flügelprofile mittels der Drehflügelkinematik in jede beliebige Fahrtrichtung ausrichtbar sind und die Rotorblätter in beiden Hälften der Umlaufbahn eine in die jeweilige Flugrichtung gerichtete Schubkraft erzeugen. Im Geradeausflug wird die unterschiedliche Geschwindigkeit der in Fahrtrichtung vor- und nachlaufenden Rotorblätter des Hubschraubers durch Anpassung des jeweiligen Anstellwinkels in den für den Auftrieb zuständigen oberen und unteren Längsabschnitten der Rotorblätter ausgeglichen, sodass die linke und die rechte Hälfte des Rotormoduls jeweils gleichviel Auftrieb liefern. Alternativ zu dem bügelförmigen Rotorblatt kann ein schlaufenförmiges Rotorblatt ausgebildet werden, bei dem der obere und der untere Längsabschnitt nicht in einer vertikalen Ebene übereinander liegen, sondern gegeneinander versetzt angeordnet sind, sodass der mittlere Längsabschnitt eine Neigung gegenüber der Rotationsachse aufweist.

Bei einem zweiten vorteilhaften Ausführungsbeispiel für ein senkrecht startendes Drehflügelfahrzeug, das als ein Lufttaxi für sechs Personen ausgebildet ist, rotieren zwei Rotormodule mit gegensinniger Drehrichtung um die von der Hochachse gebildete Rotationsachse um eine ellipsoid- oder diskusförmig ausgebildeten Rotationskörper, der die Kabine des Luftfahrzeugs bildet. Zwei oder drei bügelförmig ausgebildete Rotorblätter eines Rotormoduls sind jeweils an dem oberen und unteren Scheitel des Rotationskörpers mit Motorgeneratoren verbunden, die als Antriebsmaschinen für die mit gegenläufiger Drehrichtung rotierenden Rotorblätter ausgebildet sind. Die Längsträger der bügelförmigen Rotorblätter sind der Länge nach in drei Längsabschnitte untergliedert, wobei die Drehflügelkinematik für das variable asymmetrische Flügelprofil in den oberen und unteren Längsabschnitten Auftrieb und in den mittleren Längsabschnitten der Rotorblätter eine in Flugrichtung ausrichtbare Schubkraft erzeugt. Für das Halten einer bestimmten Standposition des Flugbetrieb ist die Drehflügelkinematik so programmierbar, dass die Rotorblätter in den mittleren Längsabschnitten ausgleichende Schubkräfte erzeugen, die bei Seitenwind, Turbulenzen und anderen äußeren Kräften gezielt entgegenwirken, sodass der Drehflügler im Schwebeflug seine jeweilige Position exakt einhalten kann. Aus dem Stand ist das Fahrzeug im Flugbetrieb sehr agil und kann z.B. mit einer Joysticksteuerung sehr schnell die Flugrichtung im Umkreis von 360 Grad in jede beliebige Richtung ändern. Bei dem Lufttaxi werden mittels der Flügelkette der Rotorblätter jeweils arbeitsteilig große Auftriebskräfte und hohe Schubkräfte erzeugt, sodass bei einem derartigen Lufttaxi für sechs Personen eine Antriebsleistung von nur 300-400 kW erforderlich ist, die sich auf zwei Motorgeneratoren verteilt. Diese Anordnung von Rumpf und Rotoren kann mit Vorteil auch für größere Luftfahrzeuge genutzt werden.

Bei einem dritten vorteilhaften Ausführungsbeispiel ist das Drehflügelfahrzeug als ein flug- und straßenverkehrstaugliches Fahrzeug ausgebildet, bei dem jeweils zwei mit gegensinniger Drehrichtung rotierende Rotorblätter um eine vordere und um eine hintere, jeweils parallel zu der Querachse des Fahrzeugs angeordnete Rotationsachse rotieren. Die Rotorblätter der mindestens zwei Rotormodule sind bügelförmig ausgebildet und bilden eine polygonzugförmige Flügelkette, die im Fahrbetrieb des flug- und straßenverkehrstauglichen Fahrzeugs in die Front- und Heckpartie des Fahrzeugs eingeklappt ist, sodass das Fahrzeug als ein Pkw mit vier Rädern ausgebildet werden kann. Vier Teleskopstützen des Fahrzeug werden in der Startphase des Flugbetriebs so weit ausgefahren, dass die ausgeklappten Rotormodule frei rotierbar sind und das Fahrzeug bevorzugt bei einer Drehzahl von 800 Umdrehungen pro Minute abhebt und die Teleskopstützen eingezogen werden. Im Flugbetrieb steuert die Drehflügelkinematik die Rotormodule des Fahrzeugs derart, dass für den Geradeausflug in dem mittleren Längsabschnitt der bügelförmigen Rotorblätter der Verstellbereich für die Erzeugung der Auftriebskraft und der in Fahrtrichtung wirkenden Schubkraft genutzt wird. Die seitlichen Längsabschnitte der bügelförmigen Rotorblätter stabilisieren das Drehflügelfahrzeug um die Längs-, Quer- und Hochachse und dienen als Seitenleitwerk.

Bei einem besonders vorteilhaften Ausführungsbeispiel ist das Drehflügelfahrzeug als ein Luftfahrzeug mit mindestens einer Tragfläche ausgebildet, die ein Gehäuse für ein Rotormodul aufnimmt. Dabei sind eine Mehrzahl von Rotormodulen in die mindestens eine Tragfläche des Flugzeugs integriert, wobei die Tragfläche ein Strömungsleitwerk mit einer in Fahrtrichtung ausgerichteten Druckseite als Eingang für die Strömung und einer zur Flügelhinterkante der Tragfläche orientierte Saugseite als Ausgang für die Strömung bildet. Innerhalb der Tragfläche sind die die Rotationsachsen der Rotormodule quer zu der Fahrtrichtung ausgerichtet, wobei ein Rotormodul jeweils mindestens vier Rotorblätter aufweist, die jeweils paarweise mit gegensinniger Drehrichtung rotieren und den Senkrechtstart und den Geradeausflug des Flugzeugs dadurch ermöglichen, dass der Durchmesser mit den Wendepunkten in dem Längsabschnitt mit der definierten Länge im Umkreis von 360 Grad jeweils senkrecht zu der gewünschten Fahrtrichtung ausrichtbar ist.

### Wasserfahrzeuge

Bei den Wasserfahrzeugen ist ein Strömungsleitwerk für die Anströmung der von den Rotormodulen gebildeten Antriebsmaschinen vorgesehen, das als ein integraler Bestandteil des Rumpfs oder als ein integraler Bestandteil des Rotormoduls ausgebildet ist.

Das Strömungsleitwerk des Rumpfs kann als ein flacher Schiffsboden mit Strömungsleitflächen oder als ein bug- und heckseitiger Spantausfall oder als ein sich vom Bug bis zum Heck des Wasserfahrzeugs erstreckender Antriebskanal ausgebildet werden. Von besonderem Vorteil ist ein Strömungsleitwerk des Rotormoduls, das einen interner Strömungsleitkörper oder ein externes Gehäuse aufweist.

In einer ersten vorteilhaften Ausführungsvariante für die Antriebsmaschine eines bevorzugt langsam fahrenden und sehr wendigen Wasserfahrzeugs weist das Strömungsleitwerk für das Rotormodul einen flach ausgebildeten Schiffsboden mit horizontal und vertikal angeordnete Strömungsleitflächen auf. Die Rotormodule haben bevorzugt senkrecht zu dem flachen Schiffsboden ausgerichtete Rotationachsen und rotieren jeweils mit gegensinniger Drehrichtung, wobei sie entweder in einer Reihe koaxial zu der Längsachse des Schiffs oder paarweise parallel zu der Längsachse des Schiffs angeordnet sind. Dabei werden die einzelnen Rotorblätter der Rotormodule frei angeströmt. Der Durchmesser mit den Wendepunkten kann im Umkreis von 360 Grad einen beliebigen Winkel bezüglich der Längsachse des Wasserfahrzeugs einnehmen, sodass die Schubkraft in Sekundenschnelle in jede beliebige Richtung gelenkt werden kann und das Wasserfahrzeug vorwärts, rückwärts und seitwärts fahren kann. Da die Rotorblätter mit den variablen asymmetrischen Flügelprofilen dazu ausgebildet sind, fluiddynamisch Auftrieb zu erzeugen, wird die daraus abgeleitete Schubkraft unmittelbar auf den Rumpf des Wasserfahrzeugs übertragen, sodass kein Propellerstrahl erzeugt wird, hohe Drehzahlen des Rotormoduls ermöglicht und Erschütterungen des Rumpfs vermieden werden. Auch die hydrodynamische Belastung des Rotorblatts selbst ist gering, sodass Kavitation und andere durch Überbeanspruchung hervorgerufene Schäden vermieden werden.

Bei einer zweiten besonders vorteilhaften Ausführungsvariante der Antriebsmaschine für ein bevorzugt schnell fahrendes Wasserfahrzeug mit einem sehr geringen Tiefgang hat das Rotormodul einen internen Strömungsleitkörper, der als ein um die Rotationachse des Rotormoduls drehbarer Profilabschnitt eines Reuleaux-Dreiecks ausgebildet ist und innerhalb der Umlaufbahn des Rotormoduls drehbar mit dem Schiffsboden verbunden ist. Der Rumpf des für Binnengewässer ausgelegten Wasserfahrzeugs weist an Bug und Heck jeweils einen entsprechenden steuer- und backbordseitigen Spantausfall für die Anordnung der Rotormodule auf.

Bei einer dritten besonders vorteilhaften Ausführungsvariante der Antriebsmaschine für ein bevorzugt schnell fahrendes seegängiges Wasserfahrzeug weist das Strömungsleitwerk ein Gehäuse für das Rotormodul auf, das von einem mit seiner Druckseite in Fahrtrichtung ausgerichteten Flügelstumpf gebildet wird und einen Eingang und einen Ausgang für die Strömung hat. Der Eingang für die Strömung liegt an der Druckseite des Flügelstumpfs und weist eine Mehrzahl kammartig ausgebildeter Strömungsleitkörper auf, die dazu ausgebildet sind, die Rotorblätter innerhalb des Gehäuses mit einer zirkularen Strömung entgegen der Drehrichtung des Rotormoduls anzuströmen. Der Ausgang für die Strömung liegt am unteren Ende des Flügelstumpfs im Totwasserbereich, sodass der dort vorhandene Sog die Durchströmung des Gehäuses befördert.

Bei einer vierten besonders vorteilhaften Ausführungsvariante der Antriebsmaschine für ein bevorzugt schnell fahrendes seegängiges Wasserfahrzeug weist das Strömungsleitwerk einen sich vom Bug bis zum Heck koaxial zu der Längsachse erstreckenden Antriebskanal auf, der an seiner Oberseite von einem flachen Schiffsboden und seitlich von tieferreichenden steuer- und backbordseitig angeordneten Auftriebskörpern begrenzt wird. In den Auftriebskörper sind bevorzugt über die gesamte Länge des Schiffs Wasserstofftanks für Brennstoffzellen angeordnet, sodass eine Mehrzahl von in Gehäusen angeordneten Rotormodulen mit Strom versorgt werden können. Die Gehäuse weisen einen Flügelstumpf auf und sind in dem Antriebskanal in Fahrtrichtung in Reihe hintereinander parallel zu der Längsachse des Wasserfahrzeugs so angeordnet, dass der Flügelstumpf eine in Fahrtrichtung ausgerichtete Druckseite mit einem oberen Eingang für die Strömung und eine Saugseite mit einem unteren Ausgang für die Strömung hat. Im Betrieb der Antriebsmaschinen wird ein den Motorgenerator umgebender, parallel zu der vertikalen Rotationsachse des Rotormoduls angeordneter Ringkanal vertikal durchströmt, sodass die variablen asymmetrischen Flügelprofile der Rotorblätter unabhängig von der Fahrtgeschwindigkeit des Wasserfahrzeugs angeströmt werden. Die vertikale Durchströmung des Gehäuses verhindert den Aufbau einer unerwünschten Zirkulationsströmung in Drehrichtung der Rotormodule innerhalb des Ringkanals. Das Tragwerk des Wasserfahrzeugs hat eine wasserdichte Hülle und ein tragendes Skelett aus in Längs- und Querrichtung angeordneten Fachwerkscheiben, die untereinander zu einem räumlichen Fachwerkträger und an Knotenpunkten innerhalb des Antriebskanals mit den oberen Enden der Gehäuse für die Rotormodule verbunden sind, sodass die Belastungen des Rumpfs an den Knotenpunkten des Tragwerks von der Hülle auf den räumlichen Fachwerkträger übertragen werden. Der von den Rotormodulen bewirkte Schub kann mit der vorgeschlagenen Skelettbauweise besonders effektiv auf den Rumpf des Wasserfahrzeugs übertragen werden.

Bei einem besonders vorteilhaften Ausführungsbeispiel ist das Drehflügelfahrzeug als ein U-Boot ausgebildet, dessen Rumpf am Heck mit einem Gehäuse für mindestens zwei jeweils steuer- und backbordseitig parallel zu der Querachse des U-Boots angeordneten Rotormodule verbunden ist. Das Gehäuse ist als ein Strömungsleitwerk mit einer in Fahrtrichtung ausgerichteten Druckseite als Eingang für die Strömung und einer zum Totwasser des U-Boots orientierten Saugseite als Ausgang für die Strömung ausgebildet, wobei ein Rotormodul mindestens vier, jeweils paarweise mit gegensinniger Drehrichtung rotierende Rotorblätter aufweist die den Antrieb und die Steuerung für die Über- und Unterwasserfahrt des U-Boots bilden und das Tauchen oder Steigen des U-Boots derart steuern, dass der Durchmesser mit den Wendepunkten im Umkreis von 360 Grad jeweils senkrecht zu der gewünschten Fahrtrichtung ausgerichtbar ist.

Weitere Einzelheiten und vorteilhafte Weiterbildungen der Erfindung ergeben sich aus den im Folgenden beschriebenen und in den Zeichnungen dargestellten, in keiner Weise als Einschränkung der Erfindung zu verstehenden Ausführungsbeispielen sowie aus den Unteransprüchen.

Es zeigen:
Fig. 1 ein Drehflügelfahrzeug, das als ein Hubschrauber mit vier bügelförmigen Rotorblättern ausgebildet ist,
Fig. 2 den Hubschrauber nach Fig. 1 im Steigflug mit Darstellung der aerodynamisch bewirkten Kräfte an den oberen und unteren Längsabschnitten der Rotorblätter in einer schematischen Aufsicht und in Detailschnitten der Rotorblätter,
Fig. 3 den Hubschrauber nach Fig. 1-2 im Geradeausflug mit Darstellung der aerodynamisch bewirkten Kräfte an den oberen und unteren Längsabschnitten der Rotorblätter in einer schematischen Aufsicht und in Detailschnitten der Rotorblätter,
Fig. 4 den Hubschrauber nach Fig. 1-3 im Geradeausflug mit Darstellung der aerodynamisch bewirkten Kräfte an den mittleren Längsabschnitten der Rotorblätter in einem Horizontalschnitt,
Fig. 5 ein zweiteiliges kinematisches Rotorblatt mit einer hinteren Drehachse für ein hinteres Blattsegment, oben als symmetrisches Flügelprofil, in der Mitte und unten jeweils als asymmetrisches Flügelprofil im schematischen Querschnitt,
Fig. 6 das zweiteilige Rotorblatt nach Fig. 5 mit integrierten Aktuatoren, oben als symmetrisches Flügelprofil, in der Mitte und unten als asymmetrisches Flügelprofil in einer Ausschnittisometrie,
Fig. 7 ein zweiteiliges kinematisches Rotorblatt mit einer vorderen Drehachse, oben mit einem symmetrischen Flügelprofil, in der Mitte und unten jeweils mit einem asymmetrischen Flügelprofil im schematischen Querschnitt,
Fig. 8 das zweiteilige Rotorblatt nach Fig. 7 mit integrierten Aktuatoren, oben mit einem symmetrischen Flügelprofil, in der Mitte und unten mit einem asymmetrischen Flügelprofil, jeweils in einer Ausschnittisometrie,
Fig. 9 ein dreiteiliges Rotorblatt, oben mit einem symmetrischen Flügelprofil, in der Mitte und unten mit einem asymmetrischen Flügelprofil, jeweils im schematischen Querschnitt,
Fig. 10 das dreiteilige Rotorblatt nach Fig. 9, oben als symmetrisches Flügelprofil und unten als asymmetrisches Flügelprofil in einer Ausschnittisometrie,
Fig. 11 ein dreiteiliges Rotorblatt, oben mit einem elektromagnetischen Aktuator und unten einen elektromagnetischen Aktuator in einer Ausschnittisometrie,
Fig. 12 ein Drehflügelfahrzeug, das als Lufttaxi für sechs Personen ausgebildet ist, in einer perspektivischen Übersicht und mit Detailschnitten der Rotorblätter,
Fig. 13 ein flug- und straßenverkehrstaugliches Fahrzeug, oben im Fahrbetrieb und unten in der Startphase des Flugbetriebs, jeweils in einer perspektivischen Übersicht,
Fig. 14 das Fahrzeug nach Fig. 13 im Steigflug mit Darstellung der aerodynamisch bewirkten Kräfte an einem Längsabschnitt der Rotorblätter des Fahrzeugs im schematischen Querschnitt,
Fig. 15 das Fahrzeug nach Fig. 13-14 im Geradeausflug mit Darstellung der aerodynamisch bewirkten Kräfte an einem Längsabschnitt der Rotorblätter im schematischen Querschnitt,
Fig. 16 ein Drehflügelfahrzeug mit einer Tragfläche,
Fig. 17 das Flugzeug nach Fig. 16,
Fig. 18 ein Drehflügelfahrzeug, das als ein Schlepp- und Bugsierschiff mit zwei Rotormodulen ausgebildet ist, in einer Übersichtsansicht in der Mitte und mit Detailschnitten der Rotorblätter oben und unten,
Fig. 19 ein Rotormodul für ein langsam fahrendes Wasserfahrzeug in der isometrischen Ausschnittdarstellung,
Fig. 20 zwei gegensinnig rotierende Rotormodule für Wasserfahrzeug in der isometrischen Ausschnittdarstellung,
Fig. 21 die elektromagnetische Blattverstellung für einen Schiffsantriebs nach Fig. 16-18, oben im Detailschnitt und darunter in der Ausschnittperspektive,
Fig. 22 die hydrodynamisch bewirkten Kräfte des Rotormoduls nach Fig. 18-21 im Anfahrbetrieb in einem schematischen Querschnitt,
Fig. 23 die hydrodynamisch bewirkten Kräfte des Rotormoduls nach Fig. 18-22 im Fahrbetrieb in einem schematischen Horizontalschnitt,
Fig. 24 den Rumpf eines Wasserfahrzeugs mit vier Rotormodulen, oben in der Untersicht, in der Mitte in einer perspektivischen Untersicht und unten in einer Frontalansicht,
Fig. 25 ein Rotormodul des Rumpfs nach Fig. 24 mit Darstellung der von einem Strömungsleitkörper des Rotormoduls an den Rotorblättern hydrodynamisch bewirkten Kräfte in zwei exemplarischen Horizontalschnitten,
Fig. 26 ein seegängiges Wasserfahrzeug, oben in einem Längs- und unten in einem schematischen Querschnitt,
Fig. 27 das Gehäuse für ein Rotormodul des Wasserfahrzeugs nach Fig. 26, oben in dem schematischen Horizontalschnitt und unten in der perspektivischen Ausschnittdarstellung,
Fig. 28 ein alternatives Gehäuse für das Rotormodul des Wasserfahrzeugs nach Fig. 26, oben im schematischen Längsschnitt und unten in einer perspektivischen Ausschnittdarstellung,
Fig. 29 ein Wasserfahrzeug, das als ein U-Boot ausgebildet ist
Fig. 30 das U-Boot nach Fig. 29 mit Darstellung der heckseitigen Rotormodule im schematischen Horizontalschnitt,
Fig. 31 eine Drehflügelturbine, die als Wasserturbine mit horizontaler Rotationsachse ausgebildet ist, oben mit Detailschnitten der Rotorblätter und unten in der perspektivischen Ausschnittdarstellung,
Fig. 32 eine Drehflügelturbine als eine Wasserturbine mit vertikaler Rotationsachse, oben mit Detailschnitten der Rotorblätter und unten in der perspektivischen Übersichtsdarstellung,
Fig. 33 einen Aktuator der Wasserturbine nach Fig. 32 in der perspektivischen Ausschnittdarstellung,
Fig. 34 eine Drehflügelturbine als eine Windturbine mit vertikaler Rotationsachse in der perspektivischen Übersichtsdarstellung,
Fig. 35 die Drehflügelkinematik der Turbinen nach Fig. 31-34 für den Regelbetrieb mit Darstellung der fluiddynamisch bewirkten Kräfte im schematischen Querschnitt,
Fig. 36 die Drehflügelkinematik für eine gedrosselte Drehzahl der Turbinen nach Fig. 31-34 mit Darstellung der fluiddynamisch bewirkten Kräfte im schematischen Querschnitt,
Fig. 37 die Drehflügelkinematik für eine weiter gedrosselte Drehzahl für den Ausnahmebetrieb der Turbinen nach Fig. 31-34 mit Darstellung der fluiddynamisch bewirkten Kräfte im schematischen Querschnitt.

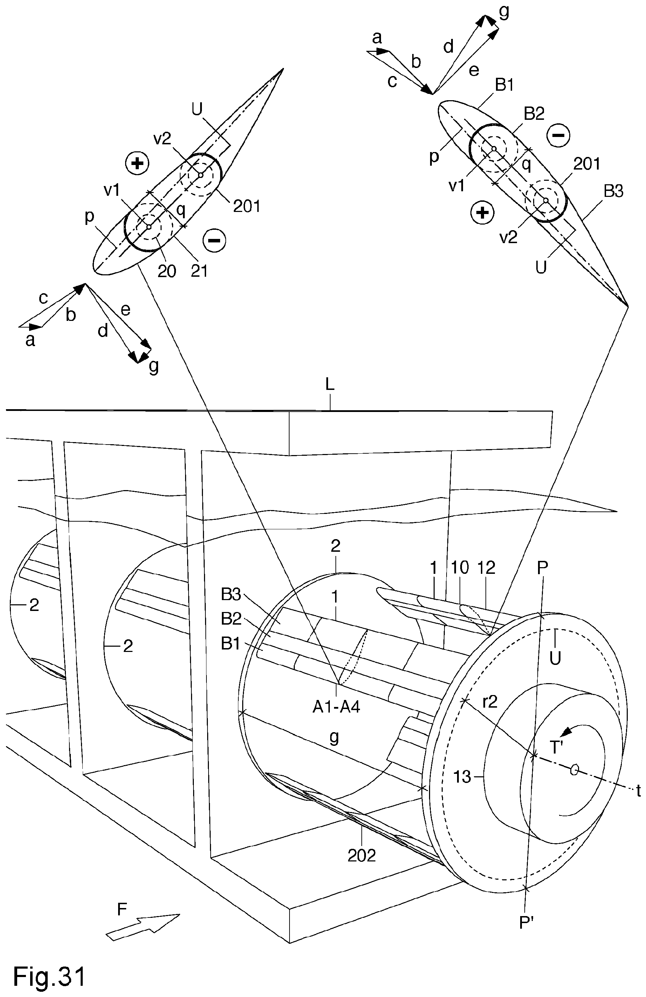

Soweit die Ausführungsbeispiele der Fig. 31 bis Fig. 35 reine Drehflügelturbinen betreffen, fallen sie nicht unter den Wortlaut der Ansprüche, werden aber als das Verständnis der Erfindung erleichternd angesehen.

Im Folgenden sind gleiche oder gleich wirkende Teile mit den gleichen Bezugszeichen versehen und werden üblicherweise nur einmal beschrieben. Die Beschreibung ist figurenübergreifend aufeinander aufbauend, um unnötige Wiederholungen zu vermeiden.

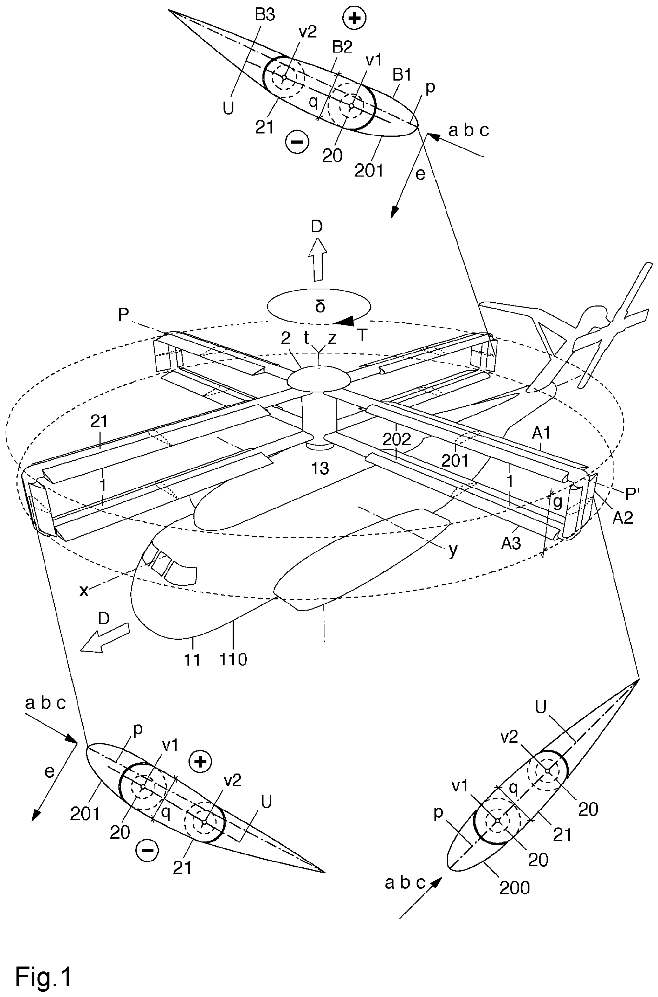

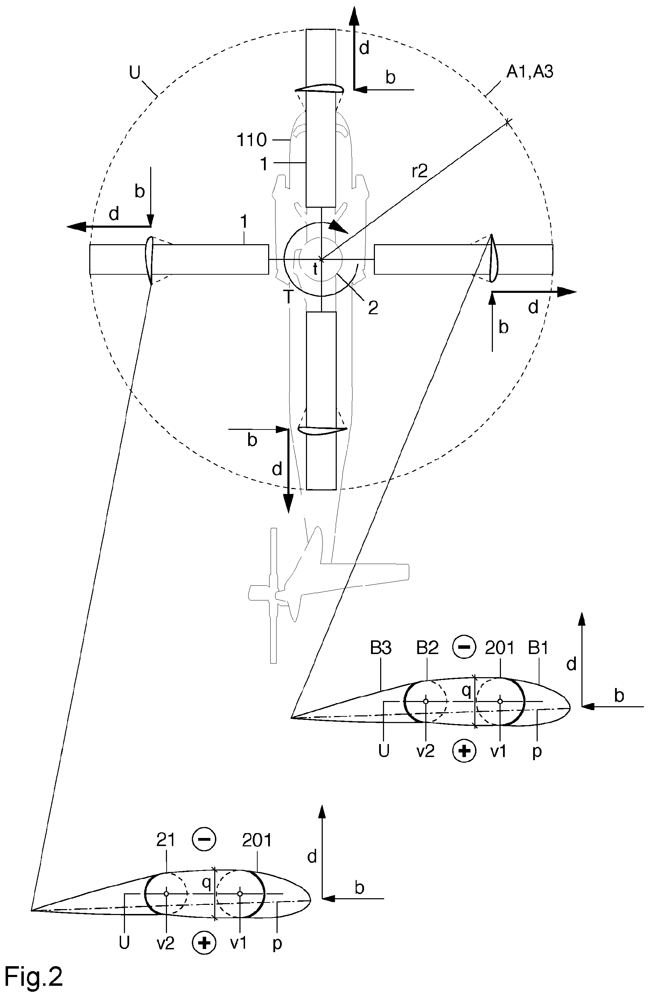

**Fig. 1** zeigt ein Drehflügelfahrzeug 11, das als ein Hubschrauber mit vier bügelförmig ausgebildeten Rotorblättern 1 ausgebildet ist. Die Längsabschnitte A1-A3 der Rotorblätter 1 bilden eine polygonzugförmige Flügelkette 203. Während der obere Längsabschnitt A1 und der untere Längsabschnitt A3 dazu ausgebildet sind, eine Auftriebskraft d, wie in Fig. 2-3 gezeigt, zu erzeugen, ist die Drehflügelkinematik 10 in dem Längsabschnitt A2 dazu ausgebildet, eine Schubkraft e in die Fahrtrichtung D des Hubschraubers zu erzeugen. Dabei kann der Durchmesser mit den Wendepunkten P,P' innerhalb eines Verstellbereichs δ im Umkreis von 360 Grad in jede beliebige Fahrtrichtung D orientiert werden, sodass der Längsabschnitt A2 mit der Länge g die Funktion eines Schubkrafterzeugers hat. Das Rotormodul 2 ist über eine Welle mit dem Motorgenerator 13 verbunden und hat eine Rotationsachse t, die von der Hochachse z des Hubschraubers gebildet wird und rotiert oberhalb der von dem Rumpf 110 umschlossenen Kabine 117. Die Drehflügelkinematik 10 ersetzt eine Taumelscheibe und steuert in den oberen und unteren Längsabschnitten A1,A3 den Auftrieb und in dem mittleren Längsabschnitt A2 die Schubkraft des Rotormoduls 2. Die Längsabschnitten A1,A3 sind in einer Ebene übereinander angeordnet, können aber auch radial bzw. in Umfangsrichtung gegeneinander versetzt angeordnet werden, sodass der mittlere Längsabschnitt A2 das äußere obere und das äußere untere Ende der Längsabschnitte A1,A3 schräg verbindet und das Rotorblatt 1 schlaufenförmig ausgebildet ist. Mit zwei Lagen von Auftrieb erzeugenden Längsabschnitten A1,A3 Rotorblättern 1 kann der Hubschrauber mit Vorteil als ein Lastenhubschrauber eingesetzt werden, der im Schwebeflug mit der Drehflügelkinematik 10 in dem Längsabschnitt A2 seine Position stabil halten kann. Ohne Taumelscheibe zeichnet sich das Rotormodul **2** durch eine hohe Laufruhe aus und ist frei von unerwünschten Vibrationen.

**Fig. 2** zeigt den Hubschrauber nach Fig. 1 mit einer schematischen Darstellung der Längsabschnitte A1,A3 der bügelförmigen Rotorblätter 1, oben in der Übersichtsdarstellung und unten in Detailschnitten des variablen asymmetrischen Flügelprofils 201 jeweils für die linke und die rechte Hälfte der Umlaufbahn U. Im Steigflug ist die Summe der Auftriebskräfte d in beiden Hälften der Umlaufbahn U gleich groß, sodass im Steigflug in den Längsabschnitten A1,A3 des Rotorblatts 1 keine Verstellung der Blattsegmente B1,B3 erforderlich ist.

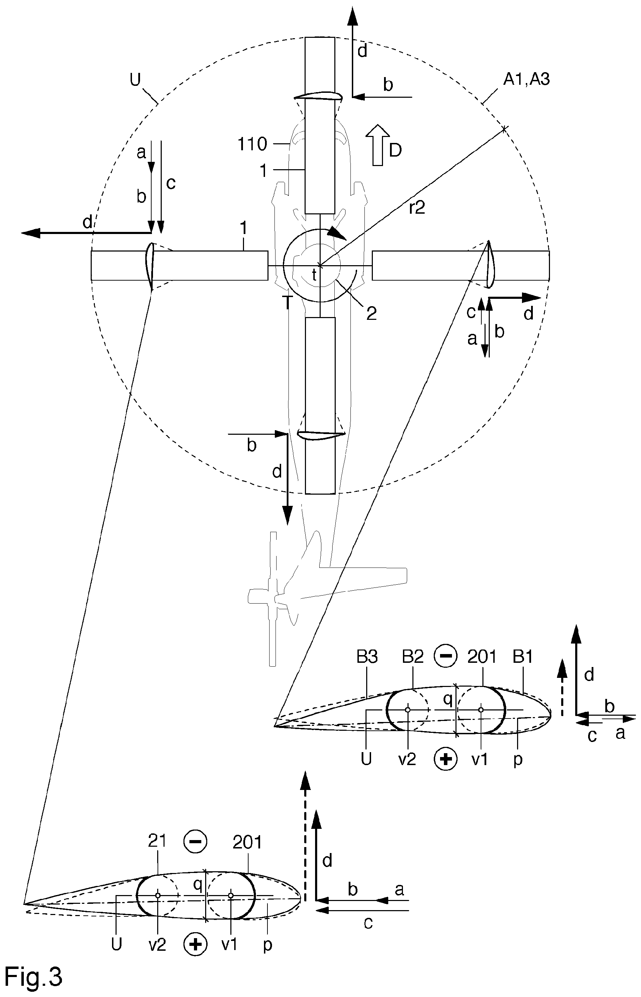

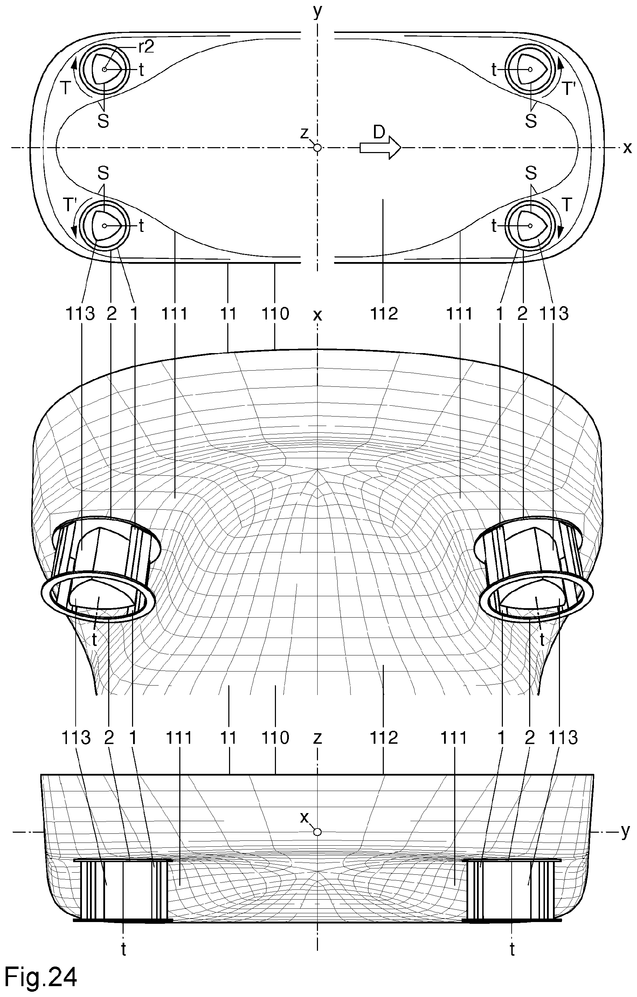

**Fig. 3** zeigt den Hubschrauber nach Fig. 1-2 mit einer schematischen Darstellung der Längsabschnitte A1,A3 der bügelförmigen Rotorblätter 1, oben in der Übersichtsdarstellung und unten in Detailschnitten des variablen asymmetrischen Flügelprofils 201 jeweils für die, bezogen auf die Flugrichtung D, linke und die rechte Hälfte der Umlaufbahn U. Im Geradeausflug des Hubschraubers setzt sich die resultierende Anströmung c aus der Drehzahl a und der Fahrtgeschwindigkeit b zusammen, sodass bezüglich der Fahrtrichtung D in der linken und rechten Hälfte der Umlaufbahn U an den Rotorblättern 1 jeweils unterschiedliche Auftriebskräfte d resultieren. Durch eine entsprechende Blattverstellung des vorderen und des hinteren Blattsegments B1,B3 gegenüber dem mittleren Blattsegment B2 werden die in beiden Hälften der Umlaufbahn U bewirkten Auftriebskräfte d ausgeglichen, sodass der Hubschrauber eine stabile Fluglage einnimmt. In dem Längsabschnitt A2 des Rotorblatts 1 ist, wie in Fig. 24 gezeigt, eine Blattverstellung vorgesehen, bei der die Schubkraft e in Fahrtrichtung d ausrichtbar ist, wobei bei diesem Ausführungsbeispiel der Verstellbereich δ 360 Grad beträgt, sodass der Hubschrauber in jede beliebige Fahrtrichtung D gelenkt werden kann. Dies ist insbesondere für einen präzisen Landeanflug und auch für das Einhalten einer bestimmten Flugposition z.B. bei Seitenwind von Vorteil.

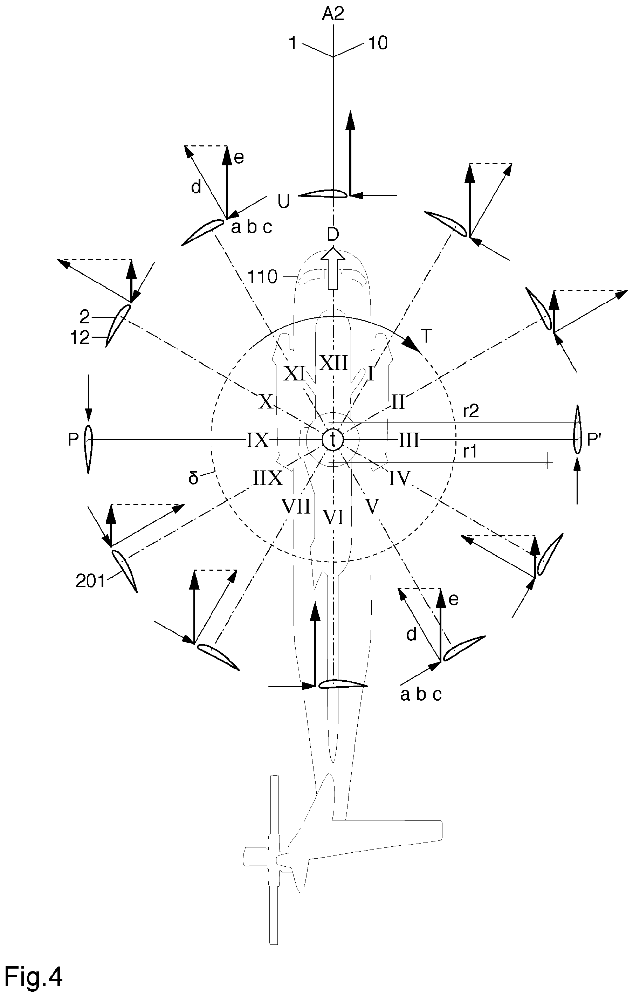

**Fig. 4** zeigt den Geradeausflug des Hubschraubers nach Fig. 1-3 in einem schematischen Horizontalschnitt in dem Längsabschnitt A2 mit der Länge g. Der Durchmesser mit den Wendepunkten P,P' kann in dem Längsabschnitt A2 jede beliebige Umlaufposition I-XII einnehmen, sodass der Verstellbereich δ in diesem Fall 360 Grad beträgt. Während die Rotorblätter 1 der Flügelkette 203 in den Längsabschnitten A1,A3 für die notwendige Auftriebskraft d sorgen, wie in Fig. 2-3 gezeigt, dient der Längsabschnitt A2 der Erzeugung einer Schubkraft e, die im Umkreis von 360 Grad in jede beliebige Fahrtrichtung gelenkt werden kann. Im Standflug wird bei Windstille die Drehflügelkinematik 10 in den Längsabschnitten A2 der Rotorblätter 1 abgeschaltet, sodass sich die von den variablen asymmetrischen Flügelprofilen 201 bewirkten Schubkräfte e gegenseitig aufheben. Mittels der Drehflügelkinematik 10 ist der Hubschrauber sehr gut manövrierbar und kann eine Flugposition sehr genau einhalten, was für Start und Landung von besonderem Vorteil ist.

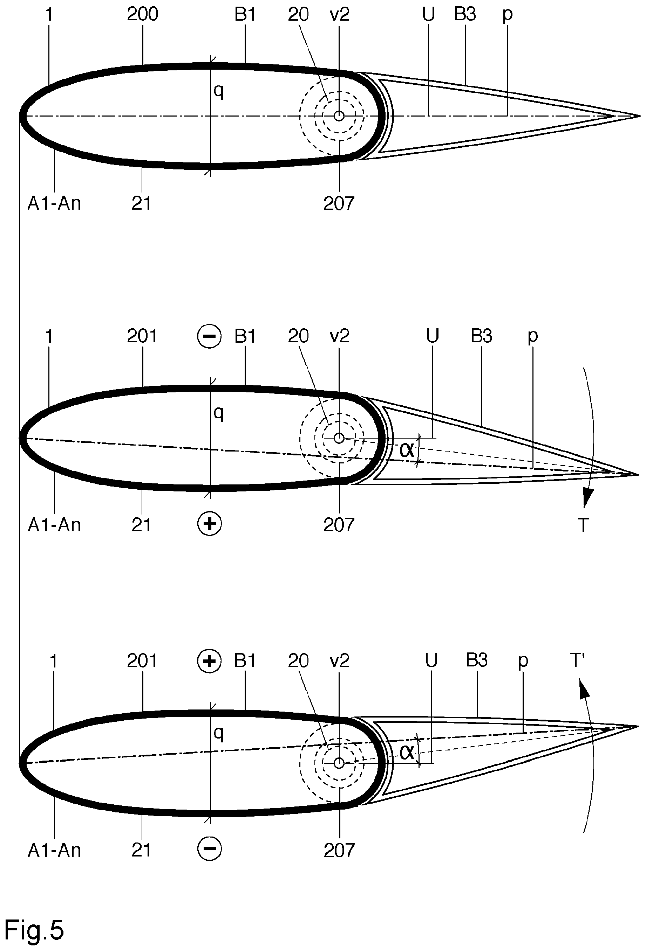

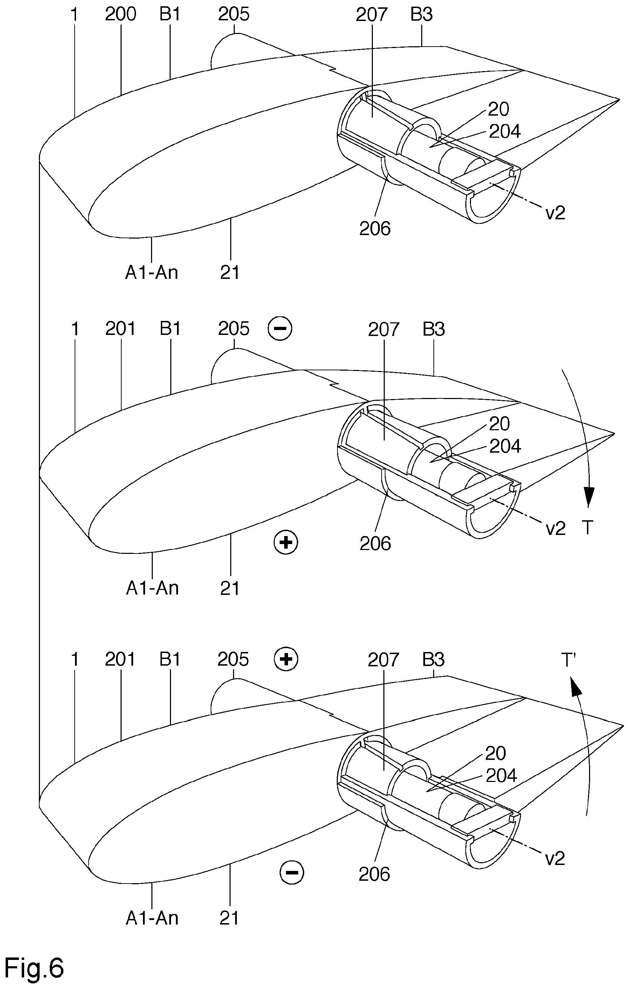

**Fig. 5** zeigt ein zweiteilig aufgebautes Rotorblatt 1, oben mit einem symmetrischen Flügelprofil 200, in der Mitte und unten mit einem asymmetrischen Flügelprofil 201 mit getauschten Saug- und Druckseiten. Das vordere Blattsegment B1 ist als Längsträger 21 des Rotorblatts 1 ausgebildet. An der hinteren Drehachse v2 des Rotorblatts 1 ist das hintere Blattsegment B3 an das vordere Blattsegment B1 angelenkt. Ein koaxial und konzentrisch zu der Drehachse v2 angeordneter Aktuator 20 betätigt im Inneren des Rotorblatts 1 einen Schlitten 207, der in Fig. 6 näher dargestellt ist.

**Fig. 6** zeigt einen Aktuator 20 für die Blattverstellung, der von zwei koaxial und konzentrisch zu der hinteren Rotationsachse v2 des hinteren Blattsegments B3 angeordneten pneumatischen Muskeln 204, die jeweils mit den Stirnseiten des Schlittens 207 verbunden sind, gebildet wird. In jedem Längsabschnitt A1-An des Rotorblatts 1 kann jeweils mindestens eine derartige Verstellvorrichtung angeordnet werden.

**Fig. 7** zeigt ein zweiteilig ausgebildetes Rotorblatt 1, oben als symmetrisches Flügelprofil 200, in der Mitte und unten als asymmetrisches Flügelprofil 201, bei dem das vordere und das hintere Blattsegment B1,B3 rotierbar an einen von einem Rundhohlprofil gebildeten Längsträger 21 angelenkt sind, sodass die Längsmittelachse des Längsträgers 21 eine vordere Drehachse v1 des Rotorblatts A bildet. Für die Blattverstellung werden das vordere und das hintere Blattsegment B1,B3 in einer Drehbewegung mit gegensinniger Drehrichtung T,T' um maximal 6 bis 7 Grad um die Drehachse v1 mit Bezug zu der Umlaufbahn U jeweils nach außen oder nach innen gedreht. Während das symmetrische Flügelprofil 200 tangential zu der Umlaufbahn U ausgerichtet ist, bewirkt die Verdrehung des vorderen und des hinteren Blattsegments B1,B3 einen positiven Anstellwinkel α von etwa 2 Grad gegenüber einer Tangente an der Umlaufbahn U.

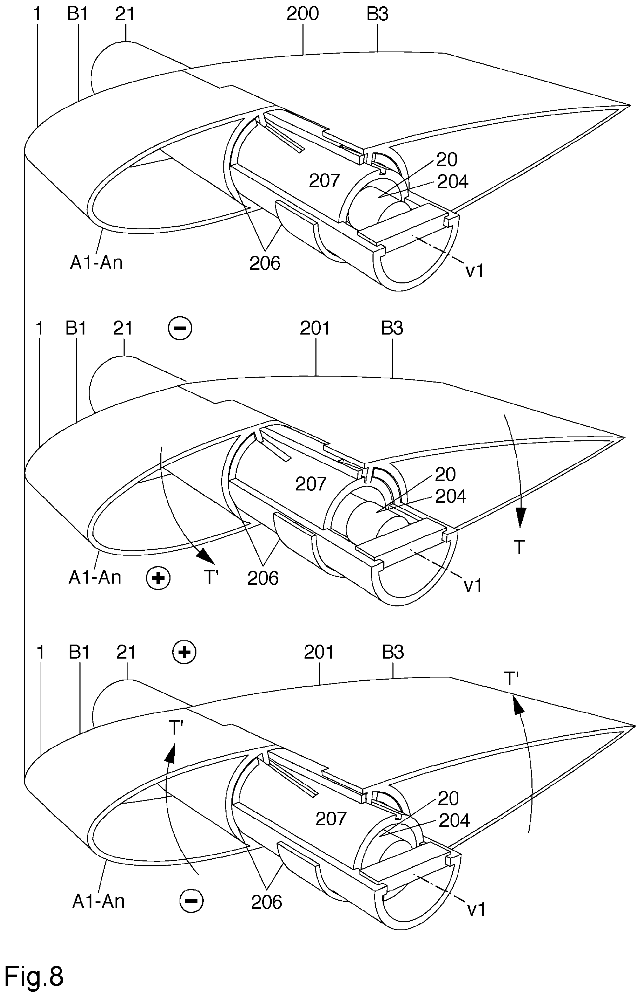

**Fig. 8** zeigt die Verstellvorrichtung des zweiteiligen Rotorblatts 1 nach Fig. 7 mit Darstellung eines konzentrisch und koaxial zu der vorderen Drehachse v1 angeordneten Aktuators 20, der von einem pneumatischen Muskel 204 gebildet wird. Der koaxial und konzentrisch zu der Drehachse v1 angeordnete pneumatische Muskel 204 schiebt den Schlitten 207 auf dem Scharnierbolzen 205 mit einer Frequenz von 20-30 Hz hin und her, sodass gegensinnig orientierte Gewindeabschnitte des Schlittens 207 an dem vorderen und dem hinteren Blattsegment B3 etwa 20 mal pro Sekunde eine Drehbewegung mit gegensinniger Drehrichtung T,T' bewirken. Die Profilsehne p des asymmetrischen Flügelprofils 201 weist dabei einen positiven Anstellwinkel α von 2 bis 3 Grad gegenüber der Tangente zur Umlaufbahn U auf.

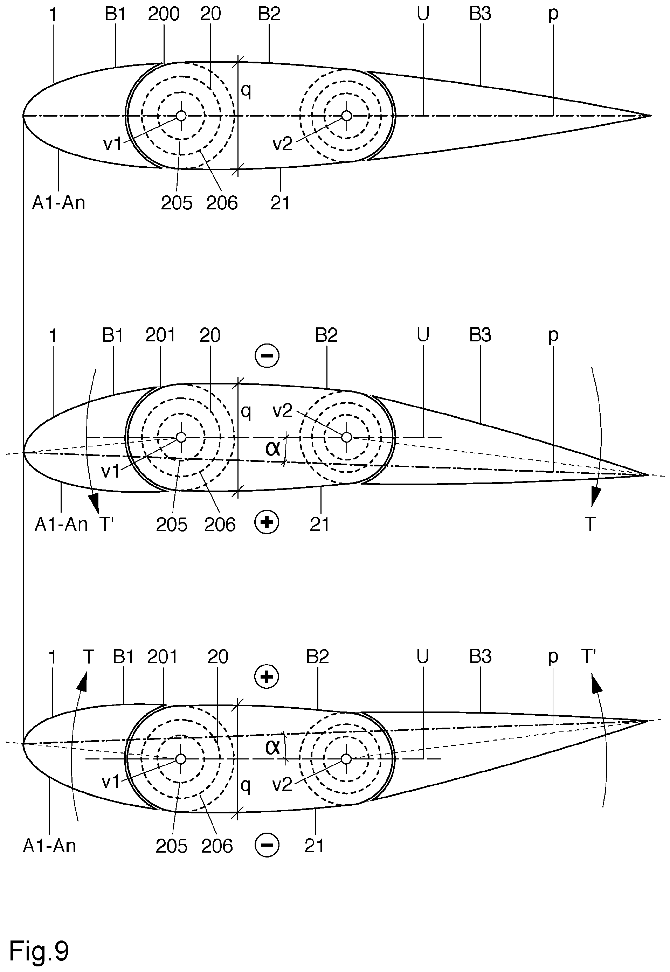

**Fig. 9** zeigt ein dreiteilig ausgebildetes Rotorblatt 1 mit den Blattsegmenten B1-B3, oben als symmetrisches Flügelprofil 200, in der Mitte und unten als asymmetrisches Flügelprofil 201. An der vorderen Drehachse v1 ist das vordere Blattsegment B1 mit der Nase und an der hinteren Drehachse v2 ist das hintere Blattsegment B3 mit der Hinterkante an das von dem Längsträger 21 gebildete mittlere Blattsegment B2 angelenkt. Durch gegenläufiges Drehen des vorderen Blattsegments B1 und des hinteren Blattsegments B3 um jeweils maximal 7 Grad erhält das variable asymmetrische Flügelprofil 201 jeweils einen positiven Anstellwinkel α von 2,5 Grad gegenüber der Tangente der Umlaufbahn U. Die Profilsehne p des symmetrischen Flügelprofils 200 ist tangential zur Umlaufbahn U ausgerichtet. Die jeweils gegensinnige Drehrichtung T,T' des vorderen und hinteren Blattsegments B1,B2 bewirkt einen Wechsel der Saugseite (-) und der Druckseite (+) von der Außenseite zur Innenseite der Umlaufbahn U und umgekehrt.

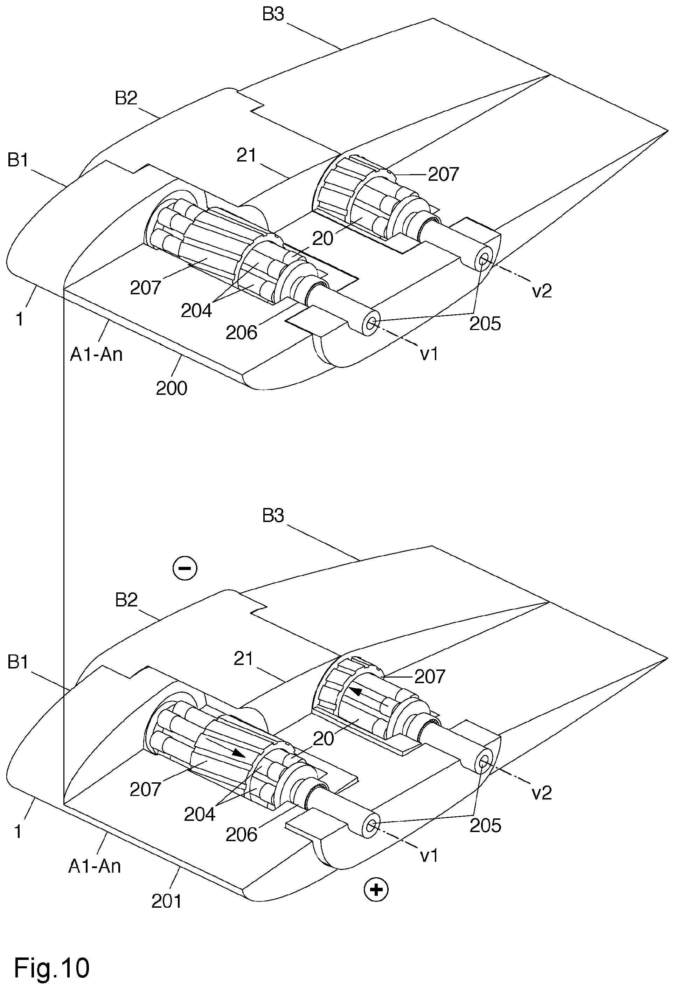

**Fig. 10** zeigt einen Längsabschnitt A1-An des dreiteiligen Rotorblatts 1, oben mit dem symmetrischen Flügelprofil 200 der Übergangsstellung, die das Rotorblatt 1 temporär dann aufweist, wenn die Saugseite (-), wie in Fig. 4 gezeigt, an dem Durchmesser mit den Wendepunkten P,P' von der Außenseite zur Innenseite der Umlaufbahn U wechselt. Unten ist das Auftrieb erzeugende asymmetrische Flügelprofil 201 des Rotorblatts 1 dargestellt. Die in das Rotorblatt 1 integrierten Aktuatoren 20 werden von zwölf pneumatischen Muskeln 204 gebildet, wobei jeweils sechs pneumatische Muskeln 204 an die Stirnseiten des Schlittens 207 angreifen. Die pneumatischen Muskeln 204 sind jeweils parallel zu den Drehachsen v1,v2 des dreiteiligen Rotorblatts 1 angeordnet. Die Schlitten 207 werden an ihrer Innenseite an den Scharnierbolzen 205 linear geführt, während sie an ihren Außenseiten in Gewinde des vorderen und des hinteren Blattsegments B1,B3 derart eingreifen, dass durch die lineare Translationsbewegung des Schlittens 207 auf den Scharnierbolzen 205 das Ein- und Ausdrehen des vorderen und des hinteren Blattsegments B1,B2 jeweils mit gegensinniger Drehrichtung T,T' gegenüber dem invarianten mittleren Blattsegment B3 bewirkt wird. Die geringe Steigung der blattseitigen Gewinde ermöglicht eine Übersetzung von 1 zu 10 für jeweils sechs an den beiden Stirnseiten des Schlittens 207 angreifende pneumatische Muskeln 204. Drehlager 206 an den Scharnierbolzen 205 ermöglichen die Drehbewegung der Blattsegmente B1,B3. Die konzentrisch und koaxial zu den Drehachsen v1,v2 angeordneten Scharnierbolzen 205 dienen als Medienkanäle der Stromversorgung der pneumatischen Muskeln 204. Die Abluft der pneumatischen Muskeln 204 wird für eine Luftlagerung des Schlittens 207 an den Scharnierbolzen 205 und der Blattsegmente B1,B3 an den Schlitten 207 genutzt.

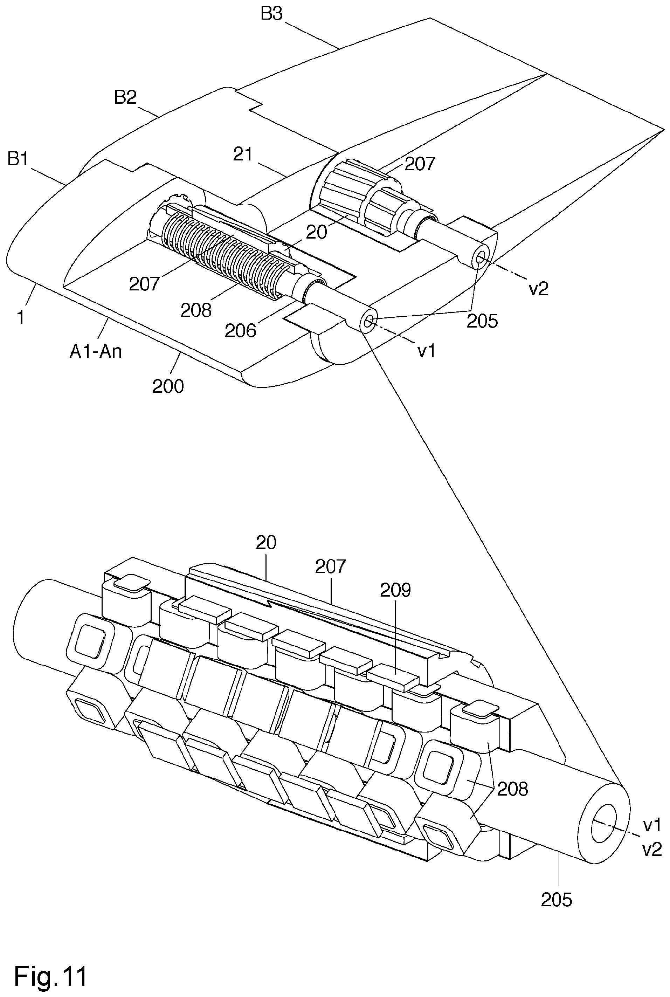

**Fig. 11** zeigt jeweils einen elektromagnetischen Aktuator 20 exemplarisch für einen Längsabschnitt A1-An des Rotorblatts 1, oben in der Übergangsstellung mit dem symmetrischen Flügelprofil 200. Die Scharnierbolzen 205 sind jeweils konzentrisch und koaxial zu den Drehachsen v1,v2 für das vordere Blattsegment B1 und das hintere Blattsegment B3 angeordnet und dienen als Kabelkanäle für die Stromversorgung der beiden elektromagnetischen Aktuatoren 20. Bei der oben dargestellten einfachen Ausführung trägt eine Eisenhülse des Scharnierbolzens 205 eine Erregerwicklung 208 für die Induktion einer Eisenhülse des Schlittens 207. Durch Umpolung des elektromagnetischen Aktuators 20 führt der Schlitten 207 eine oszillierende Bewegung mit einer Frequenz von 20-30 Hz auf dem Scharnierbolzen 205 aus, sodass Gewinde der Aktuatoren 20 zusammen mit den Gewinden des vorderen und hinteren Blattsegments B1,B3 die Drehbewegung mit gegensinniger Drehrichtung T,T' an dem vorderen und hinteren Blattsegment B1,B3, bewirken, die jeweils mittels von Drehlagern 206 an das mittlere Blattsegment B2 angelenkt sind. Luftlager zwischen dem Scharnierbolzen 205 und dem Schlitten 207 sowie zwischen dem Schlitten 207 und den Blattsegment B1,B3 werden durch das Scharnierbolzen 205 mit Druckluft versorgt. Bei diesem Ausführungsbeispiel ist das elektromagnetisch induzierte Feld parallel zu den Drehachsen v1,v2 ausgerichtet, während der Aktuator 20, unten, einen Linearmotor aufweist, bei dem eine Vielzahl von Erregerwicklungen 208 des Stators jeweils radial zu den Drehachsen v1,v2 der Blattsegmente B1,B3 ausgerichtet sind, und der konzentrisch und koaxial zu dem Scharnierbolzen 205 angeordnete Schlitten 207 eine Vielzahl korrespondierender ringförmiger Permanentmagnete 209 aufweist. Der Linearmotor erlaubt eine exakte Positionierung des Schlittens 207, sodass der Verstellwinkel δ für die Blattsegmente B1,B3 sehr exakt eingestellt und variiert werden kann. Die Verstellvorrichtung ist dazu ausgebildet, beträchtlichen aerodynamisch bewirkten Sogkräften sowie Zentrifugalkräften standzuhalten, wobei die Flügelsegmente B1,B3 in jedem Längsabschnitt A1-An des Rotorblatts 1 individuell verstellbar und arretierbar sind.

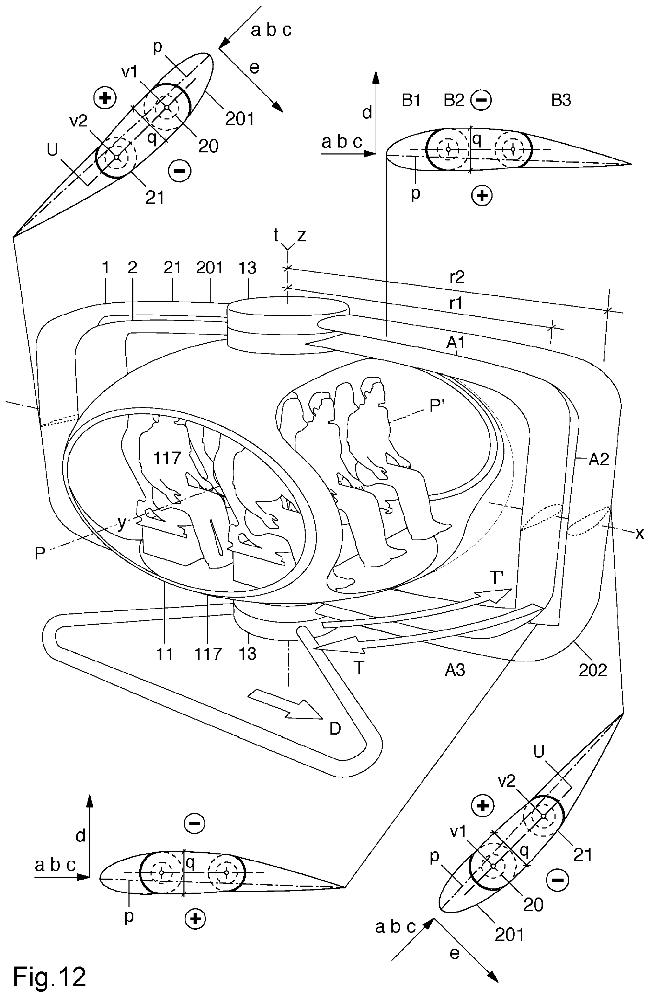

**Fig. 12** zeigt den Flugbetrieb eines Drehflügelfahrzeugs 11 mit einer besonders vorteilhaften Drehflügelkinematik 10 für zwei Rotormodule 2 mit den Radien r2,r3, die mit gegensinniger Drehrichtung T,T' um eine von der Hochachse z gebildeten Rotationsachse t und um eine Kabine 117 für sechs Passagiere rotieren. Die Kabine 117 hat die Form eines Ellipsoids, das an einem oberen und unteren Scheitel jeweils eine Nabe mit Motorgeneratoren 13 aufweist, an die zwei Rotormodule 2 mit jeweils zwei bügelförmig ausgebildeten Rotorblättern 1 angeschlossen sind. Die Motorgeneratoren 13 treiben die gegenläufiger Drehrichtung T,T' rotierenden Rotormodule 2 an. Die bügelförmig ausgebildeten Rotorblätter 1 sind in drei Längsabschnitte A1-A3 untergliedert. Während das variable, asymmetrische Flügelprofil 201 in den oberen und unteren Längsabschnitten A1,A3, wie am oberen und unteren Blattrand gezeigt, die Auftriebskraft d erzeugen, bewirkt die Drehflügelkinematik 10 in den mittleren Längsabschnitten A2 mit der Länge g eine in Fahrtrichtung D ausrichtbare Schubkraft e. Für die Einhaltung einer bestimmten Standposition des Flugbetriebs schaltet die Drehflügelkinematik 10 die Längsabschnitte A2 der Rotorblätter 1 in den Standby-Betrieb, sodass sich die Schubkräfte e mit einer neutralen Blattstellung gegenseitig eliminieren und bei Seitenwind, Turbulenzen und anderen äußeren Kräften das variable, asymmetrische Flügelprofil 201 genutzt wird, um gezielt Schubkräfte e als Gegenkräfte zu aktivieren, sodass das Drehflügelfahrzeug 11 die jeweilige Flugposition exakt einhalten kann. Bei dem Lufttaxi werden mittels der Flügelkette 203 in den Längsabschnitten A1,A3 der Rotorblätter 1 große Auftriebskräfte und in dem Längsabschnitt A2 mit der Länge g hohe Schubkräfte arbeitsteilig erzeugt. Der Elektroantrieb mittels der Motorgeneratoren 13 benötigt mit einer Antriebsleistung von 150 kW für jeden der beiden Motorgeneratoren 13 vergleichsweise wenig Energie.

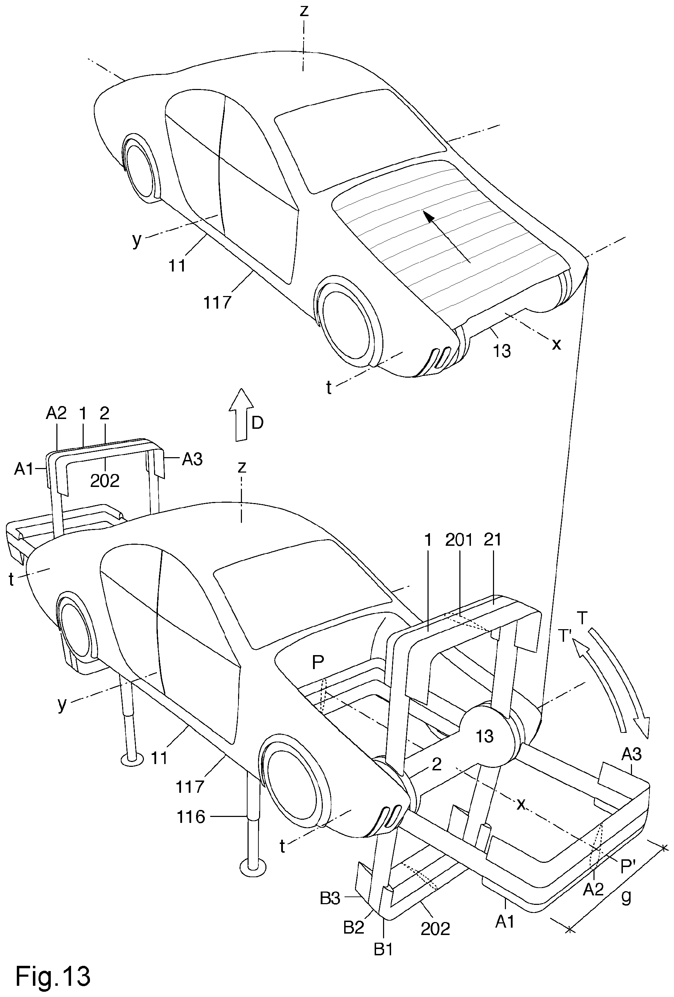

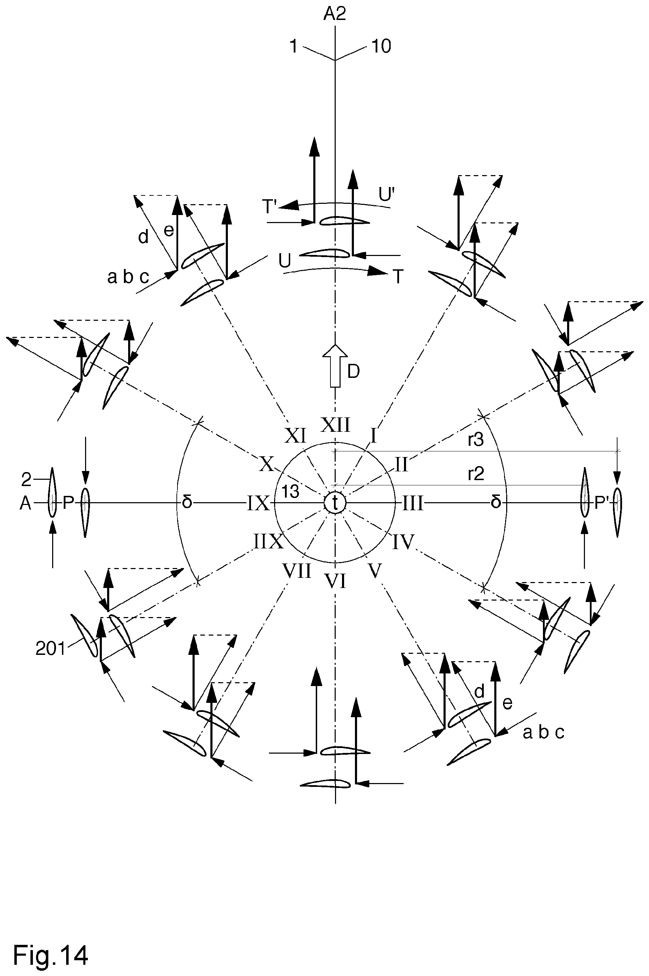

**Fig. 13** zeigt ein Drehflügelfahrzeug 11, das als ein flug- und straßenverkehrstauglicher Pkw für vier Personen ausgebildet ist. Der Pkw ist beispielhaft 5,9 m lang, 1,9 m hoch und 2,1 m breit. Am vorderen Ende der Frontpartie und am hinteren Ende der Heckpartie ist jeweils eine parallel zu der Querachse y angeordnete Rotationsachse t für jeweils zwei von Motorgeneratoren 13 angetriebene und mit gegensinniger Drehrichtung T,T' rotierende front- und heckseitige Rotormodule 2 vorgesehen. Im Fahrbetrieb des Pkw sind die insgesamt acht bügelförmigen Rotorblätter 1 jeweils in einen Hohlraum der Front- und Heckpartie eingeklappt und werden durch nicht näher bezeichnete Schiebehauben abgedeckt. Das Drehflügelfahrzeug 11 hat vier Teleskopstützen 116, die für den Startbetrieb ausgefahren werden, sodass die insgesamt vier Rotormodule 2 ausgeklappt und frei rotieren können, um mittels der Motorgeneratoren 13 an den Drehachsen t angetrieben und auf Drehzahl gebracht werden können. Mit einer Drehzahl von 800 Umdrehungen pro Minute oder niedriger hebt das Fahrzeug bevorzugt ab und wechselt in den Flugbetrieb, wobei die Teleskopstützen 116 hydraulisch eingezogen werden. Die Rotorblätter 1 weisen jeweils drei Blattsegmente B1-B3 auf, deren Drehflügelkinematik 10 in Fig 14-15 näher erläutert wird. Im Flugbetrieb bewirken die Längsabschnitte A2 der bügelförmig ausgebildeten Rotorblätter 1 den notwendigen Auftrieb, wobei sie an den Wendepunkten P,P' des Durchmessers der Umlaufbahn U, wie in Fig. 14 gezeigt, jeweils ihre Orientierung von der Außenseite zu der Innenseite der Umlaufbahn U wechseln. Die Längsabschnitte A1,A3 der bügelförmigen Rotorblätter 1 dienen als Leitwerk des Drehflügelfahrzeugs 11.

**Fig. 14** zeigt den Steigflug des Drehflügelfahrzeugs 11 nach Fig. 13 in einem schematischen Vertikalschnitt. Man erkennt die mit gegensinniger Drehrichtung T,T' auf getrennten Umlaufbahnen U rotierenden Rotormodule 2 mit den Radien r2,r3. Im Steigflug nimmt der Durchmesser mit den Wendepunkten P,P' eine horizontale Stellung ein, sodass die resultierende Anströmung c der Rotorblätter 1 in den Umlaufpositionen I-XII der Umlaufbahnen U,U' mit Ausnahme der Umlaufpositionen III,IX für den Durchmesser mit den Wendepunkten P,P' eine aus der Auftriebskraft d des asymmetrischen Flügelprofils 201 abgeleitete Schubkraft e erzeugt, mit der das Drehflügelfahrzeug 11 aus dem Stillstand in den Steigflug übergehen kann. Dazu ist bevorzugt mindestens eine Leistung von jeweils 150kW der beiden in Fig. 13 dargestellten Motorgeneratoren 13 an der vorderen und hinteren Rotationsachse t erforderlich, wobei die beiden Rotormodule 2 mit einer Drehzahl von 800 Umdrehungen oder weniger pro Minute rotieren. Für die Drehflügelkinematik 10 bedeutet dies 26 Lastwechsel pro Sekunde.

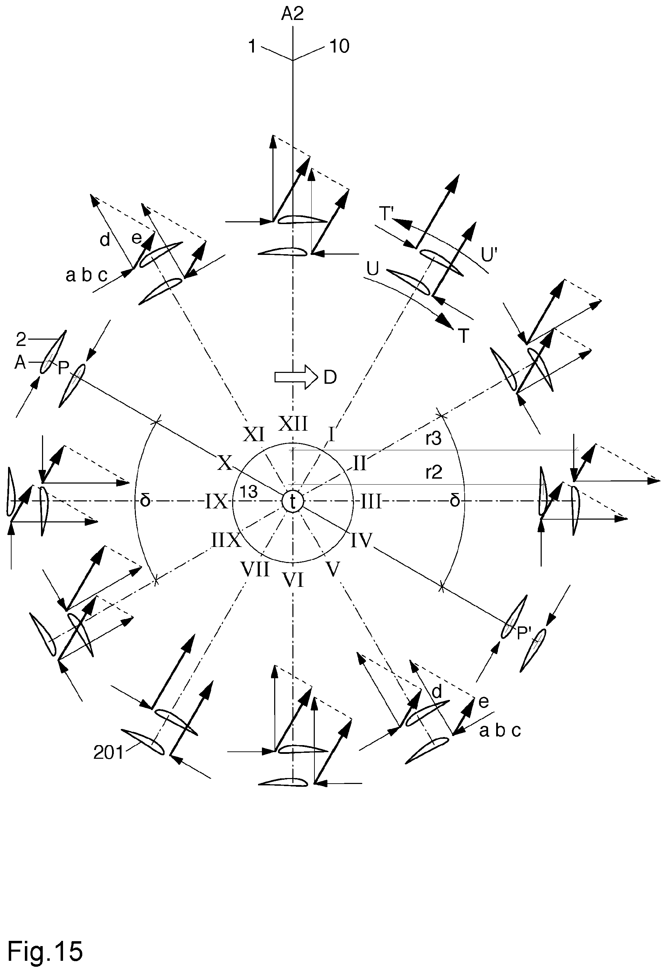

**Fig. 15** zeigt exemplarisch zwei mit gegensinniger Drehrichtung T,T' auf getrennten Umlaufbahnen U rotierende Rotormodule 2 mit den Radien r2,r3 des Drehflügelfahrzeugs 11 nach Fig. 13-14 in einem schematischen Vertikalschnitt. Gegenüber dem Vertikalschnitt nach Fig. 14 nimmt der Durchmesser mit den Wendepunkten P,P' eine durch die Ziffern IV, X gekennzeichnete Umlaufposition der Umlaufbahnen U ein, wobei aus der Auftriebskraft d in allen Umlaufpositionen I-XII mit Ausnahme der Umlaufpositionen IV, X, eine nach oben und in Fahrtrichtung D gerichtete Schubkraft e resultiert. Der Verstellbereich für den Durchmesser mit den Wendepunkten P,P' ist durch den Verstellwinkel δ gekennzeichnet. Im Geradeausflug rotieren die beiden Rotormodule 2 mit 800 Umdrehungen pro Minute um die Rotationsachse t.

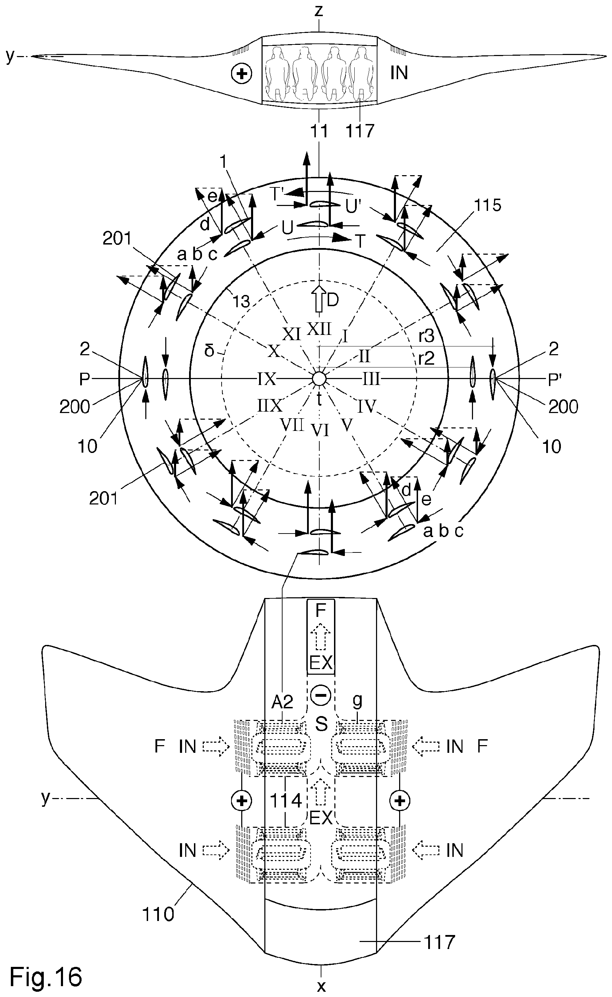

**Fig. 16** zeigt ein Drehflügelfahrzeug 11, das als ein Flugzeug mit einer Tragfläche ausgebildet ist, bei dem vier Rotormodule 2 vollständig in die Tragfläche integriert sind. Die Rotormodule 2 bestehen jeweils aus paarweise angeordneten Rotorblättern, die mit gegensinniger Drehrichtung T,T' auf zwei konzentrisch und koaxial zueinander angeordneten Umlaufbahnen mit den Radien r2,r3 um eine gemeinsame Rotationsachse t rotieren. Die Anordnung der Rotormodule 2 entspricht weitgehend dem in Fig. 13-15 erläuterten Ausführungsbeispiel, mit dem Unterschied, dass die vier Rotormodule in die Tragfläche des Flugzeugs integriert sind und jeweils in ein Gehäuse 114 mit einem der Flügelnase der Tragfläche zugewandten Eingang IN und einem der Flügelhinterkante zugewandten Ausgang EX für die Strömung F ausgebildet sind. Die bügelförmig ausgebildeten Rotorblätter 1 der vier Rotormodule 2 weisen jeweils ein mittleres Blattsegment B2 mit der Länge g auf, das parallel zu der Querachse y des Flugzeugs angeordnet ist. Die Blattsegmente B1,B3 der mit gegensinniger Drehrichtung T,T' rotierenden Rotorblätter sind ebenfalls verstellbar, sodass aerodynamisch bewirkte Kräfte parallel zu der Rotationsachse t dazu dienen, das Flugzeug im Schwebeflug zu stabilisieren und innerhalb des Gehäuses 114 eine Luftströmung in dem Strömungskanal zu erzeugen, die der Ableitung von Wärme aus den koaxial und konzentrisch zu der Rotationsachse t angeordneten Motorgeneratoren 13 dient. Die Wendepunkte P,P' des Durchmessers sind beim Senkrechtstart horizontal ausgerichtet, wobei die Saugseite (-) des variablen asymmetrischen Flügelprofils 201 in beiden Hälften der Umlaufbahn U senkrecht nach oben gerichtet ist, sodass der von den gegenläufig rotierenden Rotorblättern 1 bewirkte Auftrieb für den Senkrechtstart genutzt werden kann. Entsprechend der Drehflügelkinematik 10 wird für die Aufnahme des Geradeausflugs der Durchmesser mit den Wendepunkten P,P' allmählich in die Vertikale orientiert, sodass aus der von den vier Rotormodulen bewirkten Auftriebskraft d eine in Fahrtrichtung D wirksame Schubkraft e ableitbar ist. Die vollständige Integration der vier Rotormodule 2 in die Tragfläche dieses Lufttaxis für vier Personen zeigt beispielhaft für Flugzeuge mit Tragflächen die Möglichkeit des Senkrechtstarts und den Übergang in den Geradeausflug an einem Nurflügler. Diese innovative Antriebstechnik ist leise und aufgrund der direkt aus der Auftriebskraft d abgeleiteten Schubkraft e sowohl im Senkrechtstart als auch beim Geradeausflug sehr effektiv.

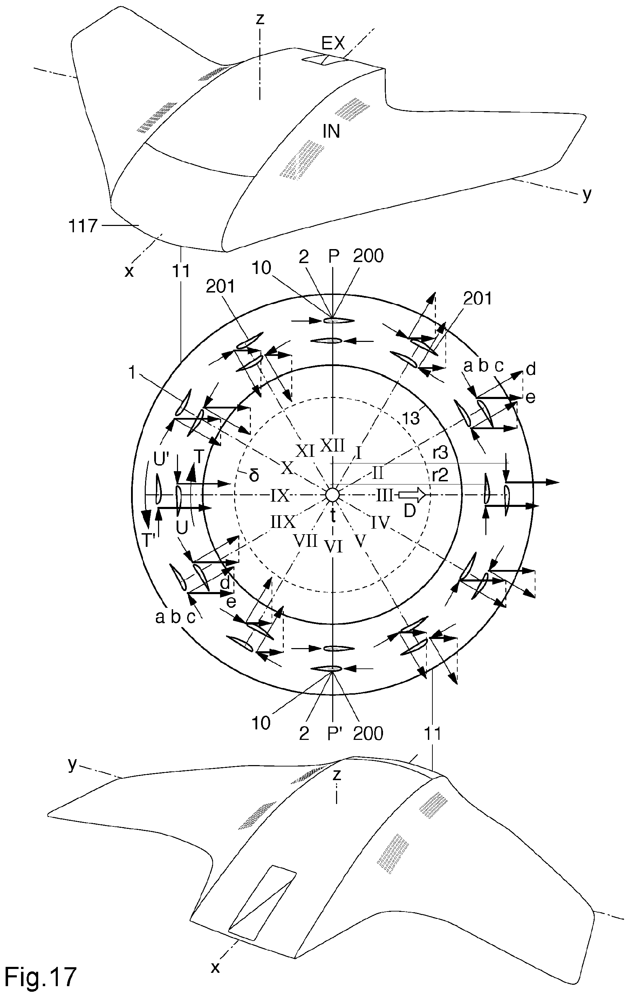

**Fig. 17** zeigt das Flugzeug nach Fig. 16 im Geradeausflug, oben in einer perspektivischen Übersicht, in der Mitte mit einer senkrechten Ausrichtung der Wendepunkte P,P' für das variable asymmetrische Flügelprofil 201, die den Geradeausflug ermöglicht, und unten in Übersichtsperspektive des Nurflüglers von hinten. Der Strömungskanal eines Rotormoduls 2 wird jeweils quer zur Fahrtrichtung D durchströmt. Innerhalb des Strömungskanals ist der Durchmesser mit den Wendepunkten P,P' so orientierbar, dass aus der Antriebskraft d für den Geradeausflug eine Schubkraft e parallel zu der Längsachse x des Flugzeugs resultiert. Die von der Drehflügelkinematik bewirkten aerodynamischen Kräfte sind an zwölf Umlaufpositionen I-XII exemplarisch dargestellt. Unmittelbar an dem Durchmesser mit den Wendepunkten P,P', an dem die Blattverstellung des variablen asymmetrischen Flügelprofils erfolgt, werden keine Auftriebskräfte d bewirkt, wobei trotz der turbulenten Strömung F in dem Strömungskanal auf allen weiteren Umlaufpositionen das asymmetrische Flügelprofil 201 erhebliche Auftriebskräfte d bewirkt, aus denen jeweils eine Schubkraft e ableitbar ist. Mit einem Verstellbereich δ von 360° kann die Schubkraft e in jede beliebige Richtung gelenkt werden.

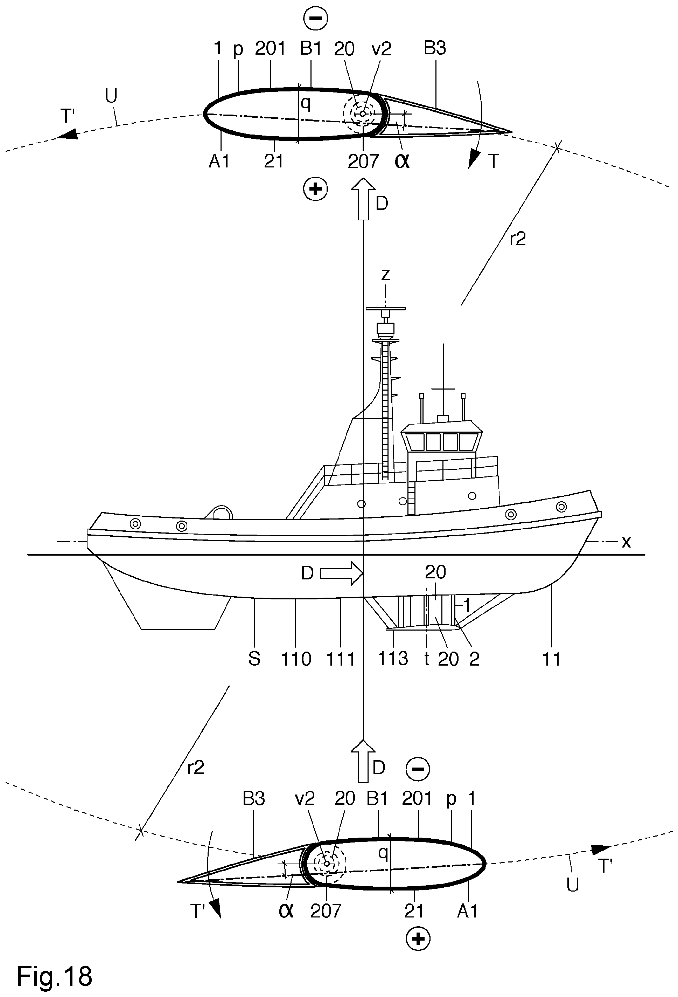

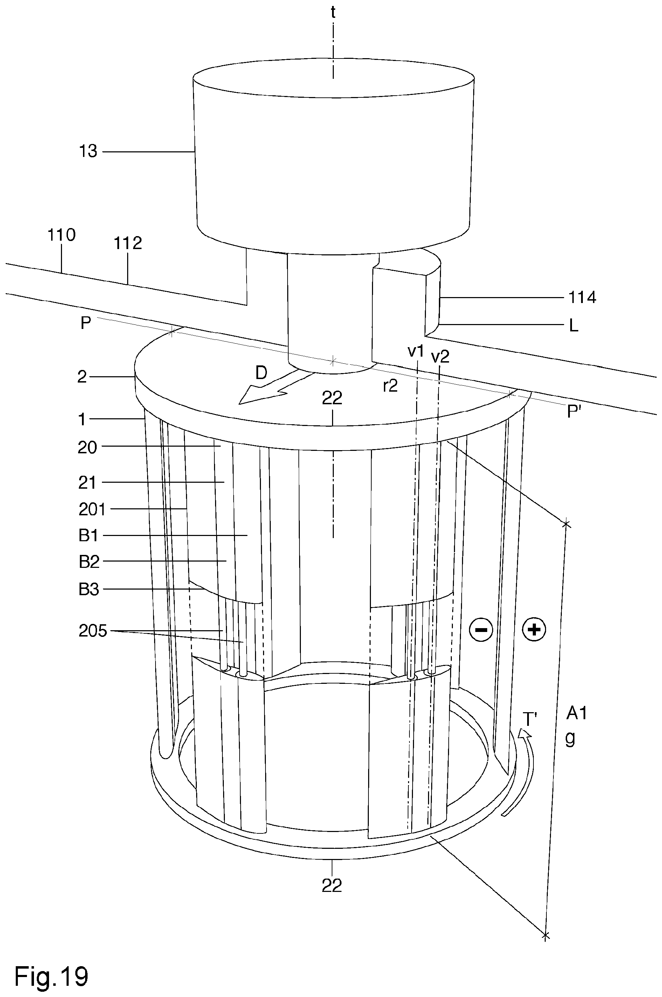

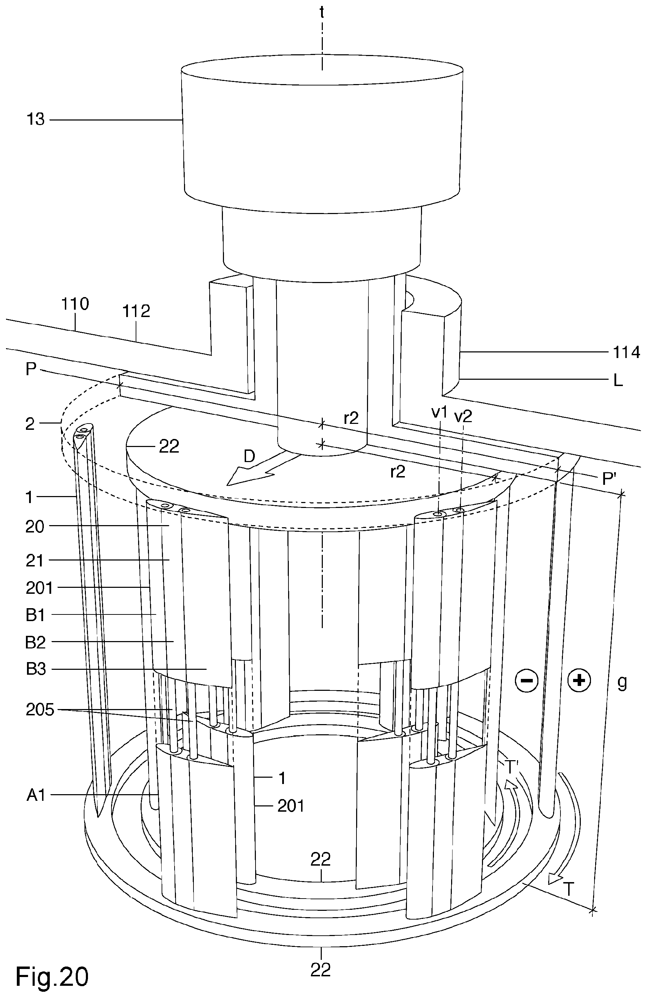

**Fig. 18** zeigt ein Drehflügelfahrzeug 11, das als ein Schlepp- und Bugsierschiff ausgebildet ist und zwei elektrisch angetriebene Rotormodule 2 mit jeweils sechs zweiteilig ausgebildeten kinematischen Rotorblättern 1 aufweist. Die Saugseiten (-) der insgesamt sechs Rotorblätter 1 eines Rotormoduls 2 sind in Fahrtrichtung D ausgerichtet. Bei diesem Ausführungsbeispiel ist das vordere Blattsegment B1 als ein Längsträger 21 ausgebildet, an den an der hinteren Drehachse v2 ein hinteres Blattsegment B3 angelenkt ist. Die Rotormodule 2 sind in der vorderen Hälfte des Schiffs steuer- und backbordseitig der Längsachse x angeordnet und rotieren jeweils mit gegensinniger Drehrichtung T,T'. Der flache Schiffsboden 112 bildet zusammen mit horizontalen und vertikalen Leitflächen ein Strömungsleitwerk S für die Anströmung der sechs kinematischen Rotorblätter 1 des Rotormoduls 2. Die Detailschnitte zeigen eine zweiteilige Ausbildung der Rotorblätter 1, die jeweils an ihrem oberen und unteren Ende Aktuatoren 20 aufweisen, die dem in Fig. 19 gezeigten Ausführungsbeispiel entsprechen. Wie in Fig. 17 gezeigt, rotieren die Rotorblätter 1 um die vertikale Rotationsachse t und werden von einem innerhalb des Rumpfs 111 angeordneten Motorgenerator 13 elektrisch angetrieben. Im Unterschied zu einem Voith-Schneider-Propeller arbeiten die kinematischen Rotorblätter 1 als Auftriebsläufer und können mit einer vergleichsweise wesentlich höheren Drehzahl betrieben werden. Dabei erzeugt jedes Rotorblatt 1 mit dem variablen asymmetrischen Flügelprofil 201 eine Auftriebskraft d, aus der eine Schubkraft e resultiert. Wie in Fig. 20-21 gezeigt, ist die Schubkraft e in jede beliebige Fahrtrichtung d ausrichtbar, sodass das Schlepp- und Bugsierschiff seine Fahrtrichtung D in Sekundenschnelle in jede beliebige Richtung ändern kann.

**Fig. 19** zeigt ein alternatives Rotormodul 2 für den Antrieb des Schlepp- und Bugsierschiffs nach Fig. 16. Das Rotormodul 2 besitzt jeweils sechs kinematische Rotorblätter 1 mit einem vorderen B1, mittleren B2 und einem hinteren Blattsegment B3. Das mittlere Blattsegment B2 bildet einen in sich starren Längsträger 21, an den, wie in Fig. 9-11 gezeigt, das vordere Blattsegment B1 und das hintere Blattsegment B3 angelenkt sind. Die Drehflügelkinematik 10 des Rotormoduls 2 wird so gesteuert, dass der Durchmesser mit den Wendepunkten P,P' in die jeweils gewünschte Fahrtrichtung D ausrichtbar ist. An dem Durchmesser mit den Wendepunkten P,P' wechselt jeweils die Saugseite (-) und die Druckseite (+) des Rotorblatts 1 die Orientierung zu der Umlaufbahn U, sodass die Saugseiten (-) der Rotorblätter 1 in beiden Hälften der Umlaufbahn U zur Fahrtrichtung D orientiert sind. Die Rotorblätter 1 sind der Länge g nach in vier Längsabschnitte A1-A4 untergliedert, sodass jeder Längsabschnitt mindestens zwei Aktuatoren 20 für die Blattverstellung aufnehmen kann. Die oberen Enden des Längsträgers 21 sind mit einem scheibenförmigen Querträger 22 biegesteif verbunden, während die unteren Enden der Längsträger 21 mit einem ringförmigen Querträger 22 biegesteif verbunden sind, sodass ein in sich biege-, schub- und torsionssteifes Rotormodul 2 gebildet wird.

**Fig. 20** zeigt ein weiteres Ausführungsbeispiel für den Antrieb des Schlepp- und Bugsierschiffs nach Fig. 16. Zwei mit gegensinniger Drehrichtung rotierende Rotormodule 2 werden von einem innerhalb des Rumpfs 110 angeordneten Motogenerator 13 mit zwei konzentrisch und koaxial zueinander angeordneten Wellen und einem Getriebe angetrieben. Auch hier sind die Rotorblätter 1 in Längsabschnitte A1-An untergliedert, sodass jeder Längsabschnitt mindestens zwei Aktuatoren 20 für die Blattverstellung aufweist. Die Aktuatoren werden, wie in Fig. 9-11 gezeigt, an einem Scharnierbolzen 205 linear geführt. Die Längsträger 21 der Rotorblätter 1 der beiden Rotormodule 2 sind jeweils an ihrem oberen und unteren Ende biegesteif mit Querträgern 22 verbunden, die entweder scheibenförmig oder ringförmig ausgebildet sind.

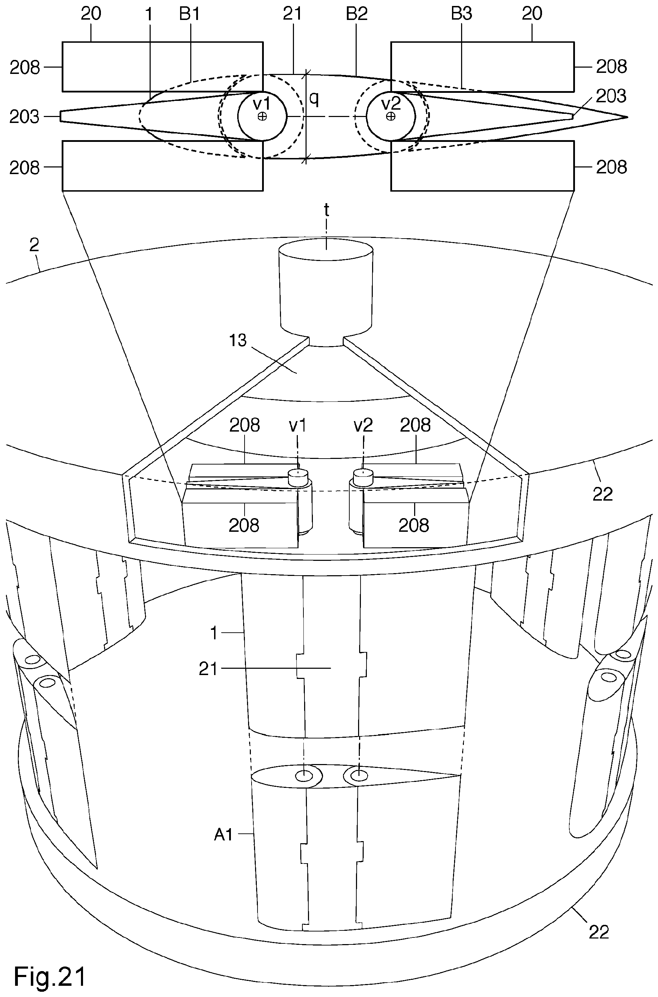

**Fig. 21** zeigt eine Ausführungsvariante des Rotormoduls 2 für ein Wasserfahrzeug nach Fig. 16-18, bei dem die Aktuatoren 20 für die Blattverstellung der Rotorblätter 1 ferromagnetische Stellhebel 203 aufweisen, die jeweils am oberen und am unteren Ende eines Rotorblatts 1 mittels von zwei einander gegenüber liegenden eines Elektromagneten mit Erregerwicklungen 208 geschaltet werden. Die elektromagnetischen Aktuatoren 20 sind jeweils in die als Hohlkörper ausgebildeten scheibenförmigen Querträger 22 des Rotormoduls 2 integriert.

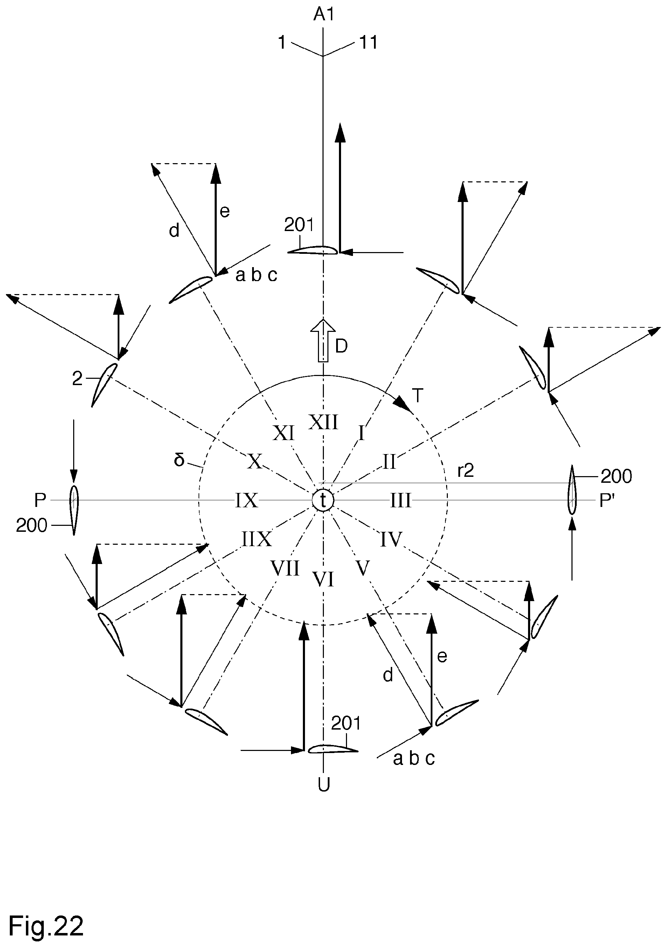

**Fig. 22** zeigt exemplarisch zwölf unterschiedliche Umlaufpositionen I-XII des variablen Flügelprofils 201 auf der kreisförmigen Umlaufbahn U für das Wasserfahrzeug nach Fig. 16 im Anfahrbetrieb. Wie in Fig. 16 dargestellt wechselt die Saugseite (-) des variablen asymmetrischen Flügelprofils 201 bezogen auf die Fahrtrichtung D im vorderen Umlauf zur Außenseite der Umlaufbahn U und im hinteren Umlauf zur Innenseite der Umlaufbahn U, sodass das variable Flügelprofil 22 in Form eines Clark-YM-15-Profils bei einer Umlaufgeschwindigkeit b eine aus der Auftriebskraft d resultierende, durch Pfeile in Fahrtrichtung D gekennzeichnete Schubkraft e bewirkt. An der Umlaufposition III wechselt die Saugseite (-) des variablen Flügelprofils 20 von der Außenseite auf die Innenseite der Umlaufban U, während an der Umlaufposition IX die Saugseite (-) des variablen Flügelprofils 20 von der Innenseite auf die Außenseite der Umlaufban U wechselt und dabei jeweils in einer Übergangsstellung ein symmetrisches Flügelprofil 200 aufweist. Im luv- und leeseitigen Umlauf bewirkt deshalb die resultierende Anströmung c als Vektorsumme aus der Strömungsgeschwindigkeit a und der Umlaufgeschwindigkeit b des Rotormoduls 2 eine in Fahrtrichtung D gerichtete Schubkraft e, die bei dem asymmetrischen Flügelprofil 201 etwa um ein Drittel größer ist als bei einem symmetrischen Flügelprofil 200. Daraus folgt ein wesentlich verbesserter Wirkungsgrad des Schiffsantriebs.

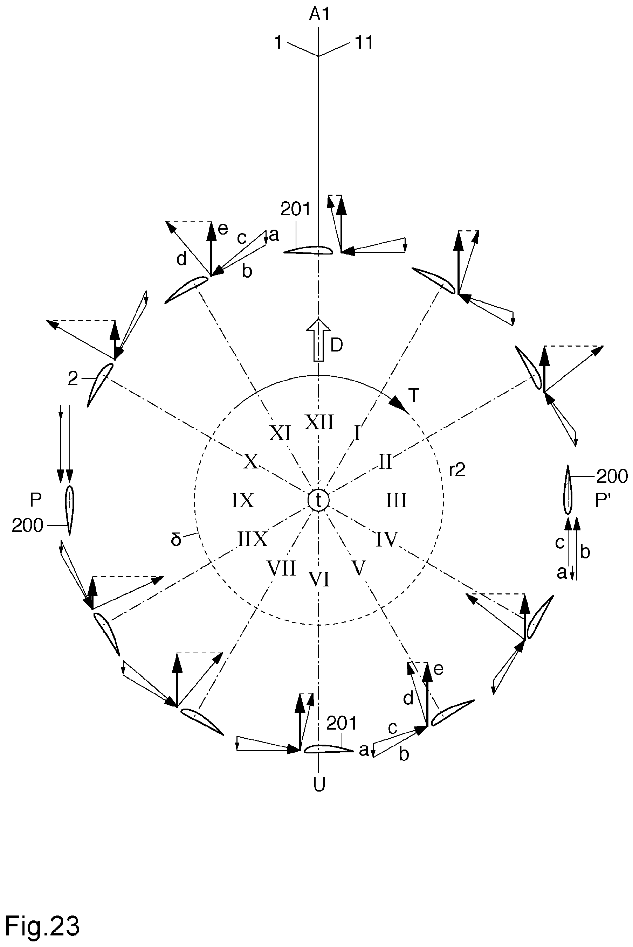

**Fig. 23** zeigt exemplarisch zwölf unterschiedliche Umlaufpositionen I-XII des variablen Flügelprofils 201 für das Wasserfahrzeug nach Fig 16 im Fahrbetrieb. Im Vergleich zu dem in Fig. 20 dargestellten Anfahrbetrieb reduziert sich im Fahrbetrieb, wie an den zwölf dargestellten Umlaufpositionen I-XII gezeigt, die von dem variablen Flügelprofil 201 bewirkte Schubkraft e unter dem Einfluss der als Strömungsgeschwindigkeit a bezeichneten Fahrtgeschwindigkeit. Aus diesem Grund eignet sich diese Art des Schiffsantriebs für langsam fahrende Wasserfahrzeuge mit einer auf etwa sieben bis acht Knoten begrenzten Fahrtgeschwindigkeit. Die im Vergleich zum Voith-Schneider-Propeller größere Umlaufgeschwindigkeit b verringert jedoch den negativen Einfluss der Fahrtgeschwindigkeit.

**Fig. 24** zeigt den Rumpf 110 eines Wasserfahrzeugs für Binnengewässer, oben in einer schematischen Untersicht, in der Mitte als perspektivische Untersicht und unten in einer Frontalansicht. Der Rumpf 110 weist an Bug und Heck einen Spantausfall 111 auf, sodass steuer- und backbordseitige Einbuchtungen für die Installation von insgesamt vier Rotormodulen 2 gebildet werden. Die an Bug und Heck paarweise angeordneten Rotormodule 2 rotieren jeweils mit dem Radius r1 mit gegensinniger Drehrichtung T,T' um eine vertikale Rotationsachse t und weisen innerhalb des Radius r1 einen Strömungsleitkörper 113 mit einem Reuleaux-dreieckförmigen Querschnitt auf, der zusammen mit dem Spantausfall 111 das Strömungsleitwerk S für ein Rotormodul 2 bildet. Das Reuleaux-Dreieck des Strömungsleitkörpers 113 ist drehbar mit dem Rumpf 110 verbunden, sodass die Spitze des Reuleaux-Dreiecks, wie hier gezeigt, in Fahrtrichtung D ausgerichtet werden kann. Das Wasserfahrzeug hat eine Längsachse x, eine Querachse y und eine Hochachse z. Der Rumpf 110 weist einen U-Spant auf und kann an unterschiedliche Funktionen angepasst werden, sodass das Wasserfahrzeug als ein schnellfahrendes Frachtschiff, als ein Passagierschiff oder als eine Fähre ausgebildet werden kann. Mit der in Fig. 23 näher dargestellten Drehflügelkinematik 10 der Rotormodule kann das Wasserfahrzeug die Fahrtrichtung D sehr schnell ändern und vorwärts, rückwärts oder seitwärts fahren. Der Strömungsleitkörper 113 bewirkt eine günstige Anströmung der sechs Rotorblätter des Rotormoduls 2, die in Fig. 23 am Beispiel von zwölf Umlaufpositionen I-XII näher erläutert wird.

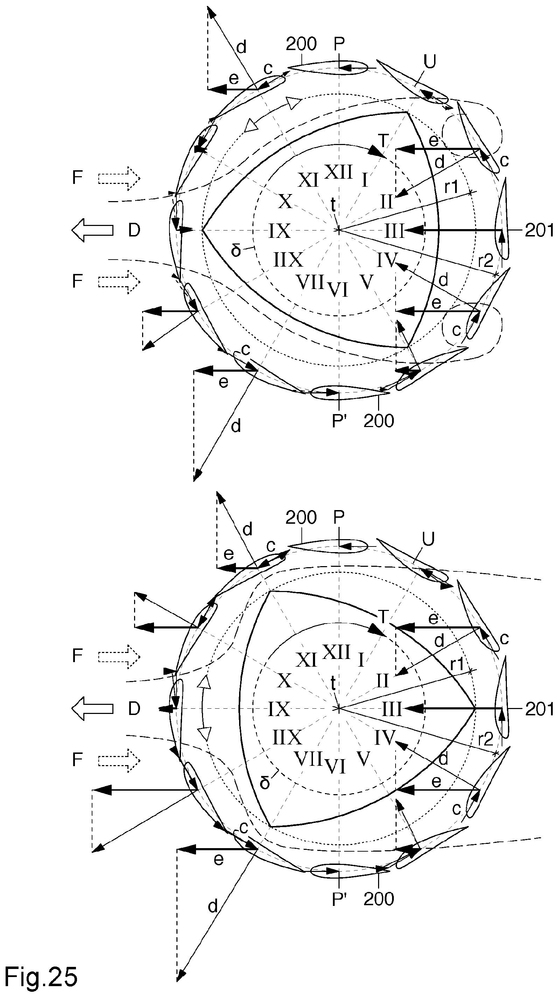

**Fig. 25** zeigt ein Rotormodul 2 des Rumpfs 110 nach Fig. 22, das mit dem Radius r2 auf der Umlaufbahn U um eine vertikale Rotationsachse t rotiert und einen innerhalb der Umlaufbahn U angeordneten Strömungsleitkörper 113 mit dem Radius r1 aufweist, der im Querschnitt ein Reuleaux-Dreieck aufweist. Der Strömungsleitkörper 113 ist an einer koaxial und konzentrisch zu der Rotationsachse t des Rotormoduls 2 ausgerichteten Drehachse drehbar an dem in Fig. 22 gezeigten flachen Schiffsboden 112 im Bereich des Spantausfalls 111 gelagert und kann unterschiedliche Positionen bezüglich der Fahrtrichtung D einnehmen. Oben ist eine Stellung des Strömungsleitkörpers 113 dargestellt, bei der die Spitze des Reuleaux-Dreiecks in Fahrtrichtung D ausgerichtet ist, während unten das Reuleaux-Dreieck mit der stumpfen Seite in Fahrtrichtung D ausgerichtet ist. Zwar erhöht der Strömungsleitkörper 113 den Strömungswiderstand des Wasserfahrzeugs - oben deutlich weniger als unten - andererseits führt die Umlenkung der Strömung F zu einer günstigen Anströmung der asymmetrischen Flügelprofile 201, deren Saugseiten (-) erfindungsgemäß in beiden Hälften der Umlaufbahn U zu der jeweiligen Fahrtrichtung D ausrichtbar sind. An den Wendepunkten P,P' nimmt das asymmetrische Flügelprofil 201 temporär die Gestalt eines symmetrischen Flügelprofils 200 an. Aufgrund der Umleitung der Strömung F bewirkt das asymmetrische Flügelprofil 201 des Rotorblatts 1 in beiden Hälften der Umlaufbahn U eine resultierende Anströmung c, sodass das Rotorblatt 1 an allen zwölf Umlaufpositionen I-XII eine Auftriebskraft d erzeugt, die eine in Fahrtrichtung gerichtete Schubkraft e bewirkt. Die Kräfte c,d,e sind jeweils für einige Umlaufpositionen exemplarisch bezeichnet.

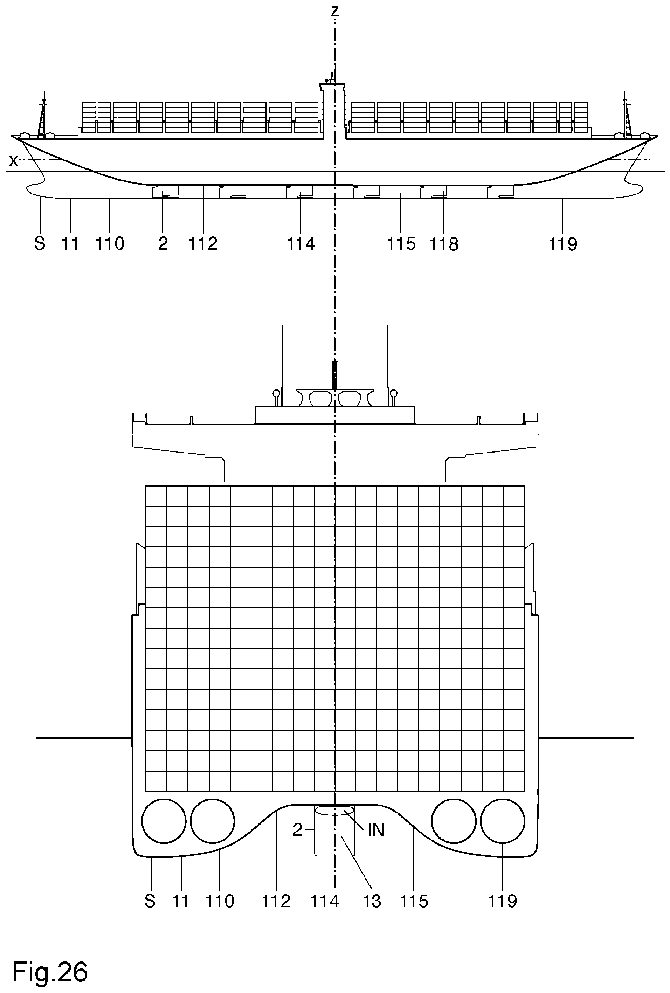

**Fig. 26** zeigt ein Wasserfahrzeug, das als ein seegängiges schnellfahrendes Containerschiff ausgebildet ist, dessen Rumpf 110 ein Strömungsleitwerk S aufweist. Das Unterwasserschiff des Rumpfs 110 weist getauchte steuer- und backbordseitigen Auftriebskörper auf, die z.B. als großvolumige Wasserstofftanks 119 genutzt werden können und die zusammen mit dem flachen Schiffsboden 112 in der Mitte einen Antriebskanal 115 bilden. Koaxial zu der Längsachse x des Schiffs sind insgesamt sechs Gehäuse 114 innerhalb dieses Antriebskanals 115 angeordnet und nehmen, wie in Fig. 25-26 gezeigt, jeweils ein Rotormodul 2 auf. Die elektrische Energie für den Betrieb der Motorgeneratoren 13 der Rotormodule 2 wird von Brennstoffzellen bereitgestellt, die aus den Wasserstofftanks 119 gespeist werden. Die sechs Gehäuse 114 nehmen jeweils ein Rotormodul 2 auf und haben einen in Fahrtrichtung D orientierten Eingang IN und einen stromabseitigen Ausgang EX, wobei sie, wie in Fig. 25 näher erläutert, vertikal durchströmt werden. Das Containerschiff ist im Wesentlichen symmetrisch zu der Hochachse z ausgebildet, sodass es in Flussmündungen und Häfen gleichermaßen vorwärts wie rückwärts fahren kann und ist mittels der Drehflügelkinematik 10 für die Rotormodule 2 mit sehr gut manövrierbar.

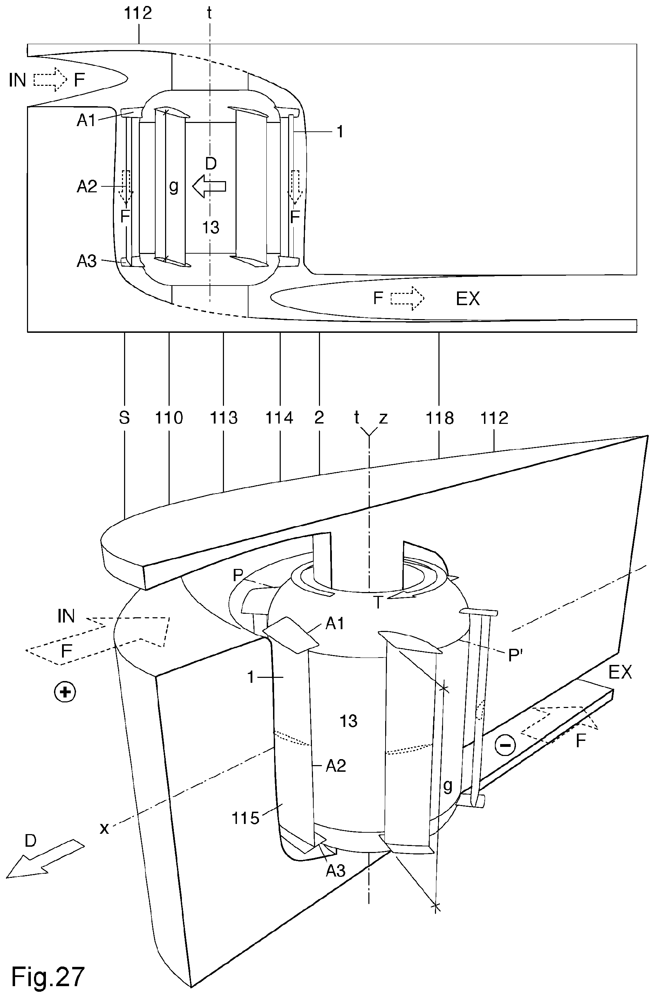

**Fig. 27** zeigt das Gehäuse 114 für eines der sechs Rotormodule 2 des Wasserfahrzeugs nach Fig. 22, oben in einem schematischen Querschnitt und unten in einer perspektivischen Ausschnittdarstellung, mit Darstellung eines in Fahrtrichtung D ausgerichteten oberen Eingangs IN und eines unteren Ausgangs EX für die Strömung F. An der Druckseite (+) des als ein symmetrischer Flügelstumpf 118 ausgebildeten Gehäuses 114 ist der Eingang IN für die Strömung F am oberen Ende des Gehäuses 114 angeordnet, während der Ausgang EX für die Strömung F am unteren Ende des Flügelstumpfs 118 an der Saugseite (-) im Totwasser liegt. Die Strömung F durchströmt das Gehäuse 114 in einem vertikal angeordneten, hohlzylinderförmigen Antriebskanal 115 von oben nach unten, wobei ein getauchter Motorgenerator 13 konzentrisch und koaxial zu der Rotationsachse t in der Mitte des Antriebskanals 115 angeordnet und an seinem oberen Ende mit dem Rumpf 110 des Wasserfahrzeugs verbunden ist. Sechs Rotorblätter 1 des Rotormoduls 2 sind bügelförmig ausgebildet und der Länge g nach in drei Längsabschnitte A1-A3 untergliedert. Die Rotorblätter 1 an den Längsabschnitte A1 und A3 treiben die vertikale Strömung F innerhalb des Antriebskanals 115 an, während die Rotorblätter 1 in den Längsabschnitten A2 mit der Länge g für die Erzeugung der Schubkraft e in Fahrtrichtung D ausgebildet sind, wie in Fig. 20 gezeigt.

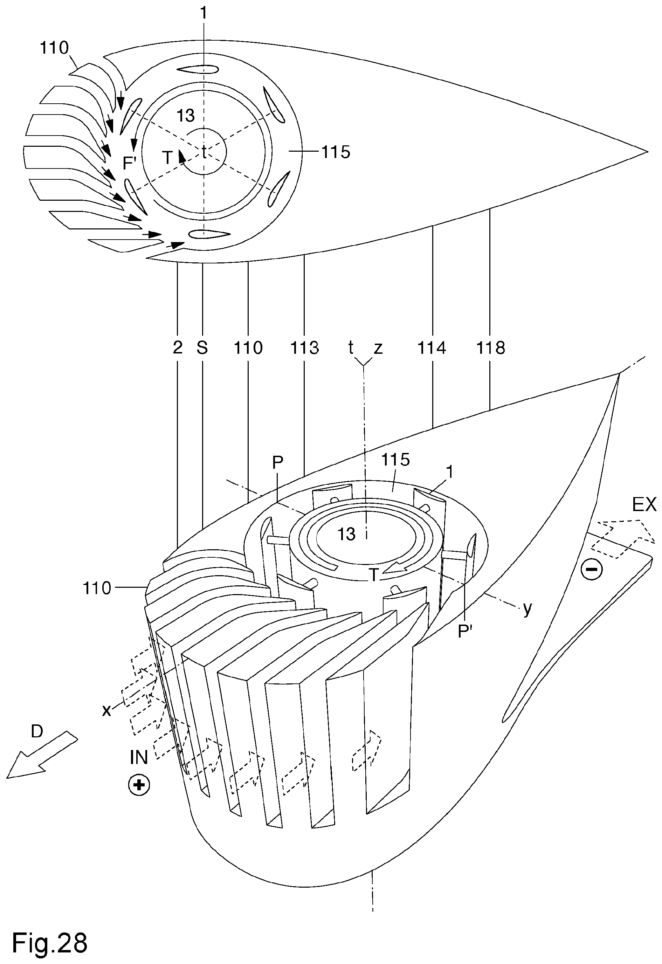

**Fig. 28** zeigt eine alternative Ausbildung des Gehäuses 114 für eines der sechs Rotormodule 2 des Wasserfahrzeugs nach Fig. 24. Das Gehäuse 114 ist als ein mit seiner Längsachse x koaxial zu der Längsachse x des Wasserfahrzeugs ausgerichteter Flügelstumpf 118 ausgebildet und weist in seinem Inneren einen hohlzylinderförmigen, senkrecht zu der Längsachse x angeordneten Antriebskanal 115 auf, in dem das Rotormodul 2 um die Rotationsachse t des getauchten Motorgenerators 13 rotiert. Kammartig ausgebildete Strömungsleitkörper 113 an der in Fahrtrichtung D ausgerichteten Druckseite (+) des Flügelstumpfs 118 bewirken innerhalb des Antriebskanals 115 eine entgegen der Drehrichtung T des Rotormoduls 2 gerichtete zirkulare Strömung F'. Der Ausgang EX für die Strömung F liegt auf der strömungsabgewandten Saugseite (-) des Flügelstumpfs 118 am unteren Ende des Gehäuses 114 und begünstigt den Abfluss der Strömung aus dem Antriebskanal 115. Mit dieser Anordnung für das Rotormodul 2 wird der in Fig. 21 beschriebene negative Einfluss der Fahrtgeschwindigkeit auf die durch das Rotormodul 2 erzeugte Schubkraft e aufgehoben, sodass der Schiffsantrieb auch für hohe Fahrtgeschwindigkeiten besonders geeignet erscheint.

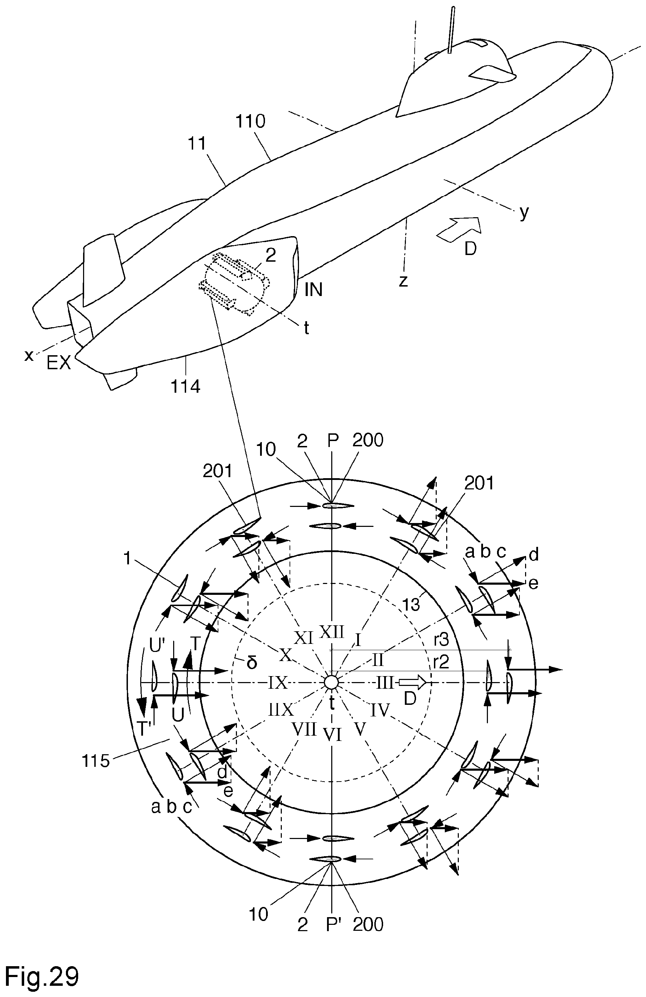

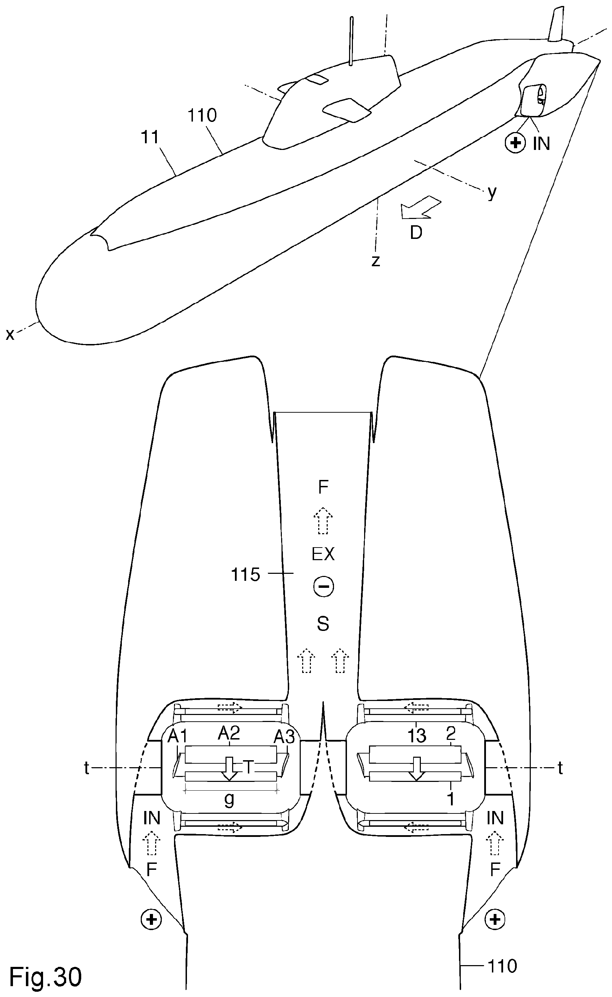

**Fig. 29** zeigt ein Drehflügelfahrzeug 11, das als ein U-Boot mit einem neuartigen geräuschlosen Heckantrieb ausgebildet ist, der von zwei parallel zu der Querachse des U-Boots angeordneten Rotormodulen 2 gebildet wird. Die Heckpartie des U-Boots weist jeweils nach strömungsdynamischen Gesichtspunkten gestaltete steuer- und backbordseitige Erweiterungen mit einem Eingang IN auf der Druckseite des Gehäuses 114 der Rotormodule 2 auf. An einem gemeinsamen Ausgang EX am Heck des U-Boots verlässt die Strömung, wie auch in Fig. 30 gezeigt, den Antriebskanal 115. Die bügelförmig mit drei Längsabschnitten A1-A3 ausgebildeten Rotorblätter 1 rotieren entweder wie in Fig.30 gezeigt auf einer Umlaufbahn U oder haben wie hier gezeigt zwei Umlaufbahnen U mit den Radien r2,r3. An den Wendepunkten P,P' eines mit einem Verstellbereich δ im Umkreis von 360° frei orientierbaren Durchmessers wechselt die Saugseite (-) der Rotorblätter 1 jeweils von der Außenseite zur Innenseite der Umlaufbahn U und umgekehrt. Dadurch kann die aus der Auftriebskraft d abgeleitete Schubkraft e der von dem Motorgenerator 13 angetriebenen Rotorblätter in jede beliebige Richtung gelenkt werden, sodass das U-Boot in Sekundenschnelle von der Geradeausfahrt abtauchen bzw. auftauchen kann. Durch die gekapselte Bauweise des Drehflügelantriebs werden keine Geräusche auf den das U-Boot umgebenden Wasserkörper übertragen.

**Fig. 30** zeigt das U-Boot nach Fig. 29 in einer bugseitigen Perspektive mit Darstellung des Eingangs IN für die Strömung am Heck. Der schematische Querschnitt unten zeigt zwei parallel zu der Querachse y des U-Boots angeordnete Rotormodule 2 mit bügelförmig ausgebildeten Rotorblättern 1, die in die Längsabschnitte A1-A3 untergliedert sind. Bei diesem Ausführungsbeispiel bewirken die Längsabschnitte A1,A3 eine Durchströmung des Antriebskanals 115 und werden von entsprechend geneigt ausgebildeten asymmetrischen Flügelprofilen 201 gebildet, während die erfindungsgemäße Drehflügelkinematik 10 in dem Längsabschnitt A2 der bügelförmigen Rotorblätter 1 ausgebildet ist wie in Fig. 29 dargestellt.

**Fig. 31** zeigt eine Drehflügelturbine 12 die als eine Wasserturbine mit horizontaler Rotationsachse t ausgebildet ist und deren Tragwerk L eine Balkenbrücke als ein in eine Richtung erweiterbares Bausystem aufweist. Ein einzelnes Rotormodul 2 der Drehflügelturbine 12 hat vier kinematische Rotorblätter 1 mit der Länge g, die jeweils in vier Längsabschnitt A1-A4 untergliedert sind und eine gerade Flügelkette 202 bilden. In jedem der vier Längsabschnitte A1-A4 sind mindestens zwei paarweise den Drehachsen v1,v2 zugeordnete Aktuatoren 20, die den in Fig. 9-11 beschriebenen Ausführungsbeispielen entsprechen, für die Betätigung der Drehflügelkinematik 10 vorgesehen. Zwischen den als Längsträger 21 ausgebildeten, mittleren Blattsegmenten B2 der Rotorblätter 1 und scheibenförmigen Querträgern 22 ist eine biegesteife Verbindung vorgesehen, sodass ein in sich biege-, schub- und torsionssteifes trommelförmiges Rotormodul 2 gebildet wird, das mit einem konzentrisch und koaxial zu der Rotationsachse t angeordneten Motorgenerator 13 verbunden ist. An einem Fließgewässer rotiert die Drehflügelturbine 12 quer zur Strömung F. Die Saugseiten (-) der Rotorblätter 1 wechseln jeweils an einem oberen und einem unteren Wendepunkt P,P' des Durchmessers der Umlaufbahn U ihre Orientierung von der Außenseite zu der Innenseite der Umlaufbahn U, wobei im luvseitigen Umlauf die Saugseite (-) der Rotorblätter 1 zu der Innenseite der Umlaufbahn U und die Saugseite (-) im leeseitigen Umlauf zu der Außenseite der Umlaufbahn U orientiert ist. Die Detailschnitte des variablen asymmetrischen Flügelprofils 201 der verstellbaren Rotorblätter 1 zeigen exemplarisch die strömungsdynamische Wirkung der asymmetrischen Flügelprofile 201 für den luv- und leeseitigen Umlauf. Wie in Fig. 31 gezeigt, bewirkt die aus der Strömungsgeschwindigkeit a und der Umlaufgeschwindigkeit b resultierende Anströmung c an dem variablen Flügelprofil 201 in jeder Umlaufposition I-XII eine aus der Auftriebskraft d abgeleitete tangentiale Antriebskraft f. Wechselt die Strömung F wie bei einem Gezeitenkraftwerk regelmäßig für mehrere Stunden die Richtung, können die Rotorblätter 1 an den Richtungswechsel der Strömung F angepasst werden und behalten dabei Ihre Drehrichtung T' bei, wobei bei einer Drehflügelturbine 12 die Saugseiten (-) der Rotorblätter 1 immer auf der Leeseite angeordnet sind. Die Anzahl der Rotorblätter 1 wächst mit der Größe der Drehflügelturbine 12, deren Tragwerk L ein skalierbares Bausystem aufweist.

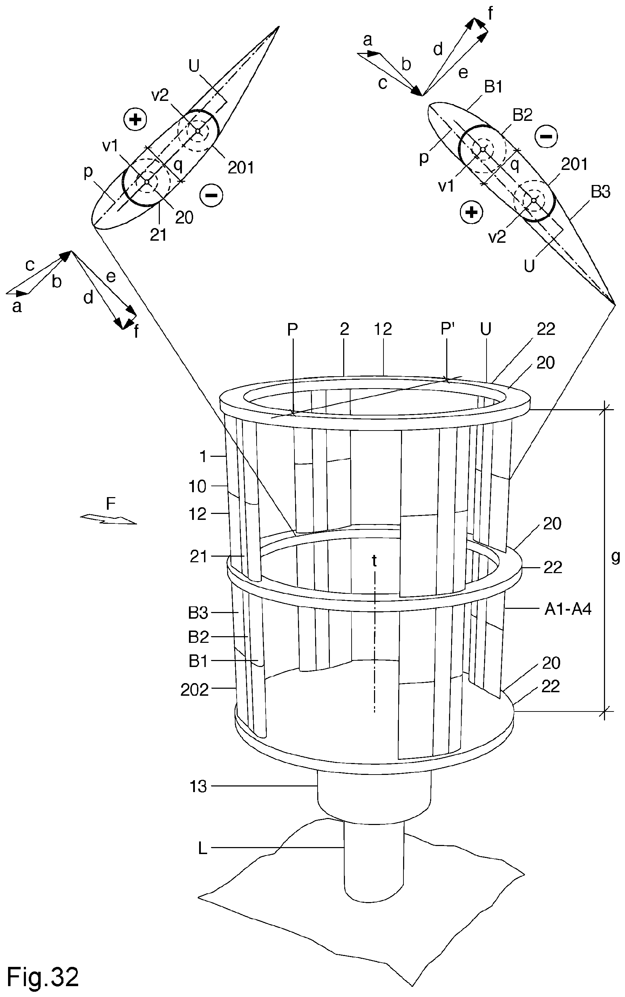

**Fig. 32** zeigt eine Drehflügelturbine 12, die als eine Wasserturbine mit vertikaler Rotationsachse t ausgebildet ist. Insgesamt vier dreiteilig ausgebildete, kinematische Rotorblätter 1 wechseln jeweils an einem zur Strömung F ausrichtbaren Durchmesser mit Wendepunkten P,P' der Umlaufbahn U die Orientierung der Saugseite (-) von der Innenseite zur Außenseite der Umlaufbahn U. Die resultierende Anströmung c setzt sich dabei aus der Strömungsgeschwindigkeit a und der Umlaufgeschwindigkeit des Rotormoduls 2 zusammen und bewirkt an dem asymmetrischen Flügelprofil 201 der Rotorblätter eine Auftriebskraft d, aus der eine tangentiale Antriebskraft f ableitbar ist. Das Rotormodul 2 wird durch insgesamt drei Querträger 22 ausgesteift, wobei die beiden oberen Querträger 22 ringförmig ausgebildet, während der untere Querträger 22 scheibenförmig ausgebildet ist. Ein Rotorblatt 1 der Drehflügelturbine 12 mit der Länge g ist in vier Längsabschnitte A1-A4 untergliedert, wobei jeder Längsabschnitt A1-A4 paarweise angeordnete in die Querträger 22 integrierte Aktuatoren 20 aufnimmt, die dem in Fig. 29 erläuterten Ausführungsbeispiel entsprechen.

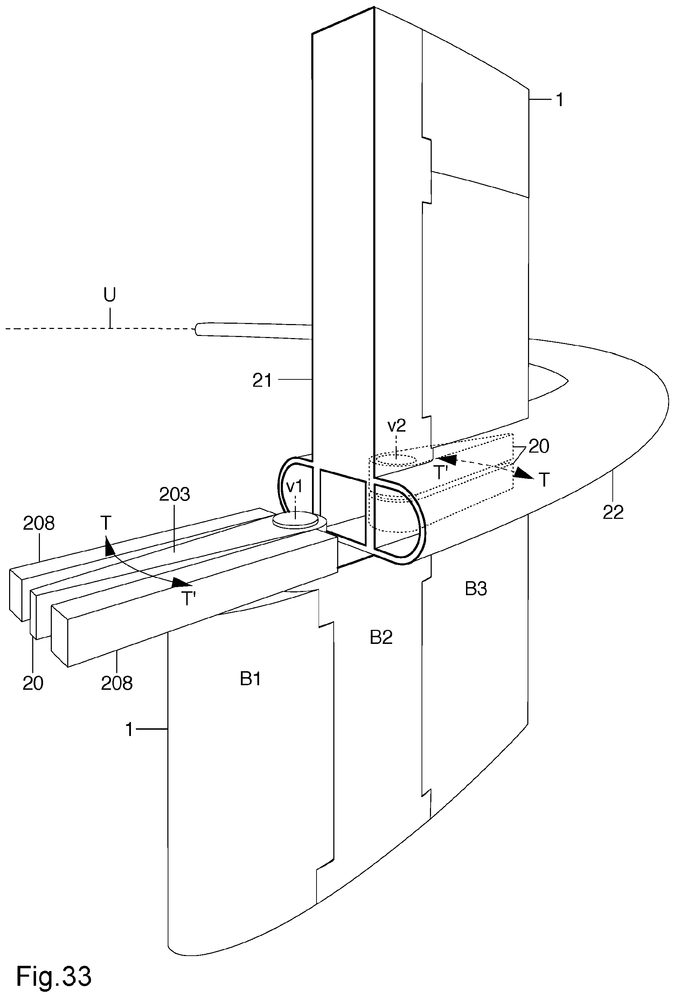

**Fig. 33** zeigt eine vertikale Ausschnittperspektive des Rotorblatts 1 nach Fig. 32 mit Darstellung eines in einem ringförmigen Querträger 22 integrierten Aktuators 20, der einen elektromagnetisch steuerbaren Stellhebel 203 aufweist. Schaltbare Erregerwicklungen 208 sind jeweils auf der Innen- und Außenseite der Umlaufbahn U in den als Hohlprofil ausgebildeten ringförmigen Querträger 22 integriert und gegenüber den beweglichen Blattsegmenten B1,B3 wasserdicht abgeschottet. Diese Form des elektromagnetisch betätigten Aktuators 20 eignet sich insbesondere für Wasserturbinen.

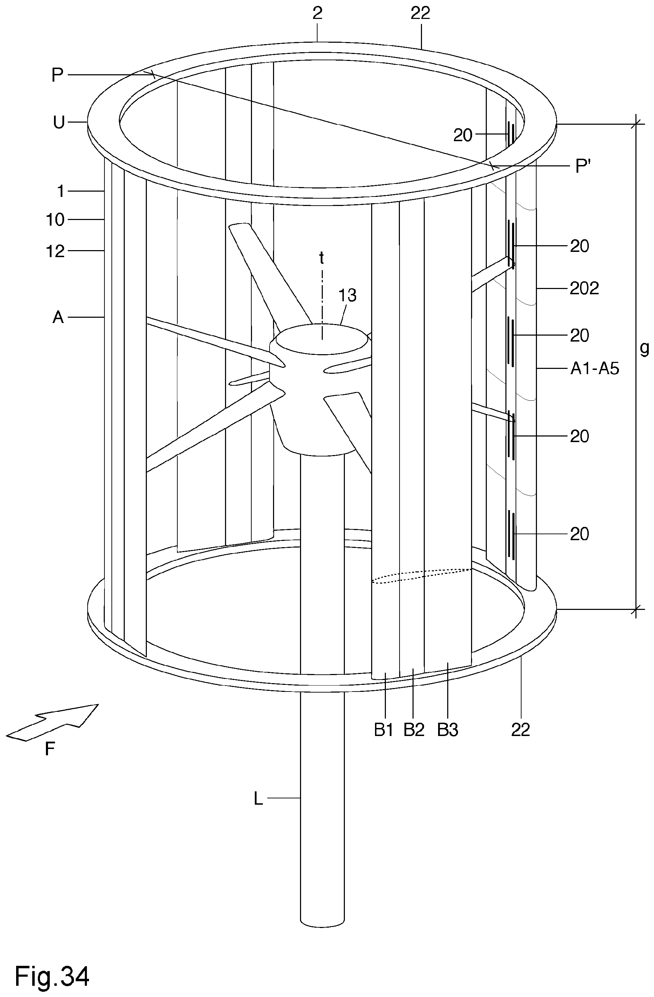

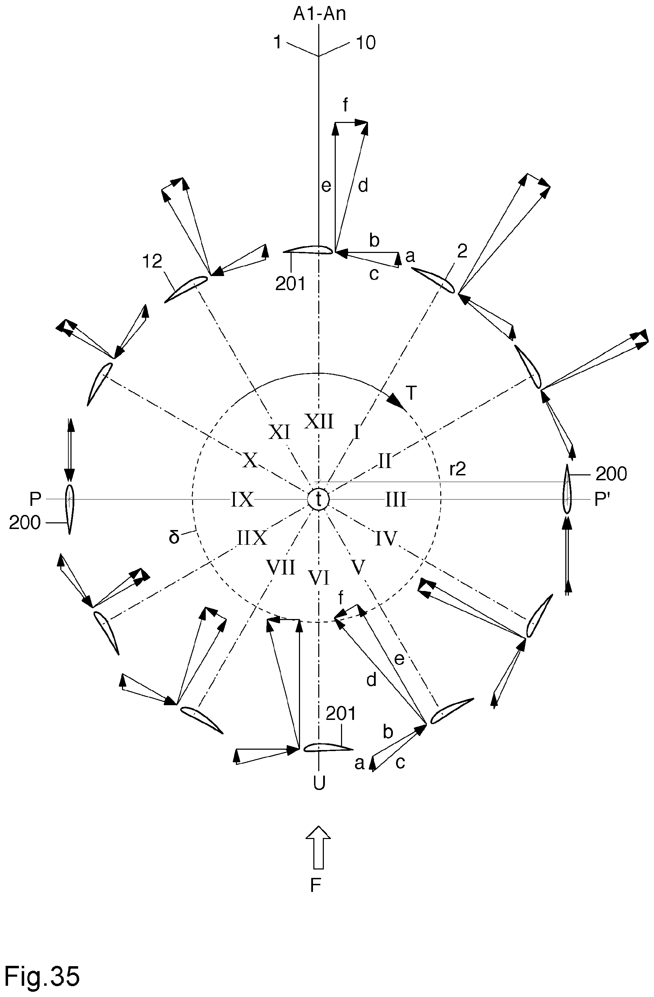

**Fig. 34** zeigt eine Drehflügelturbine 12, die als eine Windturbine mit vertikaler Rotationsachse t ausgebildet ist, bei der vier Rotorblätter 1 um eine vertikale Rotorachse t rotieren und mit zwei ringförmigen Querträgern 22 untereinander und mit acht radialen Querträgern 22 am Kopf des von einem Mast gebildeten Tragwerks L mit einem koaxial und konzentrisch zu der Rotationsachse t angeordneten Motorgenerator 13 verbunden sind. Die Rotorblätter 1 bestehen jeweils aus einem vorderen Blattsegment B1, einem mittleren Blattsegment B2 und einem hinteren Blattsegment B3. Die mittleren Blattsegmente B2 sind als Längsträger 21 der Rotorblätter 1 ausgebildet und an beiden Enden mit den ringförmigen Querträgern 22 biegesteif verbunden, sodass ein in sich biege-, schub- und torsionssteifes Rotormodul 2 gebildet wird. Fünf Längsabschnitte A1-A5 des Rotorblatts 1 bilden eine Flügelkette 202 mit der Länge g. Jeder Längsabschnitt A1-A5 nimmt mindestens zwei Aktuatoren 20, entsprechend den in Fig. 9-11 beschriebenen Ausführungsbeispielen auf. Die Saugseiten (-) der Rotorblätter 1 wechseln an einem mit einem Verstellbereich δ von 360 Grad in Richtung der Strömung F ausrichtbaren Durchmesser mit den Wendepunkten P,P' jeweils die Orientierung von der Innenseite im luvseitigen Umlauf zu der Außenseite im leeseitigen Umlauf. Die dabei aerodynamisch hervorgerufenen Kräfte sowie unterschiedliche Betriebsstellungen der Rotorblätter 1 gehen aus Fig. 35-37 hervor.

**Fig. 35** zeigt zwölf unterschiedliche Umlaufpositionen I-XII des variablen asymmetrischen Flügelprofils 201 der in Fig. 31-34 dargestellten Drehflügelturbinen 12 auf der durch den Radius r2 definierten kreisförmigen Umlaufbahn U. Bezogen auf die Richtung der Strömung F ist die Saugseite (-) des variablen asymmetrischen Flügelprofils 201 im luvseitigen Umlauf zur Innenseite der Umlaufbahn U und im leeseitigen Umlauf zur Außenseite der Umlaufbahn U ausgerichtet, sodass das variable Flügelprofil 201 im Fall der in Fig. 30 dargestellten Windturbine als Clark-YM-15-Profil bei Windstärken 3-6 eine durch Pfeile in Drehrichtung T gekennzeichnete tangentiale Antriebskraft f bewirkt. An der Umlaufposition III wechselt die Saugseite (-) des variablen Flügelprofils 20 von der Außenseite auf die Innenseite der Umlaufban U, während an der Umlaufposition IX die Saugseite (-) des variablen Flügelprofils 201 von der Innenseite auf die Außenseite der Umlaufban U wechselt und dabei jeweils in einer Übergangsstellung ein symmetrisches Flügelprofil 200 aufweist. Im luv- und leeseitigen Umlauf bewirkt deshalb die resultierende Anströmung c als Vektorsumme aus der Strömungsgeschwindigkeit a und der Umlaufgeschwindigkeit b des Rotormoduls 2 eine in Drehrichtung T geneigte Auftriebskraft d, die bei dem asymmetrischen Flügelprofil 201 etwa um ein Drittel größer ist als bei dem in Fig. 32 betrachteten symmetrischen Flügelprofil 200. Daraus folgt ein wesentlich verbesserter Wirkungsgrad der Drehflügelturbine 12, die als Wind- oder Wasserturbine ausgebildet werden kann, gegenüber einem herkömmlichen Darrieus-Rotor.

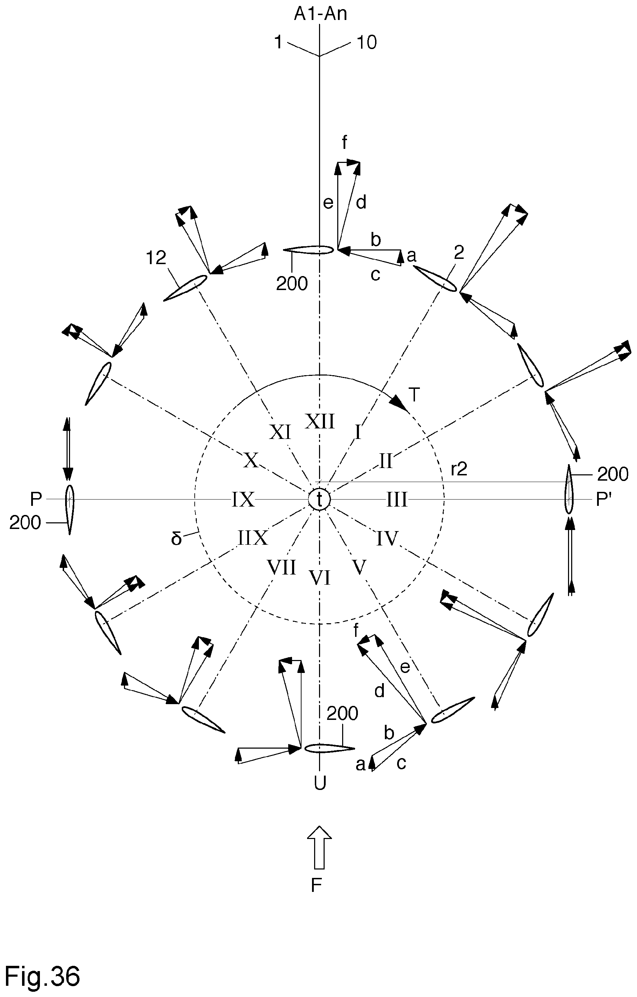

**Fig. 36** zeigt zwölf unterschiedliche Umlaufpositionen I-XII des variablen asymmetrischen Flügelprofils 201 der Rotorblätter 1 für die in Fig. 27-30 dargestellten Drehflügelturbinen 12 mit einem symmetrischen Flügelprofil 200. Für die in Fig. 30 beschriebene Windturbine ist diese einheitliche Rotorblattstellung für die Windstärken 6-9 nach der Beaufort-Skala vorgesehen, um eine um ein Drittel reduzierte Auftriebskraft d für den Betrieb der Windturbine bei Sturm zu nutzen. Im Vergleich zu den in Fig. 31 dargestellten Flügelstellungen der Rotorblätter 1 bewirkt das variable Flügelprofils 201 als symmetrisches Flügelprofil 200 eine geringere Auftriebskraft d und eine daraus resultierende reduzierte tangentiale Antriebskraft f. Die als Wind- oder Wasserturbine ausbildbare Drehflügelturbine 12 hat deshalb geringeres Kippmoment an der Basis.

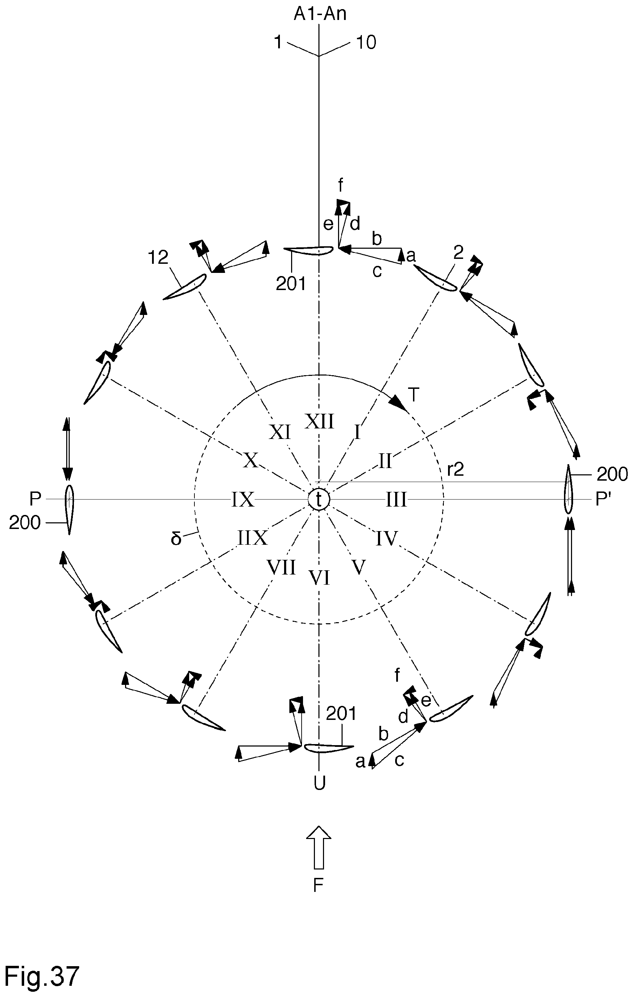

**Fig. 37** zeigt zwölf unterschiedliche Umlaufpositionen I-XII des variablen asymmetrischen Flügelprofils 201 der Rotorblätter 1 für die in Fig. 27-30 dargestellten Drehflügelturbinen 12. Das variable asymmetrische Flügelprofil 201 der in Fig. 30 dargestellten Windturbine zeigt hier gegenüber der in Fig. 31 beschriebenen Drehflügelkinematik 10 eine inverse Stellung des variablen asymmetrischen Flügelprofils 201 der Rotorblätter 1. Bezogen auf die Richtung der Strömung F ist die Saugseite (-) des asymmetrischen Flügelprofils 201 in Form eines Clark-YM-15-Profils im luvseitigen Umlauf zur Außenseite der Umlaufbahn U und im leeseitigen Umlauf zur Innenseite der Umlaufbahn U orientiert, sodass das variable Flügelprofil 201 mit Ausnahme der Umlaufpositionen IX und III bei extremen Windstärken 9-12 nach der Beaufort-Skala an den Umlauf-Positionen V-VIII und X-I eine reduzierte tangentiale Antriebskraft f bewirkt, der auf den Umlauf-Positionen III,IV und IX ein entgegen der Drehrichtung T wirkender tangentialer Widerstand entgegen steht. Da die tangentiale Antriebskraft f jedoch überwiegt, dreht sich die Windturbine auch bei Orkan und selbst bei einem Hurrikane entsprechend der Saffir-Simpson-Hurrikanskala und wandelt einen Teil der kinetischen Energie des Sturms in eine Drehbewegung um, was gegenüber einem Stillstand der Drehflügelturbine 12 einen Vorteil bedeutet.

Naturgemäß sind im Rahmen der vorliegenden Erfindungen vielfältige Abwandlungen und Modifikationen möglich.

## Patentansprüche

1. Vorrichtung (11,12), welche als Drehflügelfahrzeug (11) ausgebildet ist, welche Vorrichtung (11,12) ein Rotormodul (2) mit einem Motorgenerator (13), mit Rotorblättern (1) und mit einer Drehflügelkinematik (10) für die mit dem Motorgenerator verbundenen Rotorblätter (1) aufweist, welches Rotormodul (2) dazu ausgebildet ist, eine gleichsinnige oder gegensinnige Rotation der Rotorblätter (1) auf einer Umlaufbahn (U) um eine Rotationsachse (t) zu ermöglichen, welche Rotorblätter (1) jeweils in eine Mehrzahl von Längsabschnitten (A1-An) für die Aufnahme von jeweils mindestens einem in einen Längsträger (21) oder Querträger (22) des Rotorblatts (1) integrierten Aktuator (20) untergliedert sind und ein variables, asymmetrisches Flügelprofil (201) aufweisen, das in einem Umlauf des Rotorblatts (1) an einem innerhalb eines Verstellbereichs (δ) frei orientierbaren Durchmesser der Umlaufbahn (U) mit Wendepunkten (P,P') in mindestens einem Längsabschnitt (A1-An) des Rotorblatts (1) mit einer Länge (g) derart verstellbar ist, dass die Saugseite (-) und die Druckseite (+) des asymmetrischen Flügelprofils (201) mittels der Drehflügelkinematik (10) an den Wendepunkten (P,P') von der Außenseite zu der Innenseite der Umlaufbahn (U) wechselt, oder umgekehrt, und das variable, asymmetrische Flügelprofil (201) des Rotorblatts (1) in einer Übergangsstellung temporär ein mit seiner Profilsehne (p) tangential zu der Umlaufbahn (U) ausgerichtetes symmetrisches Flügelprofil (200) aufweist,
wobei die Vorrichtung (11,12) derart ausgebildet ist, dass der Durchmesser mit den Wendepunkten (P,P') in dem mindestens einen Längsabschnitt (A1-An) der Rotorblätter (1) mit der Länge (g) quer zu der Fahrtrichtung (D) ausrichtbar ist, sodass die Saugseite (-) des asymmetrischen Flügelprofils (201) in beiden Hälften der Umlaufbahn (U) in Fahrtrichtung (D) orientiert ist und aus der an dem asymmetrischen Flügelprofil (201) erzeugten Auftriebskraft (d) eine in Fahrtrichtung (D) wirkende Schubkraft (e) resultiert.

2. Vorrichtung (11,12) nach Anspruch 1,
bei welcher der Motorgenerator (13) des Rotormoduls (2) einen Stator und einen Läufer hat und als eine induktions- oder als eine permanent erregte Synchronmaschine ausgebildet ist und eine Welle für ein Rotorblatt (1) oder zwei Wellen und ein Getriebe für zwei koaxial und konzentrisch zueinander angeordnete und mit gegensinniger Drehrichtung (T,T') rotierende Rotorblätter (1) mit den Radien (r2,r3) aufweist, wobei der Motorgenerator (13) dazu ausgebildet ist, bei Schubumkehr dann von dem Motorbetrieb in den Generatorbetrieb zu wechseln, wenn die Saugseiten (-) des asymmetrischen Flügelprofils (201) entgegen der Fahrtrichtung (D) ausgerichtet sind, wobei das Drehflügelfahrzeug (11) im Sinkflug oder im freien Fall mit einer Schubkraft (f) abgebremst wird.

3. Vorrichtung (11,12) nach Anspruch 1 oder 2,
bei welcher in einem Umlauf des Rotorblatts (1) das variable asymmetrische Flügelprofil (201) des Rotorblatts (1) jeweils an dem Durchmesser mit den Wendepunkten (P,P') temporär ein symmetrisches Flügelprofil (200) mit einer tangential zu der Umlaufbahn (U) des Rotormoduls (2) ausgerichteten Profilsehne (p) aufweist
bei der das Rotorblatt (1)
- entweder ein vorderes als Längsträger (21) des Rotorblatts (1) ausgebildetes Blattsegment (B1) aufweist, an welches vordere Blattsegment (B1) ein hinteres Blattsegment (B3) an einer hinteren Drehachse (v2) angelenkt ist, wobei das Rotorblatt (1) durch Ein- oder Ausdrehen des hinteren Blattsegments (B3) jeweils mit gegensinniger Drehrichtung (T,T') um bis zu 6 Grad im luv- und leeseitigen Umlauf ein asymmetrisches Flügelprofil (201) aufweist, bei dem die Profilsehne (p) in beiden Hälften der durch den Durchmesser mit den Wendepunkten (P,P') geteilten Umlaufbahn (U) einen positiven Anstellwinkel (α) von bis zu 3,5 Grad gegenüber einer Tangente an der Umlaufbahn (U) aufweist
- oder ein mittleres, als Längsträger (21) ausgebildetes Blattsegment (B2) aufweist, an welches ein vorderes, um eine vordere Drehachse (v1) drehbares Blattsegment (B1) mit der Nase angelenkt ist, und an welches mittlere Blattsegment (B2) ein hinteres, um eine hintere Drehachse (v2) drehbares Blattsegment (B3) mit der Hinterkante angelenkt ist, wobei das Rotorblatt (1) im luv- und leeseitigen Umlauf ein asymmetrisches Flügelprofil (201) aufweist, dessen Profilsehne (p) mit einem positiven Anstellwinkel (α) von bis zu 2 Grad gegenüber einer Tangente an der Umlaufbahn (U) geneigt ist.

4. Vorrichtung (11,12) nach einem der vorhergehenden Ansprüche,
bei der das Rotorblatt (1) entweder gerade oder bügelförmig oder bogenförmig oder schlaufenförmig ausgebildet ist und in eine Mehrzahl von Längsabschnitten (A1-An) derart untergliedert ist, dass ein gerades Rotorblatt (1) eine gerade Flügelkette (202) und ein bügel- oder bogen- oder schlaufenförmig ausgebildetes Rotorblatt (1) eine polygonzugförmige Flügelkette (202) mit jeweils unterschiedlich geneigten Drehachsen (v1,v2) in den geraden Längsabschnitten (A1-An) des Polygonzugs der Flügelkette (202) aufweist, wobei die Aktuatoren (20) für die drehbaren Blattsegmente (B1,B3) in die Längsträger (21) oder in die Querträger (22) der Rotorblätter (1) integriert sind und ein Aktuator (20) für den Längsträger (21) bevorzugt als ein pneumatischer Muskel (204) oder als ein schaltbarer Elektromagnet mit einer Erregerwicklung (208) ausgebildet ist und ein Aktuator (20) für einen ring- oder scheibenförmig ausgebildeten Querträger (22) bevorzugt einen an den Drehachsen (v1,v2) angreifenden elektromagnetisch betätigten Stellhebel (203) aufweist, sodass jeder einzelne Längsabschnitt (A1-An) der Flügelkette (202) individuell steuerbar ist.

5. Vorrichtung (11,12) nach einem der vorhergehenden Ansprüche,
bei der die Aktuatoren (20) des Rotorblatts (1) einschließlich der Energiespeicher und Stellmotoren vollständig in interne Hohlräume der Längsträger (21) der Rotorblätter (1) integriert sind, wobei die Aktuatoren (20) zylinderförmige Schlitten (207) betätigen, die an ihren Innenseiten an koaxial und konzentrisch zu den Drehachsen (v1,v2) angeordneten hohlen Scharnierbolzen (205) linear geführt sind und an ihren Außenseiten in Gewindeabschnitte der vorderen und der hinteren Blattsegmente (B1,B3) eingreifen, und wobei die Aktuatoren (20) mit einer elektromagnetisch oder hydraulisch oder pneumatisch oder mechanisch angetriebenen linearen Translationsbewegung des Schlittens (207) das Ein- und Ausdrehen der beweglichen Blattsegmente (B1,B3) gegenüber dem in sich starren Längsträger (21) bewirken.

6. Vorrichtung (11,12) nach Anspruch 5,
bei der der Schlitten (207) des Rotorblatts (1)
- entweder durch einen koaxial und konzentrisch zu mindestens einer der Drehachsen (v1,v2) angeordneten pneumatischen Muskel (204) oder durch mehrere parallel zu den Drehachsen (v1,v2) angeordnete pneumatische Muskeln (204) hin und her bewegbar ist,
- oder bei dem der Schlitten (207) von einem als Linearmotor ausgebildeten Aktuator (20) bewegbar ist, wobei der Scharnierbolzen (205) in dem betreffenden Längsabschnitt (A1-An) des Längsträgers (21) eine Mehrzahl bezüglich der Drehachsen (v1,v2) radial angeordneter Erregerwicklungen (208) trägt, die zusammen mit Permanentmagneten (209) des Schlittens (207) den dreiphasigen Linearmotor bilden, der für eine exakte Steuerung der Blattsegmente (B1,B3) und des Verstellbereichs (δ) ausgebildet ist,
- oder bei dem der Schlitten (207) durch einen von einem schaltbaren Elektromagnet gebildeten Aktuator (20) bewegbar ist, wobei der Scharnierbolzen (205) eine koaxial und konzentrisch zu den Drehachsen (v1,v2) angeordnete Erregerwicklung (208) für die Induktion einer Eisenhülse des Schlittens (207) aufweist, wobei sich ein von dem Scharnierbolzen (205) gebildeter Medienkanal zwischen beiden Enden des Rotorblatts (1) erstreckt, und wobei bevorzugt der Schlitten (207) in Hohlräumen eines als Längsträger (21) ausgebildeten Blattsegments (B1) des Rotorblatts (1) angeordnet sind.

7. Vorrichtung (11,12) nach einem der vorhergehenden Ansprüche,
welche als Drehflügelfahrzeug (11) mit einer Längsachse, einer Querachse und einer Hochachse (x,y,z) ausgebildet ist, welches Drehflügelfahrzeug (11) als Luftfahrzeug oder als Wasserfahrzeug ausgebildet ist, wobei das mindestens eine Rotormodul (2) um koaxial und konzentrisch oder um parallel zu jeweils einer der Achsen (x,y,z) angeordnete Rotationsachsen (t) rotiert, wobei die Drehflügelkinematik (10) des Rotormoduls (2) in dem Längsabschnitt der Rotorblätter (1) mit der Länge (g) ausgebildet ist und von einem Piloten oder mit einer Fernsteuerung steuerbar ist, welches Drehflügelfahrzeug (11)
- im Falle der Ausbildung als Luftfahrzeug als ein Hubschrauber, als ein senkrecht startendes Flugtaxi, als ein flug- und straßenverkehrstaugliches Fahrzeug, oder als ein Flugzeug mit mindestens einer Tragfläche ausgebildet ist, und
- im Falle der Ausbildung als Wasserfahrzeug als ein Schlepp- und Bugsierschiff oder als ein Fracht- oder Passagierschiff oder als ein U-Boot ausgebildet ist.

8. Vorrichtung (11,12) nach Anspruch 7,
welche als Hubschrauber mit einer konzentrisch und koaxial zu der Hochachse (z) angeordneten Rotationsachse (t) ausgebildet ist, wobei die Rotorblätter (1) bügelförmig ausgebildet sind und eine polygonzugförmige Flügelkette (202) bilden, die der Höhe (h) nach in einen oberen, einen mittleren und einen unteren Längsabschnitt (A1-A3) unterteilt ist, wobei die Durchmesser mit den Wendepunkten (P,P') in den oberen und unteren Längsabschnitten (A1,A3) der Rotormodule (2) längs zur Fahrtrichtung (D) ausgerichtet werden und die Anstellwinkel (α) der asymmetrischen Flügelprofile (201) derart gesteuert werden, dass die Auftriebskräfte (d) in der linken und in der rechten Hälfte der Umlaufbahnen (U) des Rotormoduls (2) im Flugbetrieb des Hubschraubers gleich groß sind, und wobei in dem mittleren Längsabschnitt (A2) mit der Länge (g) der Verstellbereich (δ) der Drehflügelkinematik (10) für den Durchmesser mit den Wendepunkten (P,P') 360 Grad beträgt, sodass die Saugseiten (-) der asymmetrischen Flügelprofile (201) in jede beliebige Fahrtrichtung (D) ausrichtbar sind und die Rotorblätter (1) in den mittleren Längsabschnitten (A2) eine in die jeweilige Fahrtrichtung (D) gerichtete Schubkraft (e) erzeugen.

9. Vorrichtung (11,12) nach Anspruch 7 oder 8,
welche als flug- und straßenverkehrstaugliches Fahrzeug ausgebildet ist, wobei jeweils zwei mit gegensinniger Drehrichtung (T,T') rotierende Rotorblätter (1) ein vorderes und ein hinteres Rotormodul (2) derart bilden, dass jeweils mindestens vier bügelförmig ausgebildete Rotorblätter (1) der beiden Rotormodule (2) um eine parallel zu der Querachse (y) angeordnete Rotationsachse (t) rotieren und eine polygonzugförmige Flügelkette (202) bilden, die im Fahrbetrieb des flug- und straßenverkehrstauglichen Fahrzeugs in die Front- und Heckpartie des Fahrzeugs eingeklappt ist und das Fahrzeug als ein Pkw mit vier Rädern und mit vier Teleskopstützen (116) ausgebildet ist, die das Fahrzeug in der Startphase des Flugbetriebs anheben, sodass die ausgeklappten Rotormodule (2) frei rotierbar sind und das Fahrzeug abhebt, die Teleskopstützen (116) eingezogen werden und die Rotormodule (2) den Flugbetrieb des Fahrzeugs derart steuern, dass für den Geradeausflug in dem mittleren Längsabschnitt (A2) der bügelförmigen Rotorblätter (1) der Verstellbereich (δ) für die Erzeugung der Auftriebskraft (d) und einer in Fahrtrichtung (D) wirkenden Schubkraft (e) genutzt wird und die seitlichen Längsabschnitte (A1,A3) der bügelförmigen Rotorblätter (1) für die Steuerung und Stabilisierung des Fahrzeugs um die Längs-, Quer- und Hochachse (x,y,z) vorgesehen sind, wobei das Fahrzeug bevorzugt bei einer Drehzahl von 800 Umdrehungen pro Minute abhebt.

10. Vorrichtung (11,12) nach einem der Ansprüche 7 bis 9, welche als ein Luftfahrzeug mit mindestens einer Tragfläche ausgebildet ist, welche Tragfläche ein Gehäuse (114) für das Rotormodul (2) bildet und eine Mehrzahl von Rotormodulen (2) in die mindestens eine Tragfläche eines Flugzeugs integriert ist, wobei die Tragfläche ein Strömungsleitwerk (S) mit einer in Fahrtrichtung (D) ausgerichteten Druckseite (+) als Eingang (IN) für eine Strömung (F) und eine zu einer Flügelhinterkante der Tragfläche orientierte Saugseite (-) als Ausgang (EX) für die Strömung (F) bildet, und die Rotationsachsen (t) der Rotormodule (2) innerhalb der Tragfläche quer zu der Fahrtrichtung (D) ausgerichtet sind, wobei ein Rotormodul (2) jeweils mindestens vier Rotorblätter (1) aufweist, die jeweils paarweise mit gegensinniger Drehrichtung (T,T') rotieren und einen Senkrechtstart und einen Geradeausflug des Flugzeugs dadurch ermöglichen, dass der Durchmesser mit den Wendepunkten (P,P') in dem Längsabschnitt (A2) mit der Länge (g) im Umkreis von 360 Grad jeweils senkrecht zu der gewünschten Fahrtrichtung (D) ausrichtbar ist.

11. Vorrichtung (11,12) nach einem der Ansprüche 7 bis 10,
- welche als Wasserfahrzeug ausgebildet ist, bei dem ein mindestens teilweise flach ausgebildeter Schiffsboden (112) ein Strömungsleitwerk (S) für eine Mehrzahl von Rotormodulen (2) mit senkrecht zu dem Schiffsboden (114) ausgerichteten Rotationsachsen (t) bildet und die Rotormodule (2) mit gegensinniger Drehrichtung (T,T') rotieren und entweder in einer Reihe koaxial zu der Längsachse (x) des Wasserfahrzeugs oder paarweise parallel zu der Längsachse (x) des Wasserfahrzeugs angeordnet sind, sodass die einzelnen Rotorblätter (1) der Rotormodule (2) frei angeströmt werden, oder
- welche als Wasserfahrzeug ausgebildet ist, wobei das Rotormodul (2) einen Strömungsleitkörper (113) aufweist, der als ein innerhalb eines Umkreises mit dem Radius (r1) an der Rotationachse (t) des Rotormoduls (1) drehbar gelagerter Längsabschnitt eines Reuleaux-Dreiecks ausgebildet ist, wobei der Rumpf (110) des schnellfahrenden Wasserfahrzeugs an Bug und Heck jeweils einen steuer- und backbordseitigen Spantausfall (111) für die Anordnung der Rotormodule (2) mit den Strömungsleitkörpern (113) aufweist.

12. Vorrichtung (11,12) nach einem der Ansprüche 7 bis 11,
welche als seegängiges Wasserfahrzeug ausgebildet ist, bei dem das Strömungsleitwerk (S) ein Gehäuse (114) für das Rotormodul (2) aufweist und von einem mit seiner Druckseite (+) in Fahrtrichtung (D) ausgerichteten Flügelstumpf (118) gebildet wird, der einen Eingang (IN) und einen Ausgang (EX) für die Strömung (F) hat, wobei der Eingang (IN) an der Druckseite (+) des Flügelstumpfs (118) liegt und eine Mehrzahl kammartig ausgebildeter Strömungsleitkörper (113) aufweist, die dazu ausgebildet sind, die Rotorblätter (1) innerhalb des Gehäuses (114) mit einer zirkularen Strömung (F') entgegen der Drehrichtung (T) des Rotormoduls (2) anzuströmen und wobei der Ausgang (EX) für die Strömung (F) stromab an der Saugseite (-) des Gehäuses (114) liegt.

13. Vorrichtung (11,12) nach einem der Ansprüche 7 bis 12,
welche als seegängiges Wasserfahrzeug ausgebildet ist, das einen flachen Schiffsboden (112) zwischen tiefer reichenden, steuer- und backbordseitig angeordneten Auftriebskörpern für die Aufnahme von Wasserstofftanks (119) aufweist und die Auftriebskörper zusammen mit dem flachen Schiffsboden (112) einen sich vom Bug bis zum Heck erstreckenden Antriebskanal (115) für die Anordnung einer Mehrzahl von Rotormodulen (2) bilden, deren Gehäuse (114) jeweils einen Flügelstumpf (118) aufweisen und in dem Antriebskanal (115) in Fahrtrichtung (D) in Reihe hintereinander parallel zu der Längsachse (x) des Wasserfahrzeugs so angeordnet sind, dass das Gehäuse (114) eine in Fahrtrichtung (D) ausgerichtete Druckseite (+) mit einem oberen Eingang (IN) für die Strömung (F) und eine Saugseite (-) mit einem unteren Ausgang (EX) für die Strömung (F) hat, sodass ein den Motorgenerator (13) umgebender, parallel zu der vertikalen Rotationsachse (t) des Rotormoduls (2) angeordneter Ringkanal vertikal durchströmt wird und das Tragwerk (L) des Wasserfahrzeugs eine wasserdichte Hülle und ein tragendes Skelett aus in Längs- und Querrichtung angeordneten Fachwerkscheiben aufweist, die untereinander zu einem räumlichen Fachwerkträger und an Knotenpunkten innerhalb des Antriebskanals (115) mit den oberen Enden der Gehäuse (114) für die Rotormodule (2) verbunden sind, sodass die Belastungen des Rumpfs (110) an den Knotenpunkten des Tragwerks (L) von der Hülle auf den räumlichen Fachwerkträger übertragen werden.

14. Vorrichtung (11,12) nach einem der Ansprüche 7 bis 13, welches als Wasserfahrzeug ausgebildet ist, welches Wasserfahrzeug als U-Boot ausgebildet ist, dessen Rumpf am Heck mit einem Gehäuse (114) für die Aufnahme von zwei jeweils steuer- und backbordseitig parallel zu der Querachse (y) angeordneten Rotormodulen (2) verbunden ist, welches Gehäuse (14) ein Strömungsleitwerk (S) mit einer in Fahrtrichtung (D) ausgerichteten Druckseite (+) als Eingang (IN) für die Strömung (F) und eine zum Totwasser des U-Boots orientierte Sogseite (-) als Ausgang (EX) für die Strömung (F) aufweist, wobei ein Rotormodul (2) mindestens vier, jeweils paarweise mit gegensinniger Drehrichtung (T,T') rotierende Rotorblätter (1) aufweist die den Antrieb und die Steuerung für die Über- und Unterwasserfahrt des U-Boots bilden und das Tauchen oder Steigen des U-Boots derart steuern, dass der Durchmesser mit den Wendepunkten (P,P') im Umkreis von 360 Grad jeweils senkrecht zu der gewünschten Fahrtrichtung (D) ausrichtbar ist.

## Claims

1. A device (11, 12) which is configured as a rotary-wing vehicle (11), which device (11, 12) has a rotor module (2) with a motor generator (13), with rotor blades (1) and with rotary-wing kinematics (10) for the rotor blades (1) connected to the motor generator, which rotor module (2) is configured to enable same-direction or opposite-direction rotation of the rotor blades (1) on an orbit (U) about an axis of rotation (t), which rotor blades (1) are respectively subdivided into a plurality of longitudinal sections (A1-An) for receiving respectively at least one actuator (20) integrated in a longitudinal carrier (21) or transverse support (22) of the rotor blade (1) and have a variable, asymmetrical wing profile (201) which can be adjusted in one revolution of the rotor blade (1) at a freely orientable diameter of the orbit (U) within an adjustment range (δ) with turning points (P, P') in at least one longitudinal section (A1-An) of the rotor blade (1) with a length (g) in such a way that the suction side (-) and the pressure side (+) of the asymmetrical wing profile (201) changes from the outer to the inner surface of the orbit (U) by means of the rotary-wing kinematics (10) at the turning points (P, P'), or vice versa, and the variable, asymmetrical wing profile (201) of the rotor blade (1) temporarily has, in a transitional position, a symmetrical wing profile (200) with its chord line (p) oriented tangentially to the orbit (U), wherein the device (11, 12) is configured such that the diameter with the turning points (P, P') can be aligned, in the at least one longitudinal section (A1-An) of the rotor blades (1), with the length (g) transverse to the direction of travel (D) so that the suction side (-) of the asymmetrical wing profile (201) in both halves of the orbit (U) is oriented in the direction of travel (D) and a thrust force (e) acting in the direction of travel (D) results from the lift force (d) generated on the asymmetrical wing profile (201).

2. The device (11, 12) according to claim 1,
in which the motor generator (13) of the rotor module (2) has a stator and a rotor and is configured as an induction-excited or permanently excited synchronous machine and has one shaft for one rotor blade (1) or two shafts and one transmission for two rotor blades (1) arranged coaxially and concentrically to each other and rotating in opposite directions (T, T') with radii (r2, r3), wherein the motor generator (13) is configured to switch from motor operation to generator operation upon thrust reversal when the suction sides (-) of the asymmetrical wing profile (201) are oriented opposite the direction of travel (D), wherein the rotary wing vehicle (11) is braked with a thrust force (f') during descent or in free fall.

3. The device (11, 12) according to claim 1 or 2,
in which, in one revolution of the rotor blade (1), the variable asymmetrical wing profile (201) of the rotor blade (1) temporarily has a symmetrical wing profile (200) with a chord line (p) oriented tangentially to the orbit (U) of the rotor module (2) respectively at the diameter with the turning points (P, P'),
in which the rotor blade (1)
- either has a front blade segment (B1) configured as a longitudinal support (21) of the rotor blade (1), to which front blade segment (B1) a rear blade segment (B3) is hinged on a rear axis of rotation (v2), wherein the rotor blade (1) has an asymmetrical wing profile (201) by rotating in or rotating out the rear blade segment (B3) respectively in opposite directions of rotation (T, T') by up to 6 degrees on the windward and leeward sides, in which the chord line (p) in both halves of the orbit (U) divided by the diameter with the turning points (P, P') has a positive angle of attack (a) of up to 3.5 degrees relative to a tangent to the orbit (U)
- or has a middle blade segment (B2) configured as a longitudinal carrier (21), to which blade segment (B2) a front blade segment (B1) rotatable about a front axis of rotation (v1) is hinged with the leading edge, and to which middle blade segment (B2) a rear blade segment (B3) rotatable about a rear axis of rotation (v2) is hinged with the trailing edge, wherein the rotor blade (1) has an asymmetrical wing profile (201) in the windward and leeward orbits, the chord line (p) of which asymmetrical wing profile (201) is inclined at an angle of attack (α) of up to 2 degrees relative to a tangent to the orbit (U).

4. The device (11, 12) according to any of the preceding claims,
in which the rotor blade (1) is configured either straight or in the shape of a bow or arc or loop and is subdivided into a plurality of longitudinal sections (A1-An) in such a way that a straight rotor blade (1) has a straight blade chain (202) and a rotor blade (1) configured in the shape of a bow or arc or loop has a polygonal-link blade chain (202) with respectively differently inclined axes of rotation (v1, v2) in the straight longitudinal sections (A1-An) of the polygon-chain of the blade chain (202), wherein the actuators (20) for the rotatable blade segments (B1, B3) are integrated in the longitudinal supports (21) or in the cross supports (22) of the rotor blades (1) and an actuator (20) for the longitudinal carrier (21) is preferably configured as a pneumatic muscle (204) or as a switchable electromagnet with an exciter winding (208) and an actuator (20) for a cross carrier (22) configured in the shape of a ring or disk preferably has an electromagnetically actuated control lever (203) acting on the axes of rotation (v1, v2), so that each individual longitudinal section (A1-An) of the blade chain (202) can be controlled individually.

5. The device (11, 12) according to any of the preceding claims,
in which the actuators (20) of the rotor blade (1), including the energy storage devices and actuating motors, are completely integrated into internal cavities of the longitudinal carriers (21) of the rotor blades (1), wherein the actuators (20) actuate cylindrical sliders (207) which are guided linearly on their inner surfaces on hollow hinge pins (205) arranged coaxially and concentrically to the axes of rotation (v1, v2) and engage on their outer surfaces in threaded sections of the front and rear blade segments (B1, B3) and wherein the actuators (20) effect the rotating in and rotating out of the movable blade segments (B1, B3) relative to the inherently rigid longitudinal carrier (21) with an electromagnetically or hydraulically or pneumatically or mechanically driven linear translational movement of the slider (207).

6. The device (11, 12) according to claim 5,
in which the slider (207) of the rotor blade (1)
- can be moved back and forth either by a pneumatic muscle (204) arranged coaxially and concentrically to at least one of the axes of rotation (v1, v2) or by multiple pneumatic muscles (204) arranged parallel to the axes of rotation (v1, v2),
- or in which the slider (207) is movable by an actuator (20) configured as a linear motor, wherein the hinge pin (205) in the relevant longitudinal section (A1-An) of the longitudinal carrier (21) carries a plurality of excitation windings (208) arranged radially with respect to the axes of rotation (v1 ,v2), which excitation windings (208) together with permanent magnets (209) of the slider (207) form the three-phase linear motor, which is configured for precise control of the blade segments (B1, B3) and the adjustment range (δ),
- or in which the slider (207) is movable by an actuator (20) formed by a switchable electromagnet, wherein the hinge pin (205) has an excitation winding (208) arranged coaxially and concentrically to the axes of rotation (v1 ,v2) for the induction of an iron sleeve of the slider (207), wherein a media channel formed by the hinge pin (205) extends between both ends of the rotor blade (1), and wherein preferably the slider (207) is arranged in cavities of a blade segment (B1) of the rotor blade (1) configured as a longitudinal carrier (21).

7. The device (11, 12) according to any of the preceding claims,
which is configured as a rotary-wing vehicle (11) with a longitudinal axis, a transverse axis and a vertical axis (x, y, z), which rotary-wing vehicle (11) is configured as an aircraft or as a watercraft, wherein the at least one rotor module (2) rotates about axes of rotation (t) arranged coaxially and concentrically or about axes of rotation arranged parallel to respectively one of the axes (x,y,z), wherein the rotary wing kinematics (10) of the rotor module (2) is configured in the longitudinal section of the rotor blades (1) with the length (g) and can be controlled by a pilot or with a remote control,
which rotary-wing vehicle (11)
- in the case of being configured as an aircraft, is configured as a helicopter, as a vertical take-off air cab, as a vehicle suitable for air and road traffic, or as an aircraft with at least one lift-generating surface, and
- in the case of being configured as a watercraft, is configured as a tug and towing vessel or as a cargo or passenger ship or as a submarine.

8. The device (11, 12) according to claim 7,
which is configured as a helicopter with an axis of rotation (t) arranged concentrically and coaxially to the vertical axis (z), wherein the rotor blades (1) are configured in the shape of a bow and form a polygonal-link blade chain (202), which is subdivided in terms of height (h) into an upper, a middle and a lower longitudinal section (A1-A3), wherein, in the upper and lower longitudinal sections (A1, A3) of the rotor modules, the diameters with the turning points (P, P' (2) are oriented along the direction of travel (D) and the angles of attack (α) of the asymmetrical wing profiles (201) are controlled in such a way that the lift forces (d) in the left and right half of the orbits (U) of the rotor module (2) are of equal magnitude during flight operation of the helicopter, and wherein in the middle longitudinal section (A2) with the length (g), the adjustment range (δ) of the rotary wing kinematics (10) for the diameter with the turning points (P, P') is 360 degrees, so that the suction sides (-) of the asymmetrical wing profiles (201) can be aligned in any direction of travel (D) and the rotor blades (1) generate a thrust (e) directed in the respective direction of travel (D) in the middle longitudinal sections (A2).

9. The device (11, 12) according to claim 7 or 8,
which is configured as a vehicle suitable for air and road traffic, wherein respectively two rotor blades (1) rotating in opposite directions of rotation (T, T') form a front and a rear rotor module (2) in such a way that respectively at least four bow-shaped rotor blades (1) of the two rotor modules (2) rotate about an axis of rotation (t) arranged parallel to the transverse axis (y) and form a polygonal-link blade chain (202), which is folded into the front and rear of the vehicle during driving operation of the vehicle suitable for air and road traffic and wherein the vehicle is configured as a passenger car with four wheels and with four telescopic supports (116), which lift the vehicle during the take-off phase of flight operations, so that the unfolded rotor modules (2) can rotate freely and the vehicle takes off, the telescopic supports (116) are retracted and the rotor modules (2) control the flight operation of the vehicle in such a way that for straight flight the adjustment range (δ) in the middle longitudinal section (A2) of the bow-shaped rotor blades (1) is used to generate the lift force (d) and a thrust force (e) acting in the direction of travel (D), and the lateral longitudinal sections (A1, A3) of the bow-shaped rotor blades (1) are provided for controlling and stabilizing the vehicle about the longitudinal, transverse and vertical axes (x, y, z), wherein the vehicle preferably takes off at a rotational speed of 800 rpm.

10. The device (11, 12) according to any of claims 7 to 9, which is configured as an aircraft with at least one lift-generating surface, which lift-generating surface forms a housing (114) for the rotor module (2) and a plurality of rotor modules (2) is integrated into the at least one lift-generating surface of an aircraft, wherein the lift-generating surface forms a flow-guiding structure (S) with a pressure side (+) oriented in the direction of travel (D) as the inlet (IN) for a flow (F) and a suction side (-) oriented towards a trailing edge of the lift-generating surface as the outlet (EX) for the flow (F), and the axes of rotation (t) of the rotor modules (2) within the lift-generating surface are oriented transverse to the direction of travel (D), wherein a rotor module (2) has respectively at least four rotor blades (1) which respectively rotate in pairs with opposite directions of rotation (T, T') and enable a vertical take-off and a straight flight of the aircraft in that, in the longitudinal section (A2) with the length (g), the diameter with the turning points (P, P') can respectively be aligned perpendicular to the desired direction of travel (D) within a circumference of 360 degrees.

11. The device (11, 12) according to any one of claims 7 to 10,
- which is configured as a watercraft in which an at least partially flat hull bottom (112) forms a flow-guiding structure (S) for a plurality of rotor modules (2) with axes of rotation (t) oriented perpendicular to the hull bottom (114) and the rotor modules (2) rotate in opposite directions (T, T') and are arranged either in a row coaxial to the longitudinal axis (x) of the watercraft or in pairs parallel to the longitudinal axis (x) of the watercraft, so that the individual rotor blades (1) of the rotor modules (2) are exposed to a free flow, or
- which is configured as a watercraft, wherein the rotor module (2) has a flow-guiding structure (113) which is configured as a longitudinal section of a Reuleaux triangle rotatably mounted within a circumference with the radius (r1) on the axis of rotation (t) of the rotor module (1), wherein the fuselage (110) of the high-speed watercraft has, at the bow and stern, respectively one port- and starboard-side frame recess (111) for arranging the rotor modules (2) with the flow-guiding bodies (113).

12. The device (11, 12) according to any of claims 7 to 11,
which is configured as a seagoing watercraft, in which the flow-guiding structure (S) has a housing (114) for the rotor module (2) and is formed by a wing stub (118) which is oriented with its pressure side (+) in the direction of travel (D) and has an inlet (IN) and an outlet (EX) for the flow (F), wherein the inlet (IN) is located on the pressure side (+) of the wing stub (118) and has a plurality of comb-shaped flow-guiding structures (113) which are configured to direct a circular flow (F') onto the rotor blades (1) inside the housing (114) counter to the direction of rotation (T) of the rotor module (2) and wherein the outlet (EX) for the flow (F) is located downstream on the suction side (-) of the housing (114).

13. The device (12, 12) according to any one of claims 7 to 12,
which is configured as a seagoing watercraft which has a flat hull bottom (112) between lower-reaching buoyancy bodies arranged on the starboard and port sides for receiving hydrogen tanks (119), and the buoyancy bodies together with the flat hull bottom (112) form a drive channel (115) extending from the bow to the stern for arranging a plurality of rotor modules (2), the housings (114) of which respectively have a wing stub (118) and are arranged in the drive channel (115) in the direction of travel (D) in series one behind the other parallel to the longitudinal axis (x) of the watercraft such that the housing (114) has a pressure side (+) oriented in the direction of travel (D) with an upper inlet (IN) for the flow (F) and a suction side (-) with a lower outlet (EX) for the flow (F) so that an annular channel surrounding the motor generator (13) and arranged parallel to the vertical axis of rotation (t) of the rotor module (2) is flowed through vertically and the supporting structure (L) of the watercraft has a watertight shell and a load-bearing skeleton of truss plates arranged in the longitudinal and transverse directions, which are connected to each other to form a spatial truss girder and, at nodal points within the drive channel (115), to the upper ends of the housings (114) for the rotor modules (2), so that the loads on the fuselage (110) are transferred from the shell to the spatial truss girder at the nodal points of the supporting structure (L).

14. The device (11, 12) according to any of claims 7 to 13, which is configured as a watercraft, which watercraft is configured as a submarine, the fuselage of which is connected at the stern to a housing (114) for receiving two rotor modules (2) respectively arranged on the starboard and port side parallel to the transverse axis (y), which housing (14) has a flow-guiding structure (S) with a pressure side (+) oriented in the direction of travel (D) as an inlet (IN) for the flow (F) and a suction side (-) oriented toward the dead water of the submarine as an outlet (EX) for the flow (F), wherein a rotor module (2) has at least four rotor blades, respectively rotating in pairs with opposite directions of rotation (T, T'), which rotor blades form the drive and the control for the underwater and surface travel of the submarine and control the diving or surfacing of the submarine in such a way that the diameter with the turning points (P, P') can respectively be aligned perpendicular to the desired direction of travel (D) within a circumference of 360 degrees.

## Revendications

1. Dispositif (11, 12) conçu sous la forme d'un véhicule à voilure tournante (11), lequel dispositif (11, 12) présente un module de rotor (2) doté d'un moteur-générateur (13), de pales de rotor (1) et d'une cinématique à voilure tournante (10) pour les pales de rotor (1) reliées au moteur-générateur, lequel module de rotor (2) est conçu pour permettre une rotation allant dans le même sens ou en sens inverse des pales de rotor (1) sur une trajectoire de rotation (U) autour d'un axe de rotation (t), les pales de rotor (1) étant respectivement subdivisées en une pluralité de sections longitudinales (A1-An) pour la réception respectivement d'au moins un actionneur (20) intégré dans un longeron (21) ou une traverse (22) de la pale de rotor (1) et présentant un profil d'aile asymétrique (201) variable pouvant être réglé, lors d'une rotation de la pale de rotor (1), à un diamètre aux points d'inflexion (P, P') de la trajectoire de rotation (U), librement orientable à l'intérieur d'une zone de réglage (δ), dans au moins une section longitudinale (A1-An) de la pale de rotor (1) de longueur (g) de telle sorte que le côté aspiration (-) et le côté pression (+) du profil d'aile asymétrique (201) passe du côté extérieur au côté intérieur de la trajectoire de rotation (U) au moyen de la cinématique à voilure tournante (10) aux points d'inflexion (P, P'), ou inversement, et le profil d'aile asymétrique (201) variable de la pale de rotor (1) présente temporairement, dans une position de transition, un profil d'aile symétrique (200) dont la ligne de profil (p) est orientée tangentiellement à la trajectoire de rotation (U), ledit dispositif (11, 12) étant conçu de telle manière que le diamètre aux points d'inflexion (P, P') soit orientable dans la au moins une section longitudinale (A1-An) des pales de rotor (1) de longueur (g) transversalement à la direction de déplacement (D) de façon à ce que le côté aspiration (-) du profil d'aile asymétrique (201) soit orienté dans la direction de déplacement (D) dans les deux moitiés de la trajectoire de rotation (U) et qu'une force de poussée (e) agissant dans la direction de déplacement (D) résulte de la force de portance (d) générée sur le profil d'aile asymétrique (201).

2. Dispositif (11, 12) selon la revendication 1,
dans lequel le moteur-générateur (13) du module de rotor (2) possède un stator et un rotor et est réalisé sous la forme d'une machine synchrone à induction ou à excitation permanente et présente un arbre pour une pale de rotor (1) ou deux arbres et un engrenage pour deux pales de rotor (1) à rayons (r2, r3), disposées coaxialement et concentriquement l'une par rapport à l'autre et tournant en sens de rotation inverse (T, T'), le moteur-générateur (13) étant conçu pour passer du mode moteur au mode générateur lors de l'inversion de la poussée lorsque les côtés aspiration (-) du profil d'aile asymétrique (201) sont orientés dans le sens inverse de la direction de déplacement (D), le véhicule à voilure tournante (11) étant freiné par une force de poussée (f') en descente ou en chute libre.

3. Dispositif (11, 12) selon la revendication 1 ou 2,
dans lequel, lors d'une rotation de la pale de rotor (1), le profil de pale asymétrique (201) variable de la pale de rotor (1) présente temporairement, respectivement au niveau du diamètre aux points d'inflexion (P, P'), un profil de pale symétrique (200) dont la ligne de profil (p) est orientée tangentiellement à la trajectoire de rotation (U) du module de rotor (2) où la pale du rotor (1) présente
- soit un segment de pale avant (B1) réalisé sous la forme d'un longeron (21) de la pale de rotor (1), auquel (B1) est articulé un segment de pale arrière (B3) sur un axe de rotation arrière (v2), la pale de rotor (1) présentant un profil d'aile asymétrique (201) par vrillage ou dévrillage du segment de pale arrière (B3), respectivement en sens de rotation inverse (T, T'), pouvant aller jusqu'à 6 degrés dans la rotation côté vent et côté sous le vent, la ligne de profil (p) présentant dans les deux moitiés de la trajectoire de rotation (U) divisée par le diamètre aux points d'inflexion (P, P') un angle d'attaque positif (α) allant jusqu'à 3,5 degrés par rapport à une tangente à la trajectoire de rotation (U),
- soit un segment de pale central (B2) réalisé sous la forme d'un longeron (21), auquel est articulé un segment de pale avant (B1) avec le nez, pouvant tourner autour d'un axe de rotation avant (v1), et un segment de pale central (B2) auquel est articulé un segment de pale arrière (B3) avec le bord arrière, pouvant tourner autour d'un axe de rotation arrière (v2), la pale de rotor (1) présentant dans la rotation côté vente et côté sous le vent un profil de pale asymétrique (201) dont la ligne de profil (p) est inclinée avec un angle d'attaque positif (α) allant jusqu'à 2 degrés par rapport à une tangente à la trajectoire de rotation (U).

4. Dispositif (11, 12) selon l'une des revendications précédentes,
dans lequel la pale de rotor (1) est soit droite, soit en forme d'étrier, d'arc ou de boucle et est subdivisée en une pluralité de sections longitudinales (A1-An) de telle sorte qu'une pale de rotor (1) droite présente une chaîne de pales (202) droite et qu'une pale de rotor (1) réalisée en forme d'étrier ou d'arc ou de boucle présente une chaîne de pales (202) en forme de polygone avec des axes de rotation (v1, v2) respectivement inclinés différemment dans les sections longitudinales (A1-An) droites du polygone de la chaîne de pales (202), les actionneurs (20) pour les segments de pales (B1, B3) rotatifs étant intégrés dans les longerons (21) ou dans les traverses (22) des pales de rotor (1) et un actionneur (20) pour le longeron (21) étant réalisé de préférence sous la forme d'un muscle pneumatique (204) ou d'un électroaimant commutable avec un enroulement d'excitation (208) et un actionneur (20) pour une traverse (22) réalisée en forme d'anneau ou de disque présentant de préférence un levier de réglage actionné électromagnétiquement (203) connecté aux axes de rotation (v1 , v2), de telle manière que chaque section longitudinale (A1-An) de la chaîne de pales (202) puisse être commandée individuellement.

5. Dispositif (11, 12) selon l'une des revendications précédentes,
les actionneurs (20) de la pale de rotor (1), y compris les accumulateurs d'énergie et les servomoteurs, étant entièrement intégrés dans des espaces creux internes des longerons (21) des pales de rotor (1), les actionneurs (20) actionnant des coulisseaux (207) cylindriques qui sont guidés linéairement par leurs côtés intérieurs sur des axes de charnière creux (205) disposés coaxialement et concentriquement aux axes de rotation (v1, v2) et s'engagent par leurs côtés extérieurs dans des sections filetées des segments de pale avant et arrière (B1, B3), et les actionneurs (20) provoquant, par un mouvement de translation linéaire du coulisseau (207) entraîné par voie électromagnétique ou hydraulique ou pneumatique ou mécanique, l'enfoncement et le déploiement des segments de pale mobiles (B1, B3) par rapport au longeron (21) rigide en soi.

6. Dispositif (11, 12) selon la revendication 5,
dans lequel le coulisseau (207) de la pale de rotor (1)
- peut être déplacé en va-et-vient par un muscle pneumatique (204) disposé coaxialement et concentriquement à au moins un des axes de rotation (v1, v2) ou par plusieurs muscles pneumatiques (204) disposés parallèlement aux axes de rotation (v1, v2),
- ou le coulisseau (207) peut être déplacé par un actionneur (20) réalisé sous la forme d'un moteur linéaire, l'axe de charnière (205) portant, dans la section longitudinale (A1-An) concernée du longeron (21), une pluralité d'enroulements d'excitation (208) disposés radialement aux axes de rotation (v1, v2), qui forment, conjointement avec des aimants permanents (209) du coulisseau (207), le moteur linéaire triphasé qui est conçu pour une commande précise des segments de pale (B1, B3) et de la zone de réglage (δ),
- ou le coulisseau (207) peut être déplacé par un actionneur (20) formé par un électroaimant commutable, l'axe de charnière (205) présentant un enroulement d'excitation (208) disposé coaxialement et concentriquement aux axes de rotation (v1, v2) pour l'induction d'une douille en fer du coulisseau (207), un canal de fluide formé par l'axe de charnière (205) s'étendant entre les deux extrémités de la pale de rotor (1), et le coulisseau (207) étant de préférence disposé dans des espaces creux d'un segment de pale (B1) de la pale de rotor (1) réalisé sous la forme d'un longeron (21).

7. Dispositif (11, 12) selon l'une des revendications précédentes, conçu sous la forme d'un véhicule à voilure tournante (11) avec un axe longitudinal, un axe transversal et un axe vertical (x, y, z), lequel véhicule à voilure tournante (11) est conçu sous la forme d'un aéronef ou d'un navire, le au moins un module de rotor (2) tournant autour d'axes de rotation (t) disposés coaxialement et concentriquement ou parallèlement à chacun des axes (x, y, z), la cinématique à voilure tournante (10) du module de rotor (2) étant réalisée dans la section longitudinale des pales de rotor (1) de longueur (g) et pouvant être commandée par un pilote ou par une télécommande,
lequel véhicule à voilure tournante (11) est réalisé
- dans le cas d'un aéronef, sous la forme d'un hélicoptère, d'un taxi volant à décollage vertical, d'un véhicule apte au vol et à la circulation routière ou d'un avion avec au moins une surface portante, et
- dans le cas d'un navire, sous la forme d'un navire remorqueur-pousseur ou d'un navire cargo ou d'un navire à passagers ou d'un sous-marin.

8. Dispositif (11, 12) selon la revendication 7,
conçu sous la forme d'un hélicoptère avec un axe de rotation (t) disposé concentriquement et coaxialement à l'axe vertical (z), les pales de rotor (1) étant réalisées en forme d'étrier et formant une chaîne de pales (202) en forme de polygone qui est divisée, en termes de hauteur (h), en une section longitudinale supérieure, une section longitudinale médiane et une section longitudinale inférieure (A1-A3), les diamètres aux points d'inflexion (P, P') dans les sections longitudinales supérieure et inférieure (A1, A3) des modules de rotor (2) étant orientés le long de la direction de déplacement (D) et les angles d'attaque (α) des profils d'aile asymétriques (201) étant commandés de telle manière que les forces de portance (d) dans la moitié gauche et dans la moitié droite des trajectoires de rotation (U) du module de rotor (2) soient égales en mode vol de l'hélicoptère, et, dans la section longitudinale centrale (A2) de longueur (g), la zone de réglage (δ) de la cinématique à voilure tournante (10) pour le diamètre aux points d'inflexion (P, P') étant de 360 degrés, de telle manière que les côtés aspiration (-) des profils de pales asymétriques (201) puissent être orientés dans n'importe quelle direction de déplacement (D) et que les pales de rotor (1) génèrent dans les sections longitudinales centrales (A2) une force de poussée (e) orientée dans la direction de déplacement (D) correspondante.

9. Dispositif (11, 12) selon la revendication 7 ou 8,
conçu sous la forme d'un véhicule apte à voler et à circuler sur la route, deux pales de rotor (1) tournant en sens de rotation inverse (T, T') formant respectivement un module de rotor avant et un module de rotor arrière (2) de telle sorte que respectivement au moins quatre pales de rotor (1) en forme d'étrier des deux modules de rotor (2) tournent autour d'un axe de rotation (t) disposé parallèlement à l'axe transversal (y) et forment une chaîne d'ailes (202) en forme de polygone, repliée dans la partie avant et arrière du véhicule en mode ferry du véhicule apte à voler et à circuler sur la route et que le véhicule est réalisé sous la forme d'une voiture particulière à quatre roues et avec quatre supports télescopiques (116), qui soulèvent le véhicule au lancement de l'opération de vol, de telle manière que les modules de rotor (2) déployés puissent tourner librement, le véhicule décolle, les supports télescopiques (116) soient rétractés et les modules de rotor (2) commandent l'opération de vol du véhicule de telle manière que pour le vol en ligne droite, dans la section longitudinale centrale (A2) des pales de rotor (1) en forme d'étrier, la zone de réglage (δ) est utilisée pour générer la force de portance (d) et une force de poussée (e) agissant dans la direction de déplacement (D), et que les sections longitudinales latérales (A1, A3) des pales de rotor (1) en forme d'étrier sont prévues pour la commande et la stabilisation du véhicule autour de l'axe longitudinal, transversal et vertical (x, y, z), le véhicule décollant de préférence à une vitesse de rotation de 800 tours par minute.

10. Dispositif (11, 12) selon l'une des revendications 7 à 9, conçu sous la forme d'un aéronef avec au moins une surface portante, la surface portante formant un boîtier (114) pour le module de rotor (2) et une pluralité de modules de rotor (2) étant intégrée dans la au moins une surface portante d'un aéronef, la surface portante formant un empennage d'écoulement (S) avec un côté pression (+) orienté dans la direction de déplacement (D) comme entrée (IN) pour un flux (F) et un côté aspiration (-) orienté vers un bord de fuite d'aile de la surface portante comme sortie (EX) pour le flux (F), et les axes de rotation (t) des modules de rotor (2) étant orientés à l'intérieur de la surface portante transversalement à la direction de déplacement (D), un module de rotor (2) présentant respectivement au moins quatre pales de rotor (1) qui tournent par paires en sens de rotation inverse (T, T') et permettent un décollage vertical et un vol en ligne droite de l'avion en ce que le diamètre aux points d'inflexion (P, P') dans la section longitudinale (A2) de longueur (g) peut être orienté dans un rayon de 360 degrés respectivement perpendiculairement à la direction de déplacement (D) souhaitée.

11. Dispositif (11, 12) selon l'une des revendications 7 à 10,
- conçu sous la forme d'un navire, un fond de navire (112) au moins partiellement plat formant empennage d'écoulement (S) pour une pluralité de modules de rotor (2) avec des axes de rotation (t) orientés perpendiculairement au fond de navire (114) et les modules de rotor (2) tournant en sens de rotation inverse (T, T') et étant disposés soit en une rangée coaxiale à l'axe longitudinal (x) du navire, soit par paires parallèles à l'axe longitudinal (x) du navire, de sorte que les différentes pales de rotor (1) des modules de rotor (2) sont librement exposées au flux, ou
- conçu sous la forme d'un navire, le module de rotor (2) présentant un corps de guidage du flux (113) qui est réalisé sous la forme d'une section longitudinale d'un triangle de Reuleaux monté rotativement à l'intérieur d'un cercle de rayon (r1) sur l'axe de rotation (t) du module de rotor (1), la coque (110) du navire à grande vitesse présentant à la proue et à la poupe respectivement une saillie de serrage (111) côté tribord et côté bâbord pour la disposition des modules de rotor (2) avec les corps de guidage du flux (113).

12. Dispositif (11, 12) selon l'une des revendications 7 à 11,
conçu sous la forme d'un navire de mer, l'empennage d'écoulement (S) présentant un boîtier (114) pour le module de rotor (2) et étant formé par un moignon d'aile (118) orienté par son côté pression (+) dans la direction de déplacement (D), possédant une entrée (IN) et une sortie (EX) pour le flux (F), l'entrée (IN) étant située sur le côté pression (+) du moignon d'aile (118) et présentant une pluralité de corps de guidage de flux (113) réalisés en forme de peigne, conçus pour diriger un flux circulaire (F') vers les pales de rotor (1) à l'intérieur du boîtier (114) en sens inverse du sens de rotation (T) du module de rotor (2), et la sortie (EX) pour le flux (F) étant située en aval sur le côté aspiration (-) du boîtier (114).

13. Dispositif (11, 12) selon l'une des revendications 7 à 12,
conçu sous la forme d'un navire de mer qui présente un fond de navire (112) plat entre des corps de flottaison s'étendant plus bas, disposés à tribord et à bâbord pour le logement de réservoirs d'hydrogène (119), les corps de flottaison formant avec le fond de navire (112) plat un canal d'entraînement (115) s'étendant de la proue à la poupe pour l'agencement d'une pluralité de modules de rotor (2), dont les boîtiers (114) présentent chacun un moignon d'aile (118) et sont disposés dans le canal d'entraînement (115) dans la direction de déplacement (D) en série les uns derrière les autres parallèlement à l'axe longitudinal (x) du navire de sorte que le boîtier (114) a un côté pression (+) avec une entrée (IN) supérieure pour le flux (F), orienté dans la direction de déplacement (D), et un côté aspiration (-) avec une sortie (EX) inférieure pour le flux (F), de sorte qu'un canal circulaire entourant le moteur-générateur (13), parallèle à l'axe de rotation vertical (t) du module de rotor (2) est traversé verticalement et que la structure porteuse (L) du navire présente une enveloppe étanche à l'eau et un squelette porteur constitué de disques de treillis disposés dans le sens longitudinal et transversal, qui sont reliés entre eux pour former une poutre spatiale en treillis et sont reliés, aux points nodaux à l'intérieur du canal d'entraînement (115), aux extrémités supérieures des boîtiers (114) pour les modules de rotor (2), de sorte que les charges sur la coque (110) aux points nodaux de la structure porteuse (L) sont transmises de l'enveloppe à la poutre en treillis spatiale.

14. Dispositif (11, 12) selon l'une des revendications 7 à 13, conçu sous la forme d'un navire, lequel est conçu sous la forme d'un sous-marin dont la coque est reliée à la poupe à un boîtier (114) destiné à recevoir deux modules de rotor (2) disposés respectivement à tribord et à bâbord parallèlement à l'axe transversal (y), lequel boîtier (14) présente une empennage d'écoulement (S) avec un côté pression (+) orienté dans la direction de déplacement (D) comme entrée (IN) pour le flux (F) et un côté aspiration (-) orienté vers l'eau morte du sous-marin comme sortie (EX) pour le flux (F), un module de rotor (2) présentant au moins quatre pales de rotor (1) tournant par paires en sens de rotation inverse (T, T'), qui forment l'entraînement et la commande pour la navigation en surface et sous-marine du sous-marin et commandent la plongée ou la montée du sous-marin de telle sorte que le diamètre aux points d'inflexion (P, P') peut être orienté dans un rayon de 360 degrés respectivement perpendiculairement à la direction de déplacement (D) souhaitée.
